# EUROPEAN PATENT APPLICATION

(11) **EP 4 797 244 A1**
(43) Date of publication of application: **26.08.2026**
(21) Application number: 24879549.4
(22) Date of filing: 30.09.2024
(51) Int. Cl.: G09B 19/00, G06Q 50/08, G09B 9/00

(54) **WORK ASSISTANCE SYSTEM AND WORK ASSISTANCE METHOD**

(30) Priority: 18.10.2023 JP 2023179458; 18.10.2023 JP 2023179459; 18.10.2023 JP 2023179522; 18.10.2023 JP 2023179523
(71) Applicant: Hiroshima University, Higashi-Hiroshima-shi Hiroshima 739-8511 (JP); KOBELCO CONSTRUCTION MACHINERY CO., LTD., Hiroshima-shi, Hiroshima 731-5161 (JP)
(72) Inventor: KINOSHITA, Takuya, Higashi-Hiroshima-shi, Hiroshima 739-8511 (JP); RAIMA, Chiaki, Kawagoe-shi, Saitama 350-1198 (JP); KOZUI, Masatoshi, Hiroshima-shi, Hiroshima 731-5161 (JP); SAKAMOTO, Fumiya, Hiroshima-shi, Hiroshima 731-5161 (JP); KOIWAI, Kazushige, Hiroshima-shi, Hiroshima 731-5161 (JP)
(74) Representative: TBK
(86) International application number: PCT/JP2024/035026
(87) International publication number: WO 2025/084123

(57) **Abstract**

A work assistance system (300) includes a controller (50). The controller (50) uses psychological state information that is information correlated with a psychological state of an operator (MP) at at least one of the time of operating an operation target (100) and the time of operating a simulator (200) of the operation target (100) to determine content of work assistance for improving the psychological state of the operator (MP) at the time of operation.

## Description

### Technical Field

The present disclosure relates to a work assistance system and a work assistance method.

### Background Art

Patent Literature 1 discloses a management assistance system including a calculation unit that compares information stored in a first storage section and information stored in a second storage section for a specific worker to determine an internal physiological state of a specific worker and determines alert content, and an output unit that generates an alert to the worker.

Patent Literature 2 discloses a driver impatience detection device for detecting a state in which driver is being impatient. The impatience detection device includes an impatience information detection device and an impatience state detection device. The impatience information detection device detects a time interval from a timing at which a vehicle starts, a timing at which a vehicle stops, and a timing at which a device of a vehicle is operated to a timing at which a next device is operated. The impatience state detection device detects a state in which a driver is being impatient based on a time interval detected by the impatience information detection device.

Patent Literature 3 discloses a technique for the purpose of accumulating information for an operator or the like to determine a situation in which an unstable state of an excavator may occur.

Patent Literature 4 discloses a work order placement and ordering system for allowing a work ordering party to easily select an operator having a skill level suitable for work ordered by the work ordering party.

Improving a psychological state of an operator in work using an operation target such as a construction machine has advantages such as improvement in work efficiency and reduction in burden on the operator. Therefore, it is desired to develop a technique capable of improving a psychological state of an operator in work using a construction machine.

### Citation List

### Patent Literature

Patent Literature 1: JP 2020-149452 A
Patent Literature 2: JP 2020-185872 A
Patent Literature 3: WO 2019/182042 A
Patent Literature 4: JP 2019-191734 A

### Summary of Invention

An object of the present disclosure is to provide a work assistance system and a work assistance method capable of improving a psychological state of an operator in work using an operation target.

The present disclosure includes a work assistance system according to first to fourth aspects. The work assistance system including a configuration common to the first to fourth aspects includes a controller, and the controller uses psychological state information that is information correlated with a psychological state of an operator at at least one of a time of operating an operation target and a time of operating a simulator of the operation target to determine content of work assistance for improving the psychological state of the operator at the time of operation.

A work assistance method having a configuration common to the first to fourth aspects includes determining, by a controller, content of work assistance for improving a psychological state of an operator at a time of operation by using psychological state information that is information correlated with the psychological state of the operator at at least one of a time of operating an operation target and a time of operating a simulator of the operation target.

The work assistance system including a configuration common to the first and second aspects includes a controller, and the controller calculates a psychological state quantitative value obtained by quantifying a psychological state of an operator at a time of operating an operation target based on information correlated with the psychological state, and determines, by using the psychological state quantitative value, content of work assistance for improving the psychological state of the operator at the time of operating the operation target.

The work assistance method including a configuration common to the first and second aspects includes calculating, by a controller, a psychological state quantitative value obtained by quantifying a psychological state of an operator at a time of operating an operation target based on information correlated with the psychological state, and determining, by the controller and by using the psychological state quantitative value, content of work assistance for improving the psychological state of the operator at the time of operating the operation target.

The work assistance system including a configuration common to the third aspect and the fourth aspect includes a controller, and the controller acquires data related to a psychological state of an operator at at least one of a time of operating an operation target and a time of operating a simulator of the operation target based on information correlated with the psychological state, and determines content of improvement control that is control as work assistance for improving the psychological state of the operator at the time of operation by using the data related to the psychological state and a change in an incidental situation at at least one of the time of operating the operation target and the time of operating the simulator.

The work assistance method including a configuration common to the third and fourth aspects includes acquiring, by a controller, data related to a psychological state of an operator at at least one of a time of operating an operation target and a time of operating a simulator of the operation target based on information correlated with the psychological state, and determining, by the controller, content of improvement control that is control as work assistance for improving the psychological state of the operator at the time of operation by using the data related to the psychological state and a change in an incidental situation at at least the time of operation of the operation target and the time of operation of the simulator.

The work assistance system according to the first aspect includes a controller, and the controller calculates a psychological state quantitative value obtained by quantifying a psychological state of an operator at a time of operating an operation target based on information correlated with the psychological state, sets a target psychological state which is a target of a psychological state at the time of operation of the operation target, and determines content of work assistance by using the psychological state quantitative value and the target psychological state.

The work assistance method according to the first aspect includes calculating, by a controller, a psychological state quantitative value obtained by quantifying a psychological state of an operator at a time of operating an operation target based on information correlated with the psychological state, setting, by the controller, a target psychological state that is a target of a psychological state at the time of operation of the operation target, and determining, by the controller, content of work assistance by using the psychological state quantitative value and the target psychological state.

The work assistance system according to the second aspect includes a controller, and the controller calculates a psychological state quantitative value obtained by quantifying a psychological state of an operator at a time of operating an operation target based on information correlated with the psychological state, calculates productivity of work at the time of operation of the operation target, and determines content of work assistance by using the psychological state quantitative value and the productivity.

The work assistance method according to the second aspect includes calculating, by a controller, a psychological state quantitative value obtained by quantifying a psychological state of an operator at a time of operating an operation target based on information correlated with the psychological state, calculating, by the controller, productivity of work at the time of operation of the operation target, and determining, by the controller, content of work assistance by using the psychological state quantitative value and the productivity.

The work assistance system according to the third aspect includes a controller, and the controller acquires information correlated with a psychological state of an operator at at least one of a time of operating an operation target and a time of operating a simulator of the operation target, performs control such that change promotion information, which is information for promoting a change in the psychological state, is transmitted to the operator at at least one of the time of operating the operation target and the time of operating the simulator, and determines content of improvement information, which is information as work assistance for improving a psychological state at the time of operation, by using data related to a change in the psychological state before and after transmission of the change promotion information.

The work assistance method according to the third aspect includes acquiring, by a controller, information correlated with a psychological state of an operator at at least one of a time of operating an operation target and a time of operating a simulator of the operation target, performing, by the controller, control such that change promotion information, which is information for promoting a change in the psychological state, is transmitted to the operator at at least one of the time of operating the operation target and the time of operating the simulator, and determining, by the controller, content of improvement information, which is information as work assistance for improving a psychological state at the time of operation, by using data related to a change in the psychological state before and after transmission of the change promotion information.

The work assistance system according to the fourth aspect includes a controller, and the controller acquires data related to a psychological state of an operator at at least one of a time of operating an operation target and a time of operating a simulator of the operation target based on information correlated with the psychological state, acquires data related to an incidental situation at at least one of the time of operating the operation target and the time of operating the simulator, and determines content of work assistance for improving a proficiency level related to an operation of the operator by using the data related to the psychological state and the data related to the incidental situation.

The work assistance method according to the fourth aspect includes acquiring, by a controller, data related to a psychological state of an operator at at least one of a time of operating an operation target and a time of operating a simulator of the operation target based on information correlated with the psychological state, acquiring, by the controller, data related to an incidental situation at at least one of the time of operation of the operation target and the time of operation of the simulator, and determining, by the controller, content of work assistance for improving a proficiency level related to an operation of the operator by using the data related to the psychological state and the data related to the incidental situation.

According to the present disclosure, the work assistance system and the work assistance method capable of improving a psychological state of an operator in work using an operation target are provided.

### Brief Description of Drawings

FIG. 1 is a block diagram illustrating a work assistance system including a configuration common to first to fourth aspects.
FIG. 2 is a diagram for describing an outline of the work assistance system.
FIG. 3 is a flowchart illustrating an example of arithmetic processing performed by a controller of the work assistance system illustrated in FIG. 1.
FIG. 4 is a block diagram illustrating the work assistance system including a configuration common to the first and second aspects.
FIG. 5 is a flowchart illustrating an example of arithmetic processing performed by the controller of the work assistance system illustrated in FIG. 4.
FIG. 6 is a block diagram illustrating the work assistance system including a configuration common to the third and fourth aspects.
FIG. 7 is a flowchart illustrating an example of arithmetic processing performed by the controller of the work assistance system illustrated in FIG. 6.
FIG. 8 is a block diagram illustrating the work assistance system according to the first aspect.
FIG. 9 is a flowchart illustrating an example of arithmetic processing performed by the controller of the work assistance system according to the first aspect.
FIG. 10 is a diagram illustrating an example of a psychological state acquisition device.
FIG. 11 is a diagram illustrating another example of the psychological state acquisition device.
FIG. 12 is a graph showing a relationship between autonomic balance and degree of stress such as impatience.
FIG. 13 is a diagram for explaining a target psychological state.
FIG. 14 is a diagram for explaining a target psychological state.
FIG. 15 is a diagram for explaining a target psychological state.
FIG. 16 is a graph illustrating an example of a relationship between degree of impatience of an operator at a time of operating a construction machine and work efficiency such as productivity.
FIG. 17 is a graph illustrating an example of a relationship between degree of impatience of an operator at a time of operating a construction machine and a comfort level of the operator.
FIG. 18 is a diagram for explaining a method of setting a target psychological state.
FIG. 19 is a diagram for explaining a characteristic of data stored for each of a plurality of operators.
FIG. 20 is a flowchart illustrating another example of arithmetic processing performed by the controller of the work assistance system according to the first aspect.
FIG. 21 is a flowchart illustrating still another example of arithmetic processing performed by the controller of the work assistance system according to the first aspect.
FIG. 22 is a flowchart illustrating still another example of arithmetic processing performed by the controller of the work assistance system according to the first aspect.
FIG. 23 is a block diagram illustrating the work assistance system according to the second aspect.
FIG. 24 is a flowchart illustrating an example of arithmetic processing performed by the controller of the work assistance system according to the second aspect.
FIG. 25 is a diagram illustrating the work assistance system according to a modification example of the second aspect.
FIG. 26 is a diagram illustrating an example of a map in which content of various types of work assistance is associated with degree of impatience and productivity.
FIG. 27 is a diagram illustrating an example of a map used by the controller to set a difficulty level of work.
FIG. 28 is a diagram illustrating two maps in which content of various types of work assistance is associated with degree of impatience and productivity.
FIG. 29 is a diagram illustrating an example of a map used to set a work skill of an operator.
FIG. 30 is a diagram illustrating another example of the map used to set a work skill of an operator.
FIG. 31 is a diagram illustrating an example of a map that can be used by the controller to determine whether or not to automatically notify a work-related person of content of work assistance by using degree of impatience and productivity of an operator at a time of operating a construction machine.
FIG. 32 is a block diagram illustrating the work assistance system according to the third aspect.
FIG. 33 is a flowchart illustrating an example of arithmetic processing performed by the controller of the work assistance system according to the third aspect.
FIG. 34 is a diagram illustrating the work assistance system according to a modification example of the third aspect.
FIG. 35 is a diagram illustrating an example of psychological state time series data, and the psychological state time series data includes data related to a change in a psychological state before and after transmission of change promotion information.
FIG. 36 is a diagram in which a plurality of impatience change amounts are organized as a table.
FIG. 37 is a diagram illustrating an example of time series data of a change in a psychological state when an operator actually operates a construction machine.
FIG. 38 is a diagram for explaining an additional condition for determining content of improvement information.
FIG. 39 is a block diagram illustrating the work assistance system according to the fourth aspect.
FIG. 40 is a flowchart illustrating an example of arithmetic processing performed by the controller of the work assistance system according to the fourth aspect.
FIG. 41 is a diagram illustrating the work assistance system according to a modification example of the fourth aspect.
FIG. 42 is a diagram illustrating an example of time series data at a time of operating a simulator.
FIG. 43 is a diagram in which some of top maximum values among impatience quantitative values in a time zone in which each of a plurality of types of work is performed are organized as a table.
FIG. 44 is a diagram illustrating an example of training content by a simulator.
FIG. 45 is a diagram illustrating another example of training content by the simulator.
FIG. 46 is a diagram illustrating an effect of training in the simulator.
FIG. 47 is a graph comparing time series data of an impatience quantitative value of an operator with time series data of an impatience quantitative value of an operator (expert) other than the operator, and comparing a lever operation of the operator with a lever operation of the expert.

### Description of Embodiments

A work assistance system and a work assistance method will be described with reference to the drawings.

### [Configuration common to first to fourth aspects]

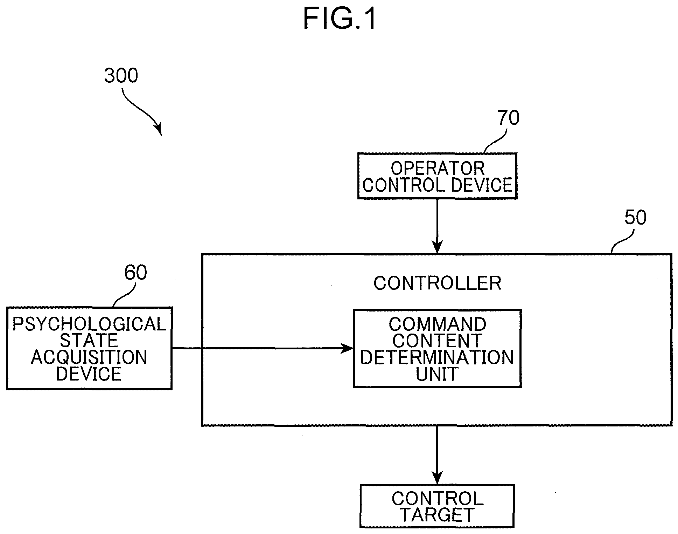

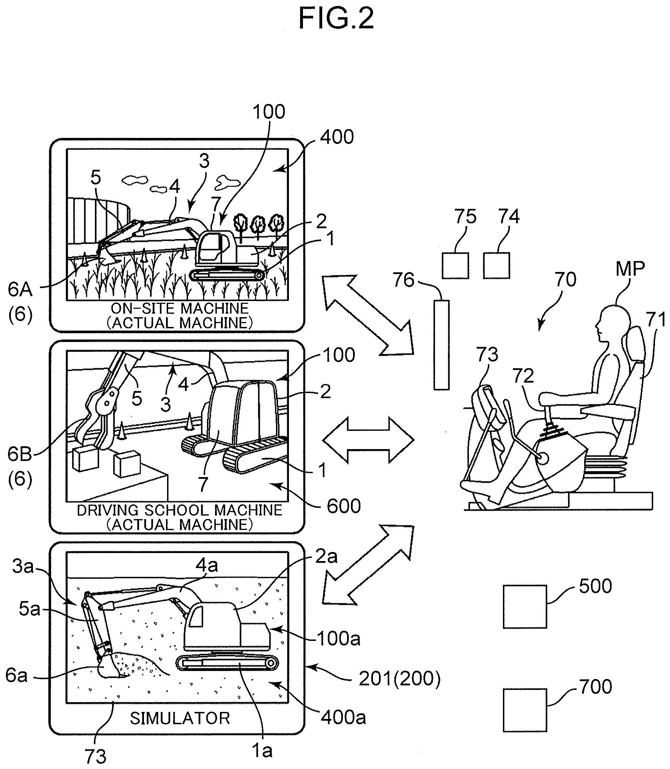

FIG. 1 is a block diagram illustrating a configuration of a system including a work assistance system 300. FIG. 2 is a diagram for describing an outline of the work assistance system 300. The work assistance system 300 illustrated in FIGS. 1 and 2 has a configuration common to a work assistance system 300A according to a first aspect, a work assistance system 300B according to a second aspect, the work assistance system 300C according to a third aspect, and a work assistance system 300D according to a fourth aspect. Before describing details of each of the work assistance systems 300A, 300B, 300C, and 300D, the work assistance system 300 having a configuration common to these work assistance systems will be described.

The work assistance system 300 is a system for improving a psychological state of an operator MP in work using a construction machine 100. The construction machine 100 is an example of an operation target in the present disclosure. As illustrated in FIG. 1, the work assistance system 300 includes a controller 50. The controller 50 includes a computer including an arithmetic processing device and a memory, and controls operation of the work assistance system 300. The same applies to a work assistance system according to each aspect described later.

The controller 50 includes a command content determination unit that determines content of a psychological state improvement command (content of work assistance) by using psychological state information. The command content determination unit is implemented by the arithmetic processing device executing a control program stored in the memory in the controller 50.

The psychological state information is information correlated with a psychological state of the operator MP at at least one of the time of operating the construction machine 100 (operation target) and the time of operating a simulator 200 of a construction machine (operation target). That is, the psychological state information may be information correlated with a psychological state of the operator MP at the time of operating the construction machine 100. The psychological state information may be information correlated with a psychological state of the operator MP at the time of operating the simulator 200. The psychological state information may be information including information correlated with a psychological state of the operator MP at the time of operating the construction machine 100 and information correlated with a psychological state of the operator MP at the time of operating the simulator 200.

The psychological state may be impatience (degree of impatience) of the operator MP at the time of operating the construction machine 100 or at the time of operating the simulator 200. The psychological state may be a fatigue feeling (degree of fatigue feeling) of the operator MP at the time of operating the construction machine 100 or at the time of operating the simulator 200. The psychological state may be the concentration (degree of concentration) of the operator MP at the time of operating the construction machine 100 or at the time of operating the simulator 200. The psychological state may be irritation (degree of irritation) or restlessness (degree of restlessness) of the operator MP at the time of operating the construction machine 100 or at the time of operating the simulator 200. The psychological state may be stress (degree of stress) of the operator MP at the time of operating the construction machine 100 or at the time of operating the simulator 200.

The psychological state improvement command is a command for improving a psychological state of the operator MP at the time of operation. The psychological state improvement command is used, for example, to improve a psychological state when the operator MP operates the construction machine 100. Improvement of a psychological state of the operator MP at the time of operating the construction machine 100 contributes to reduction in burden on the operator MP at the time of operating the construction machine 100. Further, improvement of a psychological state of the operator MP at the time of operating the construction machine 100 may contribute to improvement of work efficiency by the construction machine 100. Further, the psychological state improvement command may be used to improve a psychological state when the operator MP operates the simulator 200.

Content of the psychological state improvement command is not particularly limited as long as the content can improve a psychological state of the operator MP at the time of operation (at the time of operating the construction machine 100 or at the time of operating the simulator 200). Content of the psychological state improvement command may be set according to, for example, a specific situation such as a type of target work that is work engaged by the operator MP, a type of the construction machine 100 operated by the operator MP, and a psychological state of the operator MP. Content of the psychological state improvement command may be, for example, content of work assistance as in the first aspect and the second aspect to be described later, content of improvement control as in the third aspect and the fourth aspect to be described later, or content other than these.

The controller 50 inputs a psychological state improvement command to a control target. The control target performs an operation of improving a psychological state of the operator MP in work using the construction machine 100 based on the psychological state improvement command.

The control target may be, for example, at least one of a first display device 73 and a second display device 76 that can be visually recognized by the operator MP at the time of operating the construction machine 100. The control target may be, for example, an external display device 700 that can be visually recognized by a work-related person such as the operator MP, a work manager, or an assistant. The control target may be included in, for example, an information device usable by the work-related person such as a work manager. The information device may be, for example, a personal computer, a portable information terminal, or another information device. The control target may be a notification device described later. The control target may be, for example, an acoustic device 74 or a lighting device 75.

The controller 50 may be a part of the construction machine 100, may be a part of the simulator 200, or may be a part of a management device 500 such as a server, for example. Further, the controller 50 may be a component different from the construction machine 100, the simulator 200, and the management device 500. The work assistance system 300 may include at least one of the construction machine 100, the simulator 200, and the management device 500, and may not include the construction machine 100, the simulator 200, and the management device 500.

The construction machine 100 (actual machine) is, for example, a crawler excavator, and includes a lower travelling body 1, an upper slewing body 2 slewably supported by the lower travelling body 1, and a work device 3 supported by the upper slewing body 2 as illustrated in FIG. 2. The work device 3 includes a boom 4 supported by the upper slewing body 2 so as to be raised and lowered, an arm 5 rotatably supported by the boom 4, and a tip attachment 6 rotatably supported by the arm 5. The tip attachment 6 may be a bucket 6A used for an excavation operation of excavating an excavation object such as earth and sand, a gripping device 6B used for a gripping operation of gripping a gripping object, or another tip attachment such as a crushing machine. The upper slewing body 2 includes a slewing frame slewably supported by the lower travelling body 1 and a cab 7 supported by the slewing frame.

The construction machine 100 includes an operator control device 70 arranged in the cab 7. The operator control device 70 includes a seat 71 on which the operator MP sits, an operator input device 72 that receives various operations performed by the operator MP to operate the construction machine 100, and a notification device. The operator input device 72 includes at least one of a control lever and a control pedal. The notification device notifies various types of information for the operator MP. The notification device may include the first display device 73 that displays various types of information for the operator MP. The first display device 73 may be configured to be able to receive an input (operation input) from the operator MP. The first display device 73 is arranged at a position (for example, a position in front of the seat 71 or a position on the side of the seat 71) where the operator MP can visually recognize at the time of operating the construction machine 100. The notification device may include at least one of the acoustic device 74 and the lighting device 75. The acoustic device 74 notifies various types of information by sound for the operator MP. The lighting device 75 notifies various types of information by light for the operator MP.

Control of the construction machine 100 may be that the operator MP enters the construction machine 100 (actual machine) to control the construction machine 100, or may be that the operator MP controls the construction machine 100 (actual machine) by using a remote control device arranged at a place away from the construction machine 100. In this case, the remote control device is another example of the operator control device 70. The remote control device may include the second display device 76 as the notification device. For example, the second display device 76 may be configured to display an image of a work site which is an image captured by a camera mounted on the construction machine 100. The image of a work site may include an image of a work site spreading in front of the upper slewing body 2. For example, the second display device 76 may include a display such as a liquid crystal display, and may be arranged in front of the seat 71 so that the operator MP sitting on seat 71 may visually recognize the second display device 76. Further, control of the construction machine 100 may be control when work is performed at an actual work site 400, or may be control of the construction machine 100 when work practice is performed at a driving school 600 for improving control skills of the construction machine 100.

The simulator 200 includes a virtual space construction device 201 and the operator control device 70. The operator control device 70 of the simulator 200 includes the seat 71, the operator input device 72, and a notification device, similarly to the operator control device 70 of the construction machine 100, and the notification device may include the first display device 73 or may include the second display device 76. The virtual space construction device 201 may construct a three-dimensional work site model 400a (virtual work site) simulating a work site and a three-dimensional construction machine model 100a (virtual construction machine) simulating a construction machine in a computer space, and display an image of the work site model 400a and an image of the construction machine model 100a on, for example, the second display device 76. The construction machine model 100a includes a lower travelling body model 1a that simulates the lower travelling body 1, an upper slewing body model 2a that simulates the upper slewing body 2, and a work device model 3a that simulates the work device 3. The work device model 3a includes a boom model 4a that simulates the boom 4, an arm model 5a that simulates the arm 5, and a tip attachment model 6a that simulates the tip attachment 6.

An image displayed on the second display device 76 may be an image from any viewpoint in a computer space in which the work site model 400a and the construction machine model 100a are constructed. The any viewpoint may be a preset viewpoint, may be a viewpoint selected by the operator MP, or may be a viewpoint selected by the virtual space construction device 201 based on a preset condition. When the viewpoint changes, positions of images of the work site model 400a and the construction machine model 100a displayed on the second display device 76, a direction in which the work site model 400a and the construction machine model 100a are viewed, and the like change. Specifically, for example, an image displayed on the second display device 76 may be an image viewed from a predetermined portion in an upper slewing body (for example, an image including a work site located in front of a work device and a construction machine), or may be an image capturing a predetermined direction from a predetermined location in a work site (for example, an image including a construction machine and a work site around the construction machine). Further, an image displayed on the second display device 76 may include a plurality of images captured from a plurality of viewpoints. That is, as images displayed on the second display device 76, a plurality of the images may be simultaneously displayed.

When the operator MP sitting on the seat 71 operates the operator input device 72, the simulator 200 changes an image of the construction machine model 100a displayed on the second display device 76 according to the operation, and also changes an image of the work site model 400a as necessary. Further, the simulator 200 causes the second display device 76 to display virtual work content (for example, virtual excavation work) that simulates work at an actual work site according to a change in an image of the construction machine model 100a.

When activated, for example, the simulator 200 prompts the operator MP to select work content via the first display device 73, and prompts the operator MP to execute the work content by using the virtual work site model 400a and the virtual construction machine model 100a, so that the operator MP can be trained. Upon completion of training, the simulator 200 may transmit a simulation result in which a result of work by the operator MP and identification information of the operator MP are associated with each other to the management device 500 such as a server. Further, the simulator 200 may transmit the simulation result to the controller 50. When acquiring the simulation result, at least one of the management device 500 and the controller 50 may update a database so that the simulation result is stored in the memory. By this, a history of simulation performed by the operator MP is accumulated in the database.

The work assistance system 300 includes a psychological state acquisition device 60. The psychological state acquisition device 60 acquires psychological state information, which is information correlated with a psychological state of the operator MP, and outputs the psychological state information to the controller 50. The psychological state information may be information correlated with impatience of the operator MP at the time of operating the construction machine 100 or at the time of operating the simulator 200. Further, the psychological state information may be information correlated with a fatigue feeling of the operator MP at the time of operating the construction machine 100 or at the time of operating the simulator 200. The psychological state information may be information correlated with concentration of the operator MP at the time of operating the construction machine 100 or at the time of operating the simulator 200. The psychological state information may be information correlated with irritation (restlessness) of the operator MP at the time of operating the construction machine 100 or at the time of operating the simulator 200. The psychological state information may be information correlated with stress of the operator MP at the time of operating the construction machine 100 or at the time of operating the simulator 200.

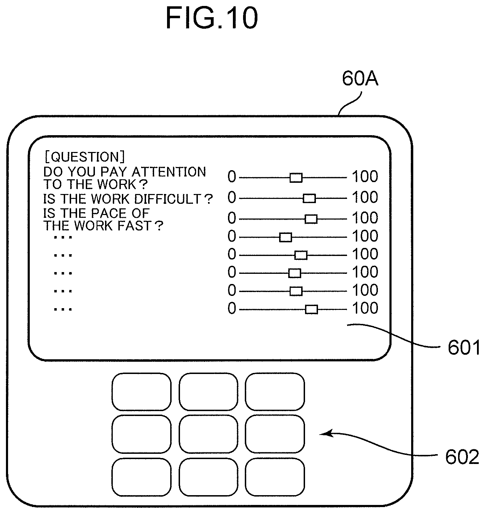

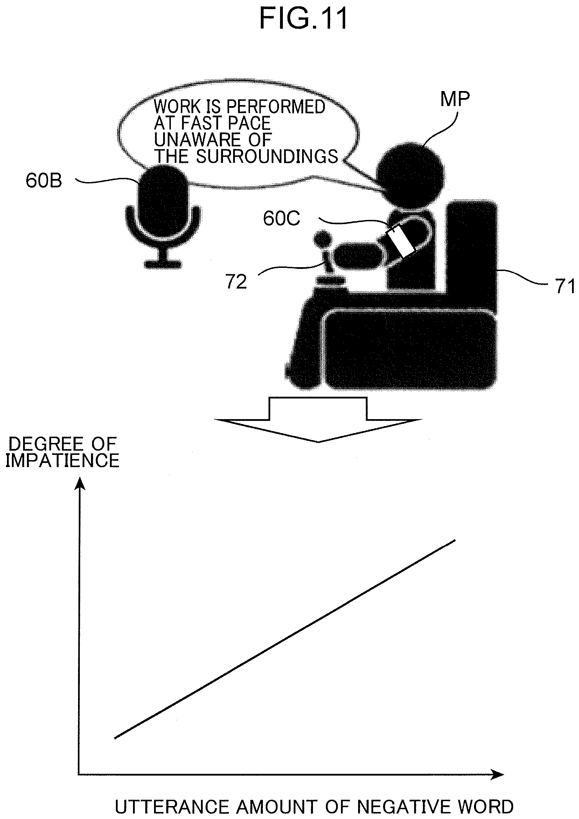

The psychological state acquisition device 60 may include a psychological state input receiver 60A (see FIG. 10) to be described later that receives a psychological state input that is an input related to a psychological state of the operator MP. In this case, a work-related person such as the operator MP may perform the psychological state input to the psychological state input receiver 60A. The psychological state input receiver 60A inputs information related to the psychological state input to the controller 50 as the psychological state information. The psychological state acquisition device 60 may include a psychological state detector that detects the psychological state information. The psychological state detector may be, for example, a sound collector 60B (see FIG. 11) to be described later, a biological information sensor 60C (see FIG. 11) to be described later, or another detector. The psychological state detector inputs the psychological state information to the controller 50.

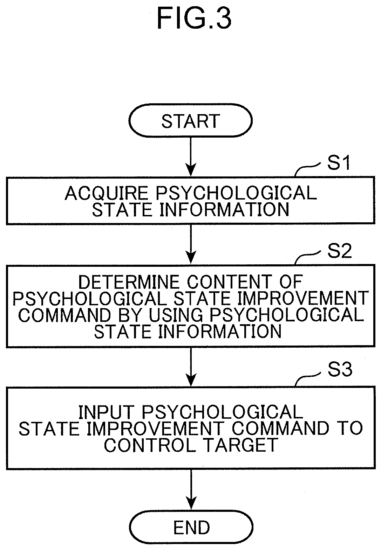

FIG. 3 is a flowchart illustrating an example of arithmetic processing performed by the controller 50 of the work assistance system 300.

The controller 50 acquires psychological state information related to a psychological state of the operator MP output by the psychological state acquisition device 60 (Step S1).

The controller 50 determines content of a psychological state improvement command (content of work assistance) by using the acquired psychological state information (Step S2).

The controller 50 inputs the determined psychological state improvement command to the control target (Step S3).

The control target performs an operation according to the psychological state improvement command input from the controller 50. By this, a psychological state of the operator MP in work using the construction machine 100 may be improved.

The controller 50 repeats the processing of Steps S1 to S3 during activation of the system.

### [Configuration common to first and second aspects]

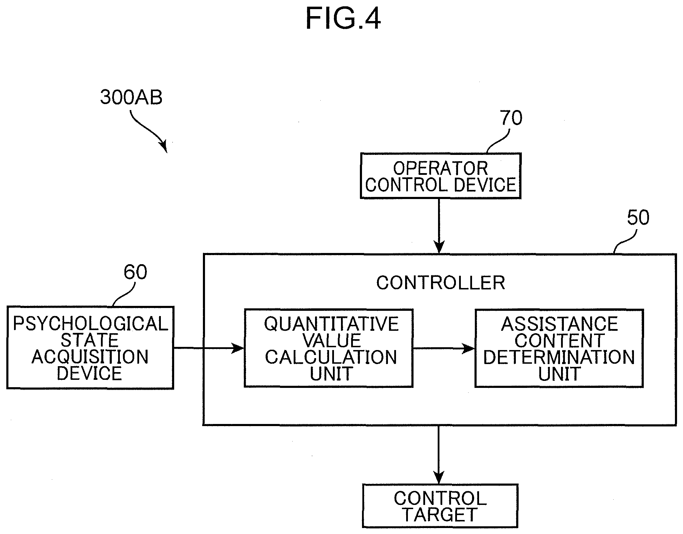

Next, a work assistance system 300AB including a configuration common to the work assistance system 300A according to the first aspect and the work assistance system 300B according to the second aspect will be described. FIG. 4 is a block diagram illustrating a configuration of the work assistance system 300AB.

A work assistance system 300AB illustrated in FIG. 4 includes a controller 50. The controller 50 includes a quantitative value calculation unit and an assistance content determination unit. Each of the quantitative value calculation unit and the assistance content determination unit is implemented by the arithmetic processing device executing a control program stored in the memory in the controller 50. The quantitative value calculation unit and the assistance content determination unit are an example of the command content determination unit in the work assistance system 300 illustrated in FIG. 1.

The quantitative value calculation unit calculates a psychological state quantitative value that is a value obtained by quantifying a psychological state of the operator MP based on the psychological state information. The psychological state quantitative value may be an impatience quantitative value that is a value obtained by quantifying degree of impatience of the operator MP, a fatigue feeling quantitative value that is a value obtained by quantifying a fatigue feeling of the operator MP, or a concentration quantitative value that is a value obtained by quantifying concentration of the operator MP. In the work assistance system 300AB illustrated in FIG. 4, the psychological state information is information correlated with a psychological state of the operator MP at the time of operating the construction machine 100.

The assistance content determination unit determines content of work assistance for improving a psychological state of the operator MP at the time of operating the construction machine 100 by using the psychological state quantitative value.

Content of the work assistance is not particularly limited as long as the content is assistance content that can improve a psychological state of the operator MP at the time of operating the construction machine 100. Content of the work assistance may be set according to, for example, a specific situation such as a type of target work that is work engaged by the operator MP, a type of the construction machine 100 operated by the operator MP, and a psychological state of the operator MP.

Content of the work assistance may include changing a work condition of the target work to content by which a psychological state of the operator MP can be improved. The work condition may be a target workload set as a target of a workload of the operator MP, and in this case, content of the work assistance may be to adjust a target workload of the operator MP to a value by which a psychological state of the operator MP can be improved. The work condition may be the number of members of a work team engaged in the target work, and in this case, content of the work assistance may include adjusting the number of members of the work team engaged in the target work to the number of members by which a psychological state of the operator MP can be improved. In a case where the target work includes a plurality of types of work content, the work condition may be what work content the operator MP is in charge of among a plurality of types of the work content, and In this case, content of the work assistance may be to change work content that the operator MP is in charge of to work content by which a psychological state of the operator MP can be improved. The work condition may be a due date of the target work engaged by the operator MP, and in this case, content of the work assistance may be to change a due date of the target work to a due date by which a psychological state of the operator MP can be improved. In a case where the construction machine 100 operated by the operator MP is selected from a plurality of construction machines, the work condition may be a characteristic of the construction machine 100 operated by the operator MP, and in this case, content of the work assistance may be to change the construction machine 100 operated by the operator MP to a construction machine having a characteristic by which a psychological state of the operator MP can be improved.

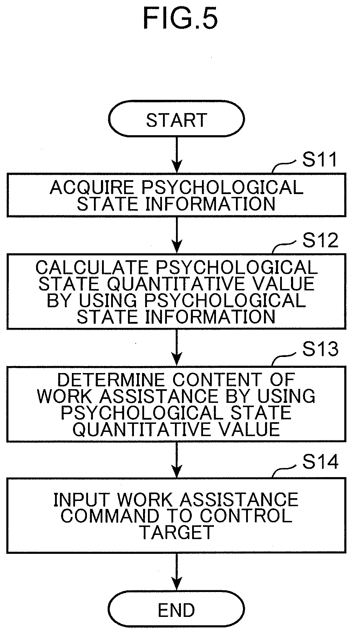

FIG. 5 is a flowchart illustrating an example of arithmetic processing performed by the controller 50 of the work assistance system 300AB illustrated in FIG. 4.

The controller 50 acquires psychological state information related to a psychological state of the operator MP output by the psychological state acquisition device 60 (Step S11).

The controller 50 calculates a psychological state quantitative value by using the acquired psychological state information (Step S12).

The controller 50 determines content of work assistance by using the calculated psychological state quantitative value (Step S13).

The controller 50 inputs a work assistance command, which is a command corresponding to the determined content of work assistance, to a control target (Step S14). The work assistance command is an example of a psychological state improvement command.

The control target performs an operation corresponding to the work assistance command input from the controller 50, that is, an operation corresponding to the determined content of work assistance. By this, a psychological state of the operator MP in work using the construction machine 100 may be improved.

The controller 50 repeats the processing of Steps S11 to S14 during activation of the system.

### [Configuration common to third and fourth aspects]

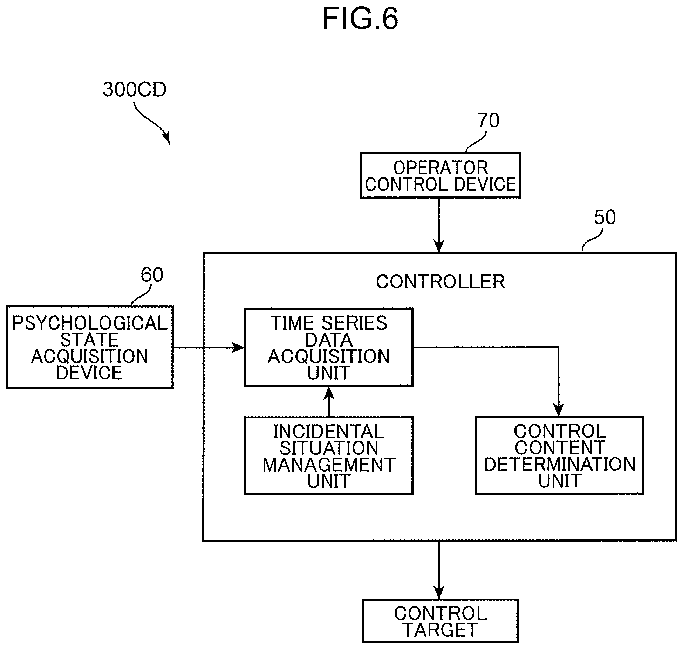

Next, a work assistance system 300CD including a configuration common to the work assistance system 300C according to the third aspect and the work assistance system 300D according to the fourth aspect will be described. FIG. 6 is a block diagram illustrating a configuration of the work assistance system 300CD.

The work assistance system 300CD illustrated in FIG. 6 includes a controller 50. The controller 50 includes a time series data acquisition unit, an incidental situation management unit, and a control content determination unit. Each of the time series data acquisition unit, the incidental situation management unit, and the control content determination unit is implemented by the arithmetic processing device executing a control program stored in the memory in the controller 50. The time series data acquisition unit, the incidental situation management unit, and the control content determination unit are an example of the command content determination unit in the work assistance system 300 illustrated in FIG. 1.

The time series data acquisition unit acquires data related to a psychological state of the operator MP at at least one of the time of operating the construction machine 100 and the time of operating the simulator 200 (specifically, for example, psychological state time series data that is data related to a time series change of the psychological state) based on the psychological state information that is information correlated with the psychological state.

The incidental situation management unit transmits or acquires information related to a change in an incidental situation at at least one of the time of operating the construction machine 100 and the time of operating the simulator 200. That is, the incidental situation management unit may transmit information related to a change in the incidental situation, and may acquire information related to a change in the incidental situation.

Specifically, for example, as in the third aspect to be described later, the incidental situation management unit may transmit change promotion information that is information for promoting a change in a psychological state to the operator MP at at least one of the time of operating the construction machine 100 and the time of operating the simulator 200. Further, the incidental situation management unit may acquire data (specifically, for example, incidental situation time series data which is data related to a time series change in the incidental situation) related to the incidental situation as in the fourth aspect to be described later.

The information related to a change in the incidental situation may be information related to a change in a surrounding situation. The information related to a change in a surrounding situation may be, for example, information related to a change in a surrounding situation of the construction machine 100, information related to a change in a surrounding situation of the construction machine model 100a in a virtual space constructed by the simulator 200, or information related to a change in a surrounding situation of the operator MP. The information related to a change in the incidental situation may be information related to a change in work content by the construction machine 100.

The control content determination unit determines content of improvement control, which is control as work assistance for improving a psychological state of the operator MP at the time of operation (at the time of operating the construction machine 100 or at the time of operating the simulator 200), by using the psychological state time series data and a change in the incidental situation. Specifically, for example, as in the third aspect to be described later, the control content determination unit may determine content of improvement information to be transmitted to improve a psychological state of the operator MP at the time of operating the construction machine 100 by using data related to a change in the psychological state before and after transmission of the change promotion information. Further, as in the fourth aspect to be described later, the control content determination unit may determine training content for training the operator MP by using the psychological state time series data and incidental situation time series data to be described later. The training content is an example of content of work assistance for improving a proficiency level related to operation of the operator MP.

The psychological state time series data is data acquired based on the psychological state information, and is data related to a time series change in a psychological state of the operator MP. The psychological state time series data may be data related to a time series change in a psychological state of the operator MP at the time of operating the construction machine 100, and in this case, the psychological state information is information correlated with a psychological state of the operator MP at the time of operating the construction machine 100. Further, the psychological state time series data may be data related to a time series change in a psychological state of the operator MP at the time of operating the simulator 200, and in this case, the psychological state information is information correlated with a psychological state of the operator MP at the time of operating the simulator 200. Further, the psychological state time series data may be data including data related to a time series change in a psychological state of the operator MP at the time of operating the construction machine 100 and data related to a time series change in a psychological state of the operator MP at the time of operating the simulator 200, and in this case, the psychological state information is information including information correlated with a psychological state of the operator MP at the time of operating the construction machine 100 and information correlated with a psychological state of the operator MP at the time of operating the simulator 200.

The controller 50 can acquire the psychological state time series data by continuously or periodically receiving an input of the psychological state information from the psychological state acquisition device 60 as time passes. The psychological state time series data may be time series data of the psychological state information input to the controller 50 continuously or periodically. The psychological state time series data may be obtained by the controller 50 processing time series data of the psychological state information continuously or periodically input to the controller 50.

Content of the improvement control is not particularly limited as long as the content can improve a psychological state of the operator MP at the time of operation (at the time of operating the construction machine 100 or at the time of operating the simulator 200). Content of the improvement control may be set according to, for example, a specific situation such as a type of the target work, a type of the construction machine 100 operated by the operator MP, and a psychological state of the operator MP. Content of the improvement control may be, for example, transmitting improvement information to improve a psychological state of the operator MP at the time of operating the construction machine 100. Further, content of the improvement control may be training content for training the operator MP in order to improve a psychological state of the operator MP at the time of operating the construction machine 100.

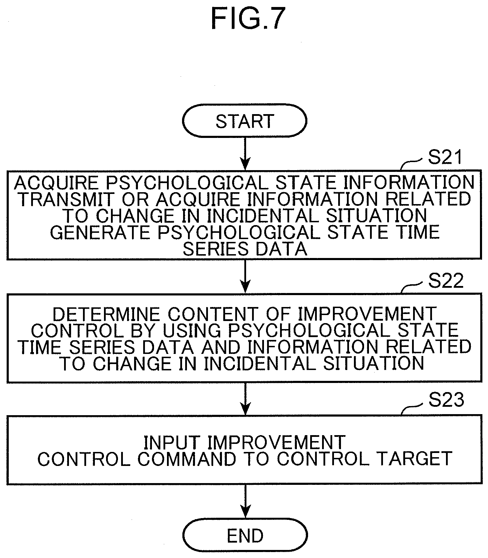

FIG. 7 is a flowchart illustrating an example of arithmetic processing performed by the controller 50 of the work assistance system 300CD illustrated in FIG. 6.

The controller 50 sequentially acquires the psychological state information related to a psychological state of the operator MP input from the psychological state acquisition device 60 in time series at the time of operating the construction machine 100 or at the time of operating the simulator 200. Further, the controller 50 transmits or acquires information related to a change in an incidental situation in parallel with acquisition of the psychological state information in time series. The controller 50 acquires (generates) the psychological state time series data, which is data related to a time series change of the psychological state, by storing these pieces of information in association with each other (Step S21).

The controller 50 determines content of improvement control by using the acquired psychological state time series data and information related to a change in an incidental situation (Step S22). Specifically, for example, the controller 50 may determine content of improvement control by using psychological state time series data and information related to a timing at which a change in an incidental situation occurs.

The controller 50 inputs an improvement control command, which is a command corresponding to the determined content of improvement control, to the control target (Step S23). The improvement control command is an example of the psychological state improvement command.

The control target performs an operation according to the improvement control command input from the controller 50, that is, an operation corresponding to content of the determined improvement control. By this, a psychological state of the operator MP in work using the construction machine 100 may be improved.

The controller 50 repeats the processing of Steps S21 to S23 during activation of the system.

As described above, in the work assistance system 300CD, data related to the psychological state is psychological state time series data related to a time series change in the psychological state, data related to the incidental situation is incidental situation time series data related to a time series change in the incidental situation, and the controller 50 determines training content for training the operator MP as content of the work assistance by using the psychological state time series data and the incidental situation time series data. However, in the work assistance system 300CD including a configuration common to the third aspect and the fourth aspect, content of the work assistance is not limited to the training content, and may be other assistance content for improving a proficiency level related to operation of the operator MP. In the work assistance system 300CD including a configuration common to the third aspect and the fourth aspect, data related to the psychological state does not need to be the time series data, and data related to the incidental situation does not need to be the incidental situation time series data.

### [First aspect]

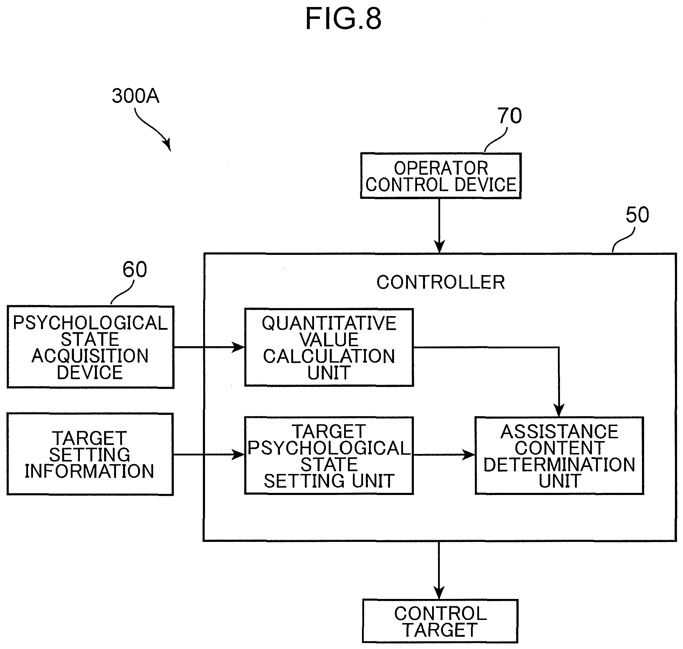

FIG. 8 is a block diagram illustrating the work assistance system 300A according to the first aspect.

The work assistance system 300A illustrated in FIG. 8 includes a controller 50. The controller 50 includes a quantitative value calculation unit, a target psychological state setting unit, and an assistance content determination unit. Each of the quantitative value calculation unit, the target psychological state setting unit, and the assistance content determination unit is implemented by the arithmetic processing device executing a control program stored in the memory in the controller 50. The quantitative value calculation unit, the target psychological state setting unit, and the assistance content determination unit are an example of the command content determination unit in the work assistance system 300 illustrated in FIG. 1.

The quantitative value calculation unit calculates a psychological state quantitative value that is a value obtained by quantifying a psychological state of the operator MP based on the psychological state information.

The target psychological state setting unit sets a target psychological state which is a target of a psychological state at the time of operating the construction machine 100.

The assistance content determination unit determines content of work assistance for improving a psychological state of the operator MP at the time of operating the construction machine 100 by using the psychological state quantitative value and the target psychological state.

In the work assistance system 300A illustrated in FIG. 8, the psychological state information is information correlated with a psychological state of the operator MP at the time of operating the construction machine 100. The target psychological state may be, for example, a specific target (for example, a target value) preset in the controller 50, or may be a target (for example, a target value) set by the controller 50 by using information (target setting information) for setting the target psychological state.

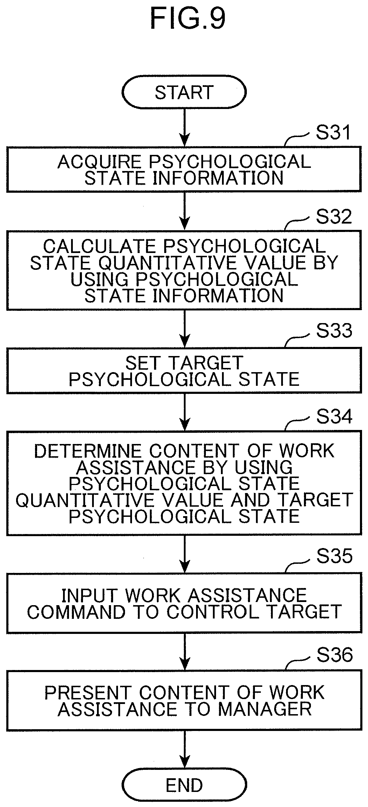

FIG. 9 is a flowchart illustrating an example of arithmetic processing performed by the controller 50 of the work assistance system 300A according to the first aspect.

The controller 50 acquires psychological state information related to a psychological state of the operator MP output by the psychological state acquisition device 60 (Step S31).

The controller 50 calculates a psychological state quantitative value by using the acquired psychological state information (Step S32).

The controller 50 sets a target psychological state which is a target of a psychological state at the time of operating the construction machine 100 (Step S33).

The controller 50 determines content of work assistance by using the calculated psychological state quantitative value and the set target psychological state (Step S34). Specifically, for example, the controller 50 may determine content of work assistance by using a difference between a target value as the target psychological state and the psychological state quantitative value.

The controller 50 inputs a work assistance command, which is a command corresponding to the determined content of work assistance, to a control target (Step S35). The work assistance command is an example of the psychological state improvement command.

The control target performs an operation corresponding to the work assistance command input from the controller 50, that is, an operation corresponding to the determined content of work assistance. By this, a psychological state of the operator MP in work using the construction machine 100 may be improved.

The controller 50 presents contents of work assistance to a work manager (Step S36). The content of work assistance presented to a work manager may be at least one of content of work assistance executed by the controller 50 and content of work assistance to be executed by the work manager.

The controller 50 repeats the processing of Steps S31 to S36 during activation of the system.

Next, a modification example of the first aspect will be described. FIGS. 10 to 22 are diagrams for describing the work assistance system 300A according to a modification example of the first aspect.

In the work assistance system 300A according to a modification example of the first aspect, a psychological state of the operator MP acquired by the controller 50 from the psychological state acquisition device 60 is impatience (degree of impatience) of the operator MP at the time of operating the construction machine 100, a psychological state quantitative value calculated by the quantitative value calculation unit of the controller 50 is an impatience quantitative value that is a value obtained by quantifying degree of impatience of the operator MP, and a target psychological state set by the target psychological state setting unit of the controller 50 is an impatience target value that is a target of degree of impatience of the operator MP.

The psychological state acquisition device 60 may include the psychological state input receiver 60A (see FIG. 10) that allows a work-related person such as the operator MP to input psychological state information that is information correlated with a psychological state of the operator MP. The psychological state input receiver 60A outputs the input psychological state information to the controller 50.

Specifically, for example, the psychological state input receiver 60A may include a screen 601 that displays at least one question (for example, a questionnaire) to a work-related person (for example, the operator MP), and an input unit 602 to which the work-related person inputs a response to the at least one question. The at least one question includes content by which a psychological state of the operator MP at the time of operating the construction machine 100 can be evaluated, specifically, content by which degree of impatience of the operator MP at the time of operating the construction machine 100 can be evaluated. Therefore, psychological state information input from the psychological state input receiver 60A to the controller 50 serves as an index for evaluating degree of impatience of the operator MP at the time of operating the construction machine 100. The question may have, for example, content of "do you pay attention to the work?", content of "is the work difficult?", content of "is the pace of the work fast?", or other content.

The operator MP may input a response to the at least one question into the psychological state input receiver 60A after operating the construction machine 100 or during an interval between operations of the construction machine 100. The response by the operator MP may be, for example, a numerical value indicating degree of impatience. The psychological state input receiver 60A may be installed in the cab 7 of the construction machine 100, may be a portable information terminal that can be brought inside the cab 7 of the construction machine 100 and can be taken outside the cab 7, or may be another information device.

The psychological state acquisition device 60 may include the sound collector 60B such as a microphone capable of collecting voice of the operator MP (see FIG. 11). The sound collector 60B outputs voice information on collected voice to the controller 50. At the time of operating the construction machine 100, the operator MP may utter words according to a psychological state of the operator MP. Specifically, for example, as illustrated in a graph of FIG. 11, the number of times that the operator MP utters a negative word (an utterance amount of a negative word) tends to increase as degree of impatience increases at the time of operating the construction machine 100. Therefore, voice information collected by the sound collector 60B and output to the controller 50 serves as an index for evaluating degree of impatience of the operator MP at the time of operating the construction machine 100.

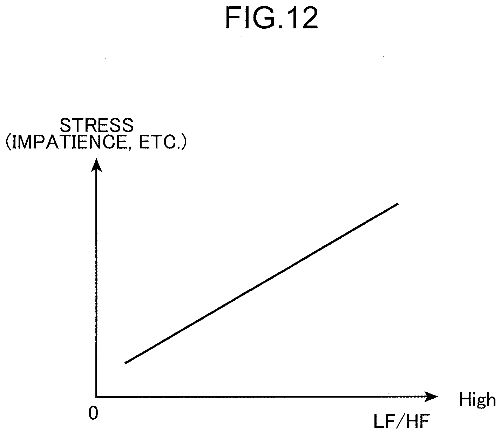

The psychological state acquisition device 60 may include a biological information sensor 60C capable of detecting a change in biological information (see FIG. 11). The biological information sensor 60C outputs the detected biological information to the controller 50. The biological information may be, for example, the balance between a sympathetic nerve (LF) and a parasympathetic nerve (HF), that is, autonomic balance (LF/HF). For example, as illustrated in the graph of FIG. 12, a value of the autonomic balance (LF/HF) of the operator MP tends to increase as degree of stress such as impatience increases. The biological information may be, for example, a blood pressure of the operator MP, a heart rate of the operator MP, a perspiration amount of the operator MP, or another piece of biological information of the operator MP. A blood pressure, a heart rate, and a perspiration amount of the operator MP tend to increase as degree of stress such as impatience increases. Therefore, biological information detected by the biological information sensor 60C and output to the controller 50 serves as an index for evaluating degree of impatience of the operator MP at the time of operating the construction machine 100.

The quantitative value calculation unit of the controller 50 calculates an impatience quantitative value obtained by quantifying a psychological state of the operator MP based on psychological state information of the operator MP input from the psychological state acquisition device 60 at the time of operating the construction machine 100. This impatience quantitative value is an example of the psychological state quantitative value.

In a case where the psychological state acquisition device 60 includes the psychological state input receiver 60A, the quantitative value calculation unit of the controller 50 may calculate an impatience quantitative value by using psychological state information input from the psychological state input receiver 60A to the controller 50. When each of a plurality of responses input to the psychological state input receiver 60A is a numerical value, the impatience quantitative value may be, for example, a total value of a plurality of numerical values corresponding to a plurality of the responses included in the psychological state information, or may be an average value of a plurality of numerical values corresponding to a plurality of the responses.

In a case where the psychological state acquisition device 60 includes the sound collector 60B, the quantitative value calculation unit of the controller 50 may calculate an impatience quantitative value by using an utterance amount of a negative word included in the voice information and a preset map such as the graph of FIG. 11.

In a case where the psychological state acquisition device 60 includes the biological information sensor 60C, the quantitative value calculation unit of the controller 50 may calculate an impatience quantitative value by using the biological information (for example, autonomic balance (LF/HF)) and a preset map such as a graph of FIG. 12.

The controller 50 (target psychological state setting unit) sets an impatience target value which is a target of a psychological state at the time of operating the construction machine 100. This impatience target value is an example of the target psychological state. The impatience target value may be preset and stored in the controller 50, for example. The impatience target value may be preset for each of the operators MP and stored in the controller 50, for example. Further, the controller 50 may set the impatience target value based on a target input that is input to a predetermined input device by a work-related person such as the operator MP or a work manager. In this case, the target input is an example of the target setting information.

Further, the controller 50 (target psychological state setting unit) may set an impatience target value by using, for example, a target characteristic that is a characteristic in which an impatience target value is expressed by a function of a work situation. In this case, the target characteristic is an example of the target setting information. The controller 50 can acquire information on an actual work situation and determine an impatience target value by using an acquired work situation and the target characteristic.

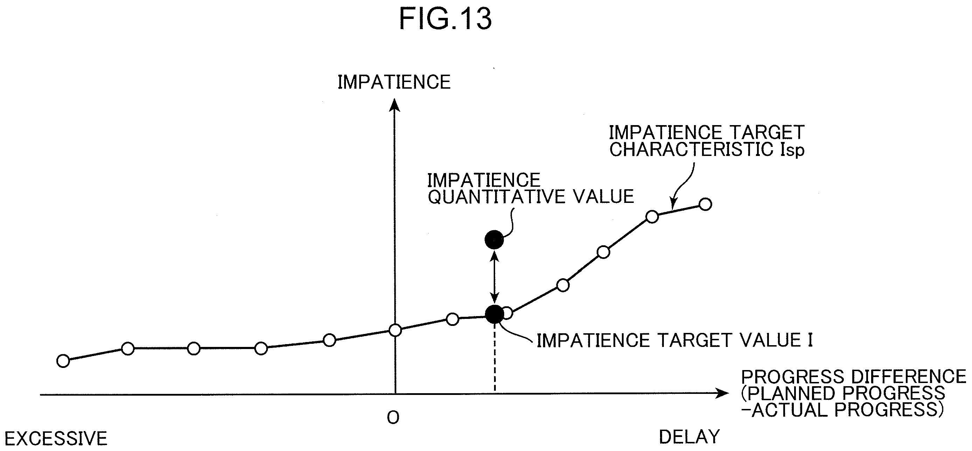

The work situation may be a work situation that affects a psychological state of the operator MP. The work situation may be, for example, a progress status of work. In this case, for example, the controller 50 may set an impatience target value by using a target characteristic that is a characteristic in which an impatience target value is expressed by a function of a progress status of work. Specifically, for example, as illustrated in FIG. 13, the controller 50 . may set an impatience target value by using an impatience target characteristic Isp as the target characteristic. The impatience target characteristic Isp illustrated in FIG. 13 is a characteristic expressing a relationship between a progress status of work and an impatience target value.

In FIG. 13, the horizontal axis of the graph represents a progress status of work, and the vertical axis of the graph represents degree of impatience (impatience quantitative value and impatience target value). In FIG. 13, the origin of the graph indicates that progress of work is as planned, the right side of the origin on the horizontal axis of the graph indicates that progress of actual work is behind a plan, and the left side of the origin on the horizontal axis of the graph indicates that actual work is ahead of a plan. The horizontal axis of the graph represents a progress difference (planned progress - actual progress), and degree of delay with respect to a plan becomes higher as the progress difference is larger.

The impatience target characteristic Isp illustrated in FIG. 13 is set such that an impatience target value increases as degree of delay of work increases. This makes it possible to promote an increase in degree of impatience of the operator MP as degree of delay of work increases, and as a result, it is possible to reduce delay of work. Further, the impatience target characteristic Isp illustrated in FIG. 13 is set such that, in a case where actual work is ahead of a plan (in a case where actual progress exceeds a plan), the impatience target value becomes smaller as an excess amount becomes larger. When there are a plurality of the operators MP, the impatience target characteristic Isp may be individually set for each of a plurality of the operators MP.

The controller 50 (target psychological state setting unit) may set the impatience target characteristic Isp suitable for each of a plurality of the operators MP as follows, for example.

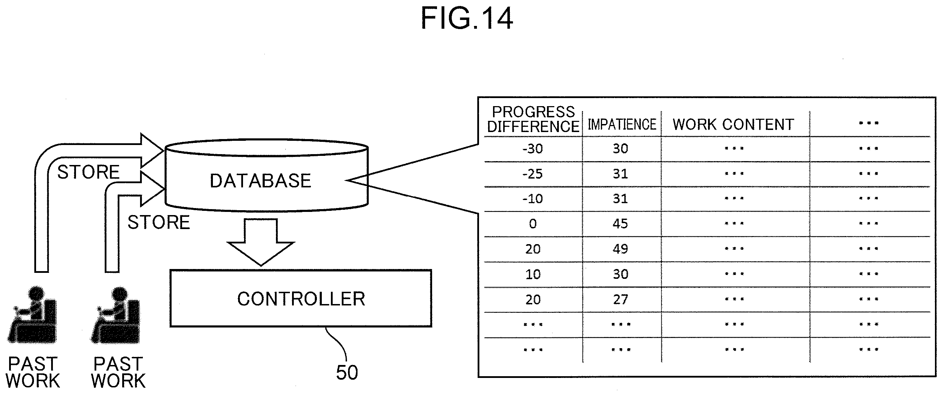

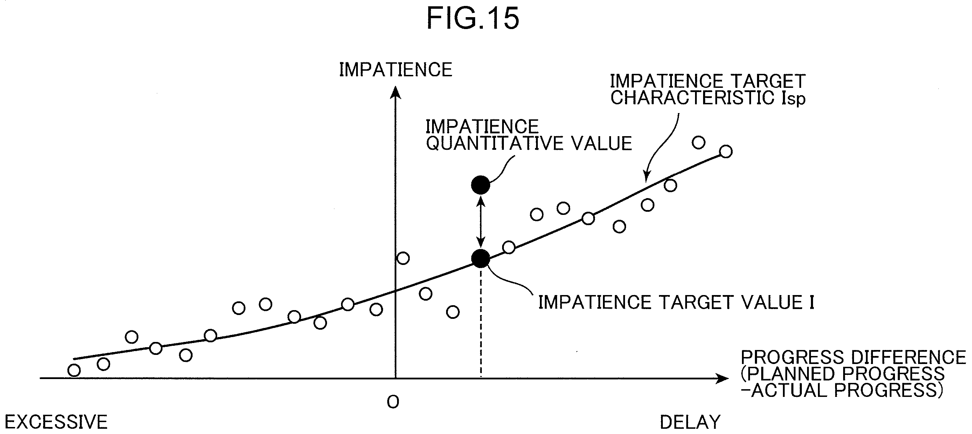

At least one of the management device 500 and the controller 50 may include, for example, as illustrated in FIG. 14, a database that stores data related to work performed in the past by each of a plurality of the operators MP. The database stores content of a plurality of tasks of work (a plurality of work contents) performed by a plurality of the operators MP in the past, a progress difference in each of a plurality of work contents, degree of impatience, and identification information of the operator MP in association with each other. FIG. 15 is an example of a graph obtained by plotting data on one of a plurality of the operators MP stored in the database. The horizontal axis of the graph illustrated in FIG. 15 represents a progress status (progress difference) of work, and the vertical axis of the graph represents degree of impatience. In the database, data as shown in FIG. 15 is stored for each of a plurality of the operators MP.

The controller 50 (target psychological state setting unit) may set a function expressed by an approximate curve of a solid line in FIG. 15 as the impatience target characteristic Isp by using data as illustrated in FIG. 15 indicating a relationship between a progress difference and degree of impatience for each of the operators MP. The impatience target characteristic Isp may be a function set by using a method such as least squares method.

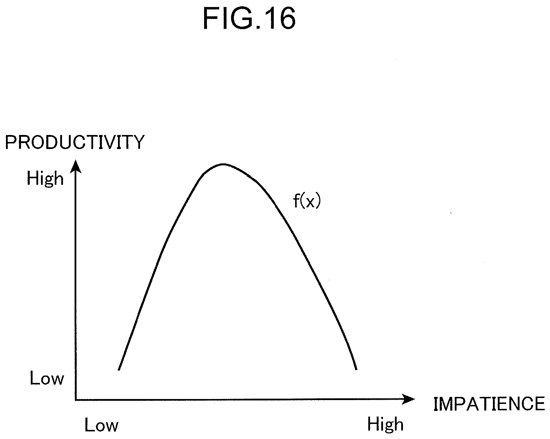

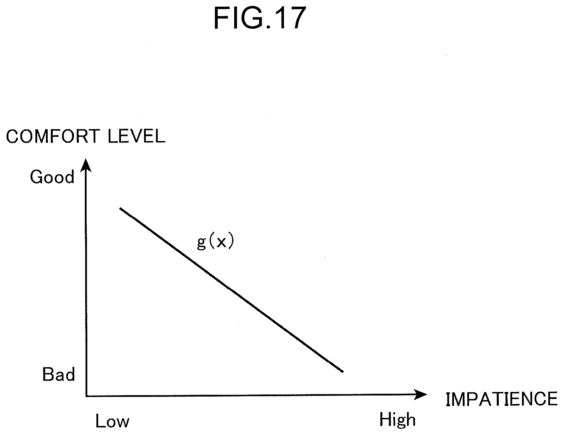

The controller 50 (target psychological state setting unit) may set the impatience target characteristic Isp as follows, for example. FIG. 16 is a graph illustrating an example of a relationship between an impatience quantitative value (horizontal axis x) of the operator MP at the time of operating the construction machine 100 and work efficiency (vertical axis y) such as productivity. FIG. 17 is a graph illustrating an example of a relationship between an impatience quantitative value (horizontal axis x) of the operator MP at the time of operating the construction machine 100 and a comfort level (vertical axis y) of the operator MP. The comfort level of the operator MP can be rephrased as, for example, a sense of security or a sense of satisfaction.

As illustrated in FIG. 16, a relationship between degree of impatience and productivity can be expressed by, for example, a function f(x) having an inverted U-shape. That is, as illustrated in the function f(x) of FIG. 16, work efficiency (productivity) tends to be the highest when the operator MP is moderately impatient, and work efficiency (productivity) tends to decrease in a case where degree of impatience is excessively high or in a case where degree of impatience is excessively low. As illustrated in FIG. 17, a relationship between degree of impatience and a comfort level can be expressed by, for example, a function g(x). As indicated by the function g(x) in FIG. 17, a comfort level of the operator MP tends to decrease as degree of impatience increases.

The controller 50 (target psychological state setting unit) may set the impatience target value by using the function f(x) and the function g(x). In this case, information including the function f(x) and the function g(x) is an example of the target setting information.

Specifically, for example, the controller 50 may set the sum (P) of the function f(x) and the function g(x) as an evaluation function as in Equation (1) below and determine an impatience target value I (target psychological state) that maximizes the sum (P).$P = max \left(f\left(x\right)+g\left(x\right)\right)$

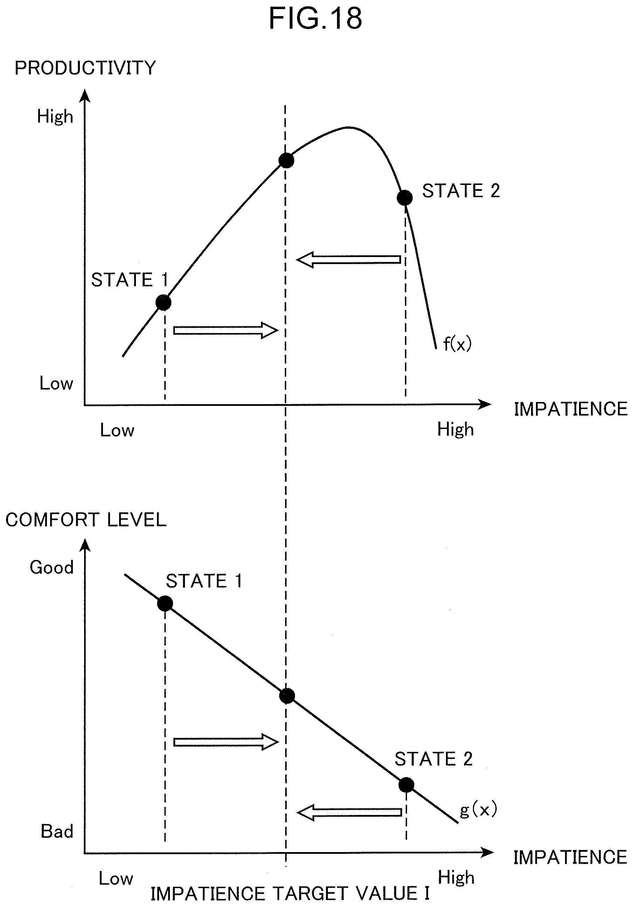

In this case, as illustrated in FIG. 18, the controller 50 can determine the impatience target value I at which both work efficiency (productivity) and a comfort level of the operator MP are appropriately achieved. As illustrated in FIG. 18, the determined impatience target value I can appropriately achieve both work efficiency (productivity) and a comfort level of the operator MP as compared with degree of impatience in STATE 1 and degree of impatience in STATE 2.

In a case where there is a function h(x) to be considered when determining the impatience target value I in addition to the function f(x) related to productivity and the function g(x) related to a comfort level, the controller 50 may set the sum (P) of the function f(x), the function g(x), and the function h(x) as an evaluation function as in Equation (2) below, and determine the impatience target value I (target psychological state) that maximizes the sum (P).$P = max \left(f\left(x\right)+g\left(x\right)+h\left(x\right)\right)$

The controller 50 may set an evaluation function obtained by weighting each of the function f(x) and the function g(x) as in Equation (3) below and determine the impatience target value I (target psychological state) that maximizes the sum (P).$P = max \left(w\times f\left(x\right)+\left(1-w\right)\times g \left(x\right)\right)$

A coefficient w in Equation (3) may be determined in consideration of which one of work efficiency (productivity) and a comfort level of the operator MP is prioritized. The coefficient w may be, for example, a value correlated with the number of days remaining until a due date of work. In a case where the number of remaining days is larger than a reference value, a comfort level of the operator MP is prioritized over work efficiency (productivity), and the coefficient w may be set to a relatively small value. On the other hand, in a case where the number of remaining days is equal to or less than the reference value, work efficiency (productivity) may be prioritized over a comfort level of the operator MP, and the coefficient w may be set to a relatively large value.

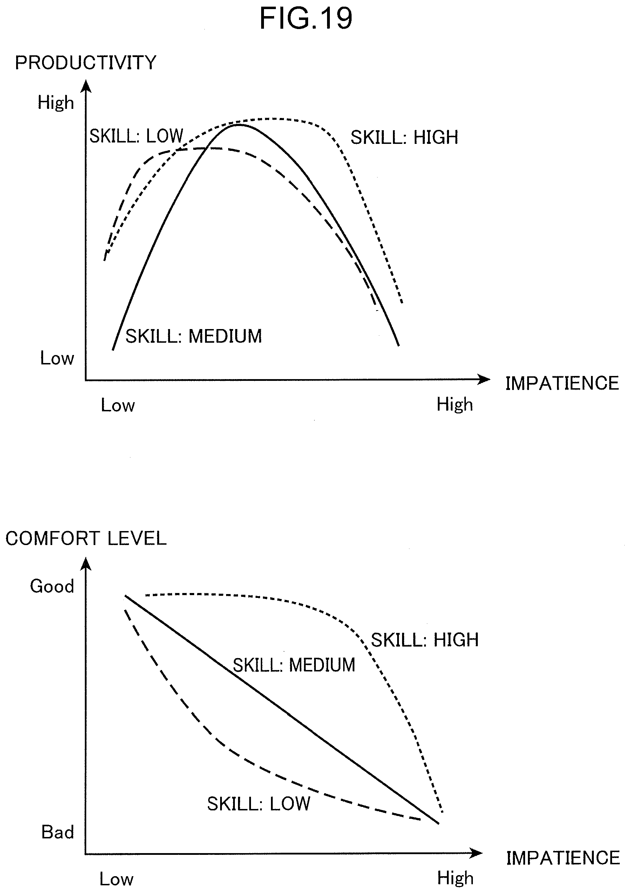

The database may store the function f(x) and the function g(x) common to each of the operators MP. Further, the database may store the function f(x) and the function g(x) prepared for each of a plurality of the operators MP. Further, a plurality of preset function sets may be stored in the database. The plurality of function sets correspond to a plurality of levels preset with respect to a work skill. Each function set includes the function f(x) and the function g(x). Specifically, as illustrated in FIG. 19, the database may store the function f(x) and the function g(x) set for the operator MP having a high work skill level, the function f(x) and the function g(x) set for the operator MP having a medium work skill level, and the function f(x) and the function g(x) set for the operator MP having a low work skill level.

The controller 50 (assistance content determination unit) determines content of work assistance for improving a psychological state of the operator MP at the time of operating the construction machine 100 by using an impatience quantitative value as a psychological state quantitative value and an impatience target value as a target psychological state. Specifically, for example, the controller 50 may determine content of work assistance by using an impatience difference (impatience target value - impatience quantitative value) that is a difference between an impatience target value and an impatience quantitative value. That is, the controller 50 may determine content of work assistance necessary for bringing an impatience quantitative value close to an impatience target value by using the impatience difference.

The controller 50 may present determined content of work assistance to a work manager who manages a work site. By this, the work manager can execute work assistance for improving work efficiency (productivity), execute work assistance for increasing a comfort level of the operator MP, and execute work assistance for moderately improving both work efficiency (productivity) and a comfort level. Work assistance may be executed by the controller 50 instead of being executed by the work manager. In this case, the controller 50 may perform both presentation of the determined content of work assistance to the work manager and execution of work assistance, or may execute work assistance without presenting the determined content of work assistance to the work manager.

Work assistance may be the following specific example. The work assistance may be to adjust a workload of work that the operator MP is in charge of, that is, to increase or decrease a workload. The work assistance may be to adjust the number of members in a work team including the operator MP, that is, to increase or decrease the number of members. The work assistance may be to adjust a due date of work that the operator MP is in charge of, that is, to extend or shorten a due date.

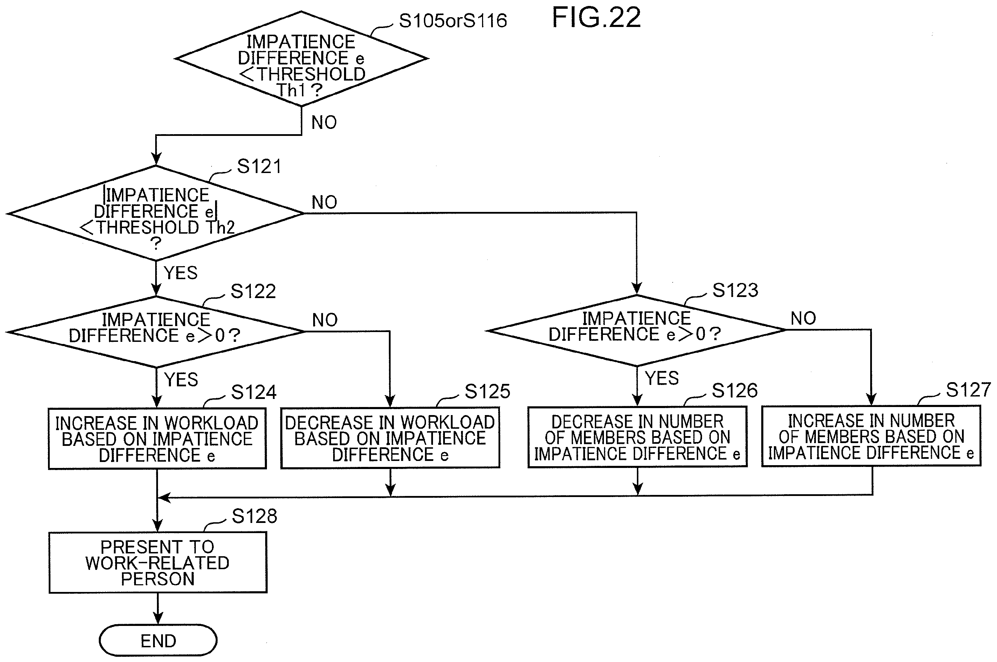

Content of the work assistance is preferably to change a work condition of the operator MP in order to change a level of a work burden of the operator MP as in a flowchart illustrated in FIG. 22 to be described later. Specifically, in a case where there is a margin in a psychological state of the operator MP with respect to target impatience (for example, an impatience target value), that is, in a case where the operator MP is not being impatient, content of the work assistance is preferably to change a work condition of the operator MP so as to increase a work burden of the operator MP. On the other hand, in a case where there is no margin in a psychological state of the operator MP with respect to target impatience (for example, an impatience target value), that is, in a case where the operator MP is being impatient, content of the work assistance is preferably to change a work condition of the operator MP so as to decrease a work burden of the operator MP.

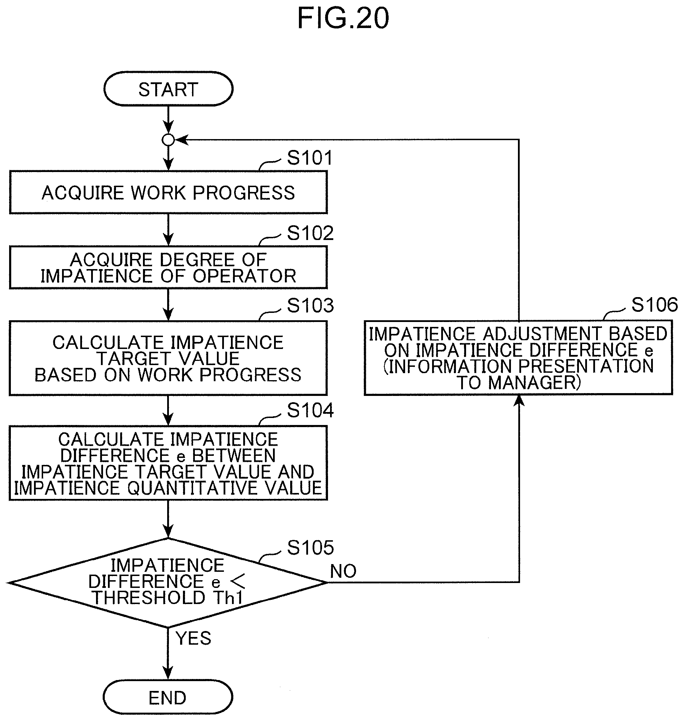

FIG. 20 is a flowchart illustrating an example of arithmetic processing performed by the controller 50. In Step S101, the controller 50 acquires progress status information that is information related to a progress status of work. Specifically, for example, when a work-related person such as the operator MP or a work manager inputs a progress status to a predetermined input device for inputting a progress status, the controller 50 can acquire the progress status information.

In Step S102, the controller 50 calculates an impatience quantitative value x by using any of the various methods described above.

In Step S103, the controller 50 calculates the impatience target value I by using the impatience target characteristic Isp, for example, illustrated in FIG. 13 or 15 and the progress status information. That is, when the progress difference is determined, the controller 50 can calculate the impatience target value I by using a function corresponding to the impatience target characteristic Isp illustrated in FIG. 13 or 15.

In Step S104, the controller 50 calculates an impatience difference e, which is a difference between the impatience target value I and the impatience quantitative value x, that is, a value obtained by subtracting the impatience quantitative value x from the impatience target value I (impatience target value I - impatience quantitative value x).

In Step S105, the controller 50 determines whether or not the impatience difference e is smaller than a preset first threshold Th1. In a case where the impatience difference e is smaller than the first threshold Th1 (YES in Step S105), the controller 50 suspends execution of work assistance. This is because, in a case where the impatience difference e is smaller than the first threshold Th1, actual degree of impatience of the operator MP at the time of operating the construction machine 100 is close to a target of degree of impatience, and work assistance for the operator MP is unnecessary.

On the other hand, in a case where the impatience difference e is more than or equal to the first threshold Th1 (NO in Step S105), in Step S106, the controller 50 controls the control target in order to present to the work manager that work assistance for the operator MP is necessary. Specifically, for example, the controller 50 transmits work assistance information, which is information related to work assistance, to the external display device 700 that can be visually recognized by a work manager via a communication device, and causes the external display device 700 to display the work assistance information. In this case, the external display device 700 is an example of the control target. The communication device may be included in the work assistance system 300 or may be prepared separately from the work assistance system 300. Communication between the communication device and the external display device 700 may be wireless communication or wired communication. The work assistance information may include information on necessity of work assistance for the operator MP, or may include information on content of work assistance. The content of work assistance may be specific work assistance preset in the controller 50, or may be any work assistance selected by the controller 50 according to magnitude of the impatience difference e from among a plurality of options stored in the controller 50. As the content of work assistance is presented by the controller 50, a work manager can recognize that the operator MP needs work assistance, and can recognize appropriate content as work assistance for the operator MP. Then, the work manager can execute work assistance for the operator MP at an appropriate timing.

Instead of a work manager executing work assistance, the controller 50 may execute work assistance. In this case, the controller 50 may execute preset specific work assistance, or may execute any work assistance selected according to magnitude of the impatience difference e from among a plurality of options. The content of work assistance may be adjusting workload of work that the operator MP is in charge of (increasing or decreasing workload), adjusting the number of members in a work team including the operator MP (increasing or decreasing the number of members in a work team), or adjusting a due date of work that the operator MP is in charge of (extending or shortening a due date).

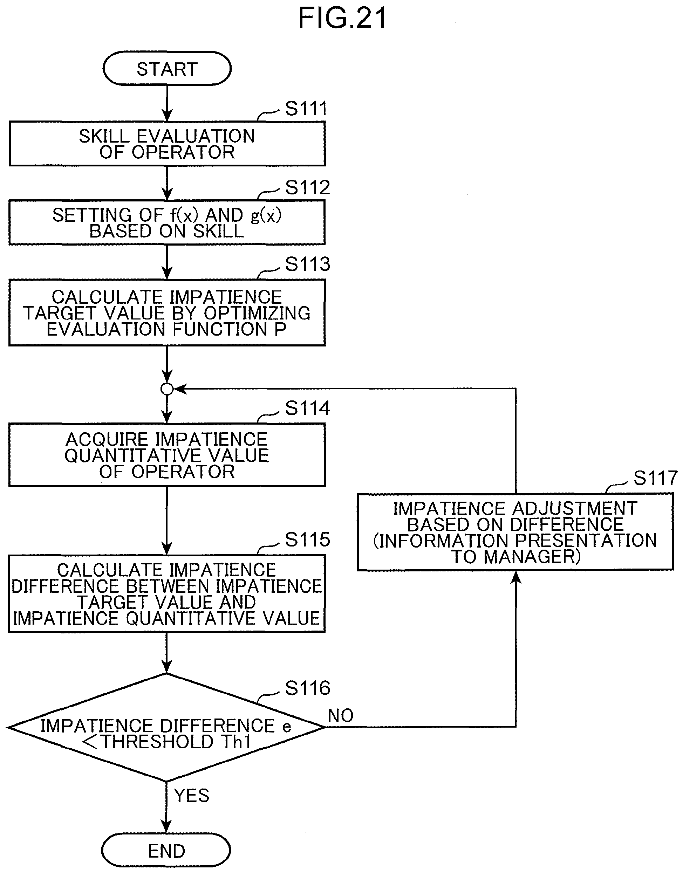

FIG. 21 is a flowchart illustrating another example of arithmetic processing performed by the controller 50. In Step S111, the controller 50 acquires work skill information that is information related to a work skill of the operator MP. This work skill information may be included in data related to past work stored in the database, for example, as illustrated in FIG. 14. Further, the work skill information may be acquired in real time when the operator MP is actually operating the construction machine 100. Further, a work skill of the operator MP may be evaluated based on, for example, at least one of fuel consumption and work time at the time of operation of the construction machine 100.

In Step S112, the controller 50 selects a function set corresponding to a level of a work skill of the operator MP from among a plurality of the function sets stored in the database, and sets the selected function set as a function set for the operator MP. The function set includes the function f(x) and the function g(x).

In Step S113, the controller 50 uses Equation (1), Equation (2), or Equation (3) to determine the impatience target value I at which the sum (P) is maximized, that is, the impatience target value I at which both work efficiency (productivity) and a comfort level of the operator MP can be appropriately achieved.

In Step S114, the controller 50 calculates an impatience quantitative value (psychological state quantitative value) obtained by quantifying actual degree of impatience of the operator MP at that time.

In Step S115, the controller 50 calculates the impatience difference e (impatience target value I - impatience quantitative value x) which is a difference between the impatience target value I and the impatience quantitative value x.

In Step S116, the controller 50 determines whether or not the impatience difference e is smaller than the preset first threshold Th1. In a case where the impatience difference e is smaller than the first threshold Th1 (YES in Step S116), the controller 50 suspends execution of work assistance. On the other hand, in a case where the impatience difference e is more than or equal to the first threshold Th1 (NO in Step S116), in Step S117, the controller 50 performs control for presenting to the work manager that work assistance for the operator MP is necessary. Specifically, the controller 50 transmits work assistance information, which is information related to work assistance, to the external display device 700 via the communication device, and causes the external display device 700 to display the work assistance information.

FIG. 22 is a flowchart illustrating still another example of the arithmetic processing performed by the controller 50. The flowchart of FIG. 22 may be performed, for example, after Step S105 of FIG. 20 or after Step S116 of FIG. 21. That is, in a case where the impatience difference e is more than or equal to the first threshold Th1 (NO in Step S105 in FIG. 20 or NO in Step S116 in FIG. 21), the controller 50 executes processing of Step S121 in FIG. 22.

In Step S121, the controller 50 determines whether or not an absolute value of the impatience difference e is smaller than a preset second threshold Th2. The second threshold Th2 is a value larger than the first threshold Th1.

In a case where an absolute value of the impatience difference e is smaller than the second threshold Th2 (YES in Step S121), in Step S122, the controller 50 determines whether or not the impatience difference e is a positive value. On the other hand, in a case where an absolute value of the impatience difference e is more than or equal to the second threshold Th2 (NO in Step S121), in Step S123, the controller 50 determines whether or not the impatience difference e is a positive value. Note that, in Steps S124 to S127 described below, it is assumed that degree of contribution of work assistance by adjustment of workload is smaller than degree of contribution of work assistance by adjustment of the number of members in a work team.

In a case where an absolute value of the impatience difference e is smaller than the second threshold Th2 and the impatience difference e is a positive value (YES in Step S121, YES in Step S122), the controller 50 performs processing in Step S124. In this case, the controller 50 determines to increase a target of workload (target workload) of the operator MP as content of work assistance (Step S124). In this case, the controller 50 may determine an increase amount of target workload according to magnitude of an absolute value of the impatience difference e. Specifically, the controller 50 may increase target workload such that an increase amount of target workload is larger when an absolute value of the impatience difference e is large than when an absolute value of the impatience difference e is small.

In a case where an absolute value of the impatience difference e is smaller than the second threshold Th2 and the impatience difference e is not a positive value (YES in Step S121, NO in Step S122), the controller 50 performs processing in Step S125. In this case, the controller 50 determines to decrease a target of workload (target workload) of the operator MP as content of work assistance (Step S125). In this case, the controller 50 may determine a decrease amount of target workload according to magnitude of an absolute value of the impatience difference e. Specifically, the controller 50 may decrease target workload such that a decrease amount of target workload is larger when an absolute value of the impatience difference e is large than when an absolute value of the impatience difference e is small.

In a case where an absolute value of the impatience difference e is more than or equal to the second threshold Th2 and the impatience difference e is a positive value (NO in Step S121, YES in Step S123), the controller 50 performs processing in Step S126. In this case, the controller 50 determines to decrease the number of members in a work team including the operator MP as content of work assistance (Step S126). In this case, the controller 50 may determine a decrease amount of the number of members according to magnitude of an absolute value of the impatience difference e. Specifically, the controller 50 may decrease the number of members such that a decrease amount of the number of members is larger when an absolute value of the impatience difference e is large than when an absolute value of the impatience difference e is small.

In a case where an absolute value of the impatience difference e is more than or equal to the second threshold Th2 and the impatience difference e is not a positive value (NO in Step S121, NO in Step S122), the controller 50 performs processing in Step S127. In this case, the controller 50 determines to increase the number of members in a work team including the operator MP as content of work assistance (Step S127). In this case, the controller 50 may determine an increase amount of the number of members according to magnitude of an absolute value of the impatience difference e. Specifically, the controller 50 may increase the number of members such that an increase amount of the number of members is larger when an absolute value of the impatience difference e is large than when an absolute value of the impatience difference e is small.

In Step S128, the controller 50 may perform control for presenting determined content of work assistance to a work manager. Specifically, the controller 50 may transmit determined content of work assistance to the external display device 700 via a communication device and cause the external display device 700 to display the content of work assistance.

Note that in FIG. 22, adjustment of workload and adjustment of the number of members in a work team are exemplified as content of work assistance; however, content of the work assistance may include extension or shortening of a due date of the target work, may include a change in a characteristic of the construction machine 100 operated by the operator MP, and may include other contents.

### [Second aspect]

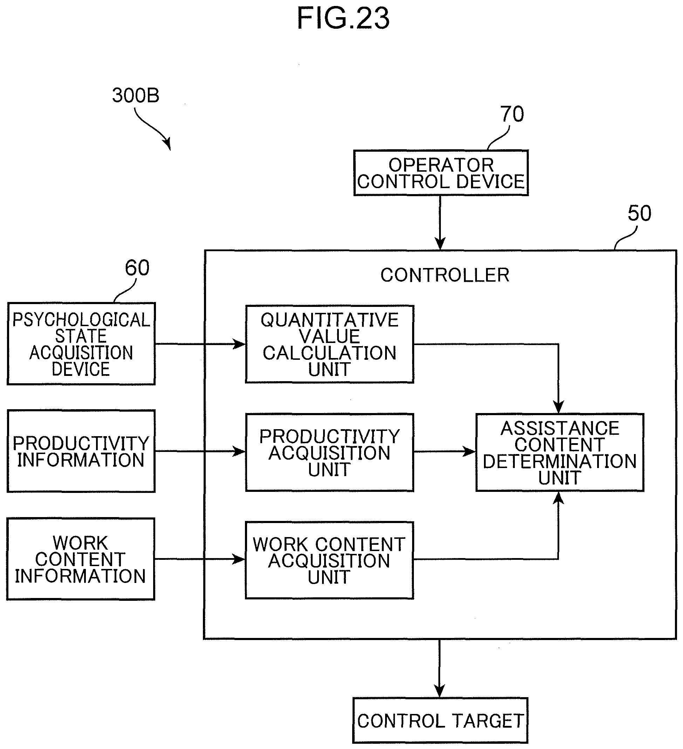

FIG. 23 is a block diagram illustrating the work assistance system 300B according to the second aspect.

The work assistance system 300B illustrated in FIG. 23 includes a controller 50. The controller 50 includes a quantitative value calculation unit, a productivity acquisition unit, a work content acquisition unit, and an assistance content determination unit. Each of the quantitative value calculation unit, the productivity acquisition unit, the work content acquisition unit, and the assistance content determination unit is implemented by the arithmetic processing device executing a control program stored in the memory in the controller 50. The quantitative value calculation unit, the productivity acquisition unit, the work content acquisition unit, and the assistance content determination unit are examples of the command content determination unit in the work assistance system 300 illustrated in FIG. 1.

The quantitative value calculation unit calculates a psychological state quantitative value that is a value obtained by quantifying a psychological state of the operator MP based on the psychological state information.

The productivity acquisition unit acquires information (productivity information) related to productivity of work at the time of operation of the construction machine 100.

The work content acquisition unit acquires information (work content information) related to work content by the construction machine 100.

The assistance content determination unit determines content of work assistance for improving a psychological state of the operator MP at the time of operating the construction machine 100 by using the psychological state quantitative value and the productivity.

In the work assistance system 300B, the psychological state information may be information correlated with a psychological state of the operator MP at the time of operating the construction machine 100.

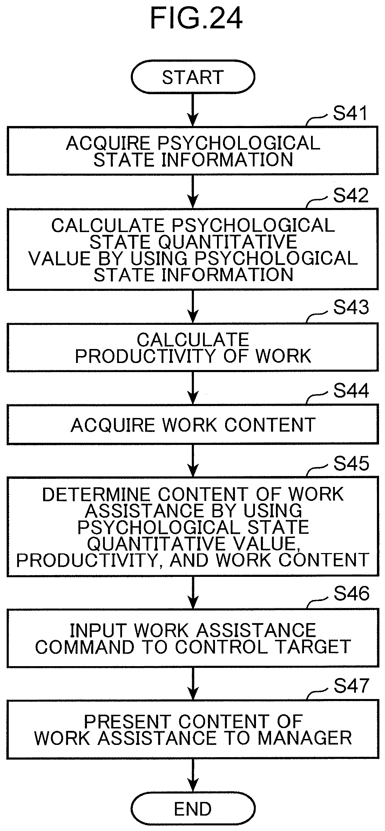

FIG. 24 is a flowchart illustrating an example of arithmetic processing performed by the controller 50 of the work assistance system 300B according to the second aspect.

The controller 50 acquires psychological state information related to a psychological state of the operator MP output by the psychological state acquisition device 60 (Step S41).

The controller 50 calculates a psychological state quantitative value by using the acquired psychological state information (Step S42).

The controller 50 calculates productivity of work at the time of operation of the construction machine 100 (Step S43).

The controller 50 acquires work contents by the construction machine 100 (Step S44).

The controller 50 determines content of work assistance by using the calculated psychological state quantitative value, the calculated productivity, and the acquired work content (Step S45).

The controller 50 inputs a work assistance command, which is a command corresponding to the determined content of work assistance, to the control target (Step S46). The work assistance command is an example of the psychological state improvement command.

The control target performs an operation corresponding to the work assistance command input from the controller 50, that is, an operation corresponding to the determined content of work assistance. By this, a psychological state of the operator MP in work using the construction machine 100 may be improved.

The controller 50 presents content of work assistance to a work manager (Step S47). The content of work assistance presented to a work manager may be at least one of content of work assistance executed by the controller 50 and content of work assistance to be executed by the work manager.

The controller 50 repeats the processing of Steps S41 to S47 during activation of the system.

Next, a modification example of the second aspect will be described. In the work assistance system 300B according to the following modification example, a psychological state of the operator MP acquired by the controller 50 from the psychological state acquisition device 60 is impatience (degree of impatience) of the operator MP at the time of operating the construction machine 100, and a psychological state quantitative value calculated by the quantitative value calculation unit of the controller 50 is a value (impatience quantitative value) obtained by quantifying degree of impatience of the operator MP. In the work assistance system 300B according to this modification example, the quantitative value calculation unit calculates an impatience quantitative value as a psychological state quantitative value, the productivity acquisition unit acquires productivity of work at the time of operation of the construction machine 100, the work content acquisition unit acquires work content by the construction machine 100, and the assistance content determination unit determines content of work assistance by using the impatience quantitative value and the productivity.

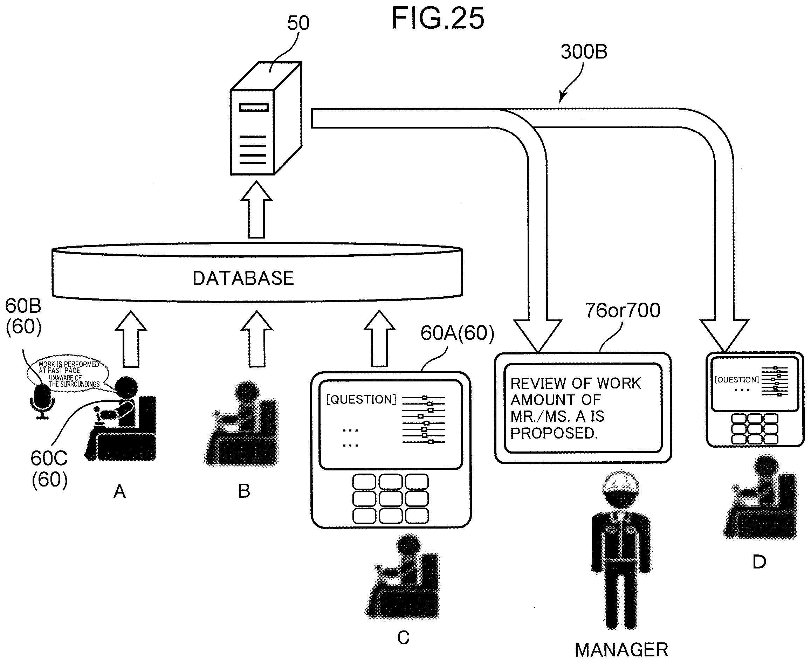

FIG. 25 is a diagram illustrating the work assistance system 300B according to a modification example of the second aspect. In the work assistance system 300B illustrated in FIG. 25, the controller 50 can acquire a psychological state (degree of impatience) of the operator MP from the psychological state acquisition device 60, similarly to the first aspect. Similarly to the first aspect, the psychological state acquisition device 60 may be the psychological state input receiver 60A, may be the sound collector 60B, may be the biological information sensor 60C, or may be another psychological state acquisition device.

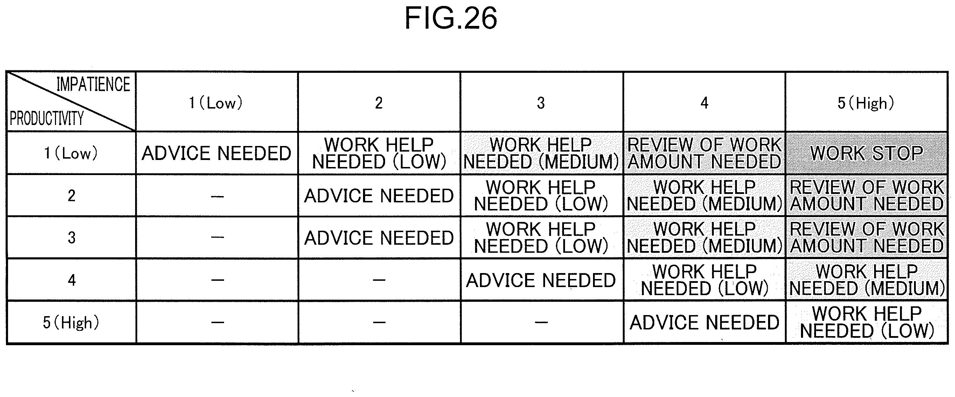

The controller 50 (the quantitative value calculation unit) calculates an impatience quantitative value (psychological state quantitative value) based on a psychological state (degree of impatience) of the operator MP acquired from the psychological state acquisition device 60. The impatience quantitative value may be, for example, any of a plurality of levels as illustrated in FIG. 26 to be described later.

The controller 50 (the work content acquisition unit) may determine work content based on, for example, an operation (operation input) received by the operator input device 72 of the operator control device 70. Examples of work content include excavation work, lifting and slewing work, soil removal work, leveling work, and the like, but the work content is not limited to these specific examples. The excavation work is work of excavating the ground by using the bucket 6A of the work device 3. The lifting and slewing work is work of moving the bucket 6A holding excavated earth and sand directly above a movement destination such as a bed of a truck. The soil removal work is work of discharging earth and sand from the bucket 6A at a movement destination. The leveling work is work of leveling the ground by using the bucket 6A. In each of a plurality of these work contents, since the operator MP gives a specific operation to the operator input device 72 of the operator control device 70, the controller 50 can determine work content based on an operation (operation input) received by the operator input device 72 of the operator control device 70. The information related to the operation input is an example of the work content information.

Further, the controller 50 may determine work content based on operation data of the construction machine 100. Further, in a case where a work-related person such as the operator MP or a work manager performs input for identifying work content on a predetermined input device, the controller 50 may determine work content based on the input. The operation data may include information on an operation of the construction machine 100 accompanying that the operator input device 72 receives an operation performed by the operator MP. For example, the operation data may include information on a slewing operation of the upper slewing body 2 with respect to the lower travelling body 1, or may include information on an operation of the work device 3. Specifically, the operation data may include information on an operation of at least one of the boom 4, the arm 5, and the tip attachment 6, and may include information on extension and retraction operations of at least one of a plurality of cylinders that drives the boom 4, the arm 5, and the tip attachment 6. The operation data may include an image of a work site captured by a camera that is mounted on the construction machine 100 and captures an image of a work site and/or a camera that is installed at a work site and captures an image of the work site including the construction machine 100. The controller 50 may analyze an image of the work site to determine work content. Each of the operation data and the input is an example of the work content information.

For example, the controller 50 (the productivity acquisition unit) may calculate a workload per unit time by using information related to workload performance and information related to work time required for the work. The workload per unit time is an example of productivity of work. By this, the controller 50 can acquire productivity of work. The information related to workload performance and the information related to work time are examples of the productivity information. Further, the controller 50 may calculate productivity of work based on, for example, a progress status of work. Information related to a progress status of work is an example of the productivity information.

The controller 50 can acquire workload of work as follows, for example. In a case where work content is excavation work, workload may be an excavated soil amount. In a case where the construction machine 100 includes a measurement device capable of measuring a soil amount, the controller 50 can determine a soil amount (workload) based on data input from the measurement device. Further, in a case where a measurement device capable of measuring a soil amount is provided at a movement destination such as a bed of a truck, the controller 50 can determine a soil amount (workload) based on data input from the measurement device. Further, workload may be a value input to a predetermined input device by a work-related person such as the operator MP or a work manager.

The controller 50 can acquire a progress status of work as follows, for example. In a case where a work-related person such as the operator MP or a work manager inputs progress status data related to a progress status of work to a predetermined input device, the controller 50 can acquire a progress status of work based on the progress status data.

Data related to an impatience quantitative value (psychological state quantitative value), productivity of work, and work content may be stored in a storage device such as the database.

The assistance content determination unit of the controller 50 may perform determination of content of work assistance using the impatience quantitative value and the productivity, for example, as follows.

FIG. 26 is a diagram illustrating an example of a map in which content of various types of work assistance are associated with degree of impatience and productivity. The map may be preset and stored in the database. Further, this map may be generated by the controller 50 based on, for example, data related to an impatience quantitative value, work productivity, and work content stored in the database. In the database, a map as illustrated in FIG. 26 may be individually stored for each of a plurality of preset work contents. That is, a map suitable for each of a plurality of work contents may be preset.

In the map illustrated in FIG. 26, a plurality of levels are set for degree of impatience of the operator MP. Specifically, degree of impatience is quantified into five levels from Level 1 at which degree of impatience is lowest to Level 5 at which degree of impatience is highest. Further, in the map illustrated in FIG. 26, a plurality of levels are set for productivity. Specifically, productivity is quantified into five levels from Level 1 at which productivity is lowest to Level 5 at which productivity is highest.

In the map illustrated in FIG. 26, content of work assistance is preset for each of 25 combinations obtained from five levels of degree of impatience and five levels of productivity. In the specific example illustrated in FIG. 26, contents of work assistance include six contents of "no work assistance", "advice", "low-level work assistance", "mid-level work assistance", "review of workload", and "work stop". The "work stop" is content having the highest degree of assistance (Assistance Level 5: maximum assistance level), and is work assistance for stopping work being performed by the operator MP, and is denoted as "WORK STOP" in FIG. 26. "Review of workload" is content at the next highest level in degree of assistance (Assistance Level 4) after "work stop", and is, for example, work assistance to decrease a target of workload for work that the operator MP is in charge of, and in FIG. 26, the content is denoted as "REVIEW OF WORK AMOUNT NEEDED". The "mid-level work assistance" is content at the next highest level in degree of assistance (Assistance Level 3) after "review of workload", and is denoted as "WORK HELP NEEDED (MEDIUM)" in FIG. 26. The "low-level work assistance" is content at the next highest level in degree of assistance (Assistance Level 2) after "mid-level work assistance", and is denoted as "WORK HELP NEEDED (LOW)" in FIG. 26. The "advice" is content at the next highest level in degree of assistance (Assistance Level 1) after "low-level work assistance", and is work assistance of providing advice for work to the operator MP. "No work assistance" is content of the lowest degree of assistance (Assistance Level 0). "No work assistance" is a content of work assistance in a case where work assistance for the operator MP is unnecessary, and is denoted as "-" in FIG. 26.

The controller 50 may determine any level according to the psychological state information from a plurality of levels (for example, five levels illustrated in FIG. 26) related to degree of impatience as an impatience quantitative value, determine any level according to the productivity information from a plurality of levels (for example, five levels illustrated in FIG. 26) related to productivity as productivity, and determine content of work assistance based on the determined impatience quantitative value and productivity, and the map illustrated in FIG. 26.

In the work assistance system 300B according to the second aspect, the assistance content determination unit of the controller 50 may determine content of work assistance in consideration of not only the impatience quantitative value and the productivity but also a difficulty level of work. That is, the controller 50 may determine content of work assistance based on the impatience quantitative value, the productivity, and a difficulty level of work.

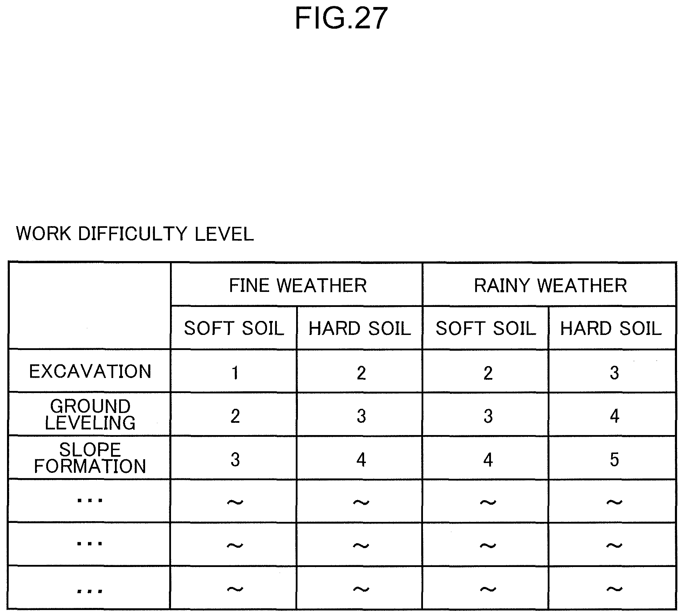

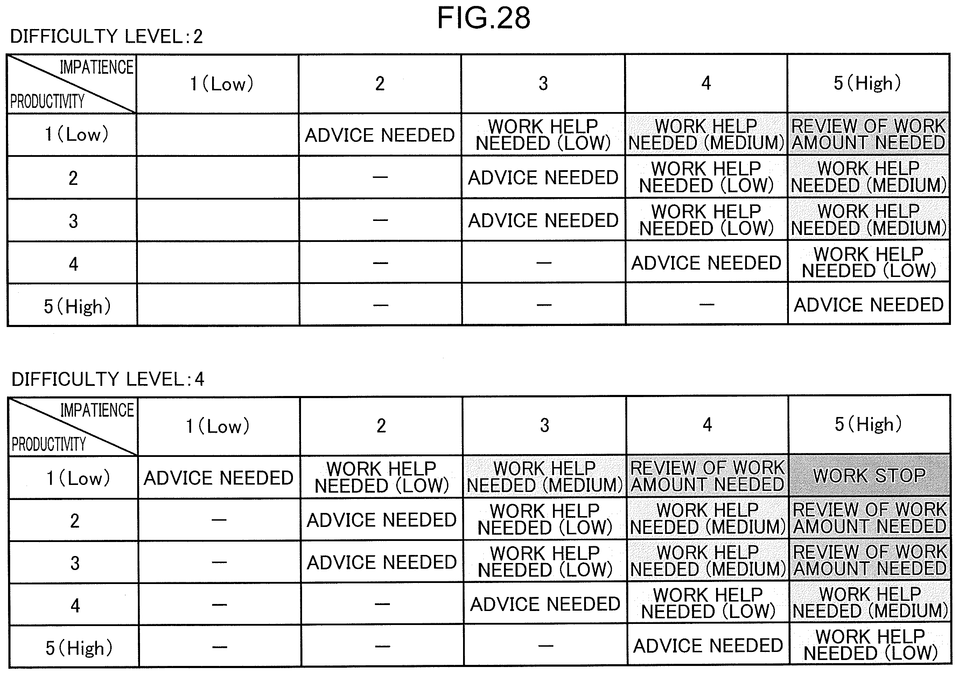

FIG. 27 is a diagram illustrating an example of a map used by the controller 50 to set a difficulty level of work. FIG. 28 is a diagram illustrating two maps in which content of various types of work assistance are associated with degree of impatience and productivity. The upper map in FIG. 28 is a map used in a case where a difficulty level of work is "Difficulty Level 2", and the lower map in FIG. 28 is a map used in a case where a difficulty level of work is "Difficulty Level 4". In a case where difficulty levels of work are set to, for example, five levels from Difficulty Level 1 to Difficulty Level 5, in addition to the two maps illustrated in FIG. 28, maps (not illustrated) used in cases of "Difficulty Level 1", "Difficulty Level 3", and "Difficulty Level 5" are also preset.

As illustrated in FIG. 27, a difficulty level of work is affected by, for example, weather when the work is performed. Specifically, a difficulty level of work in rainy weather tends to be higher than a difficulty level of work in fine weather. Further, a difficulty level of work is affected by, for example, hardness of the ground of a work site. A difficulty level of work in a case where the ground is composed of hard soil tends to be higher than a difficulty level of work in a case where the ground is composed of soft soil. Further, a difficulty level of work is also affected by work content. In the specific example illustrated in FIG. 27, a difficulty level is preset for each of a plurality of tasks of work including excavation work, ground leveling work, and slope forming work.

The controller 50 acquires difficulty level information that is information for determining a difficulty level of work. The difficulty level information includes, for example, information such as weather, ground hardness, and work content. The controller 50 may determine work content by the above-described method. Further, the controller 50 may determine weather and hardness of the ground based on, for example, information related to weather and information related to hardness of the ground input to an input device. Then, the controller 50 may determine a difficulty level of work based on the acquired difficulty level information and, for example, the map illustrated in FIG. 27.

The controller 50 may select a map corresponding to the determined difficulty level from a plurality of maps including two maps of FIG. 28, and determine content of work assistance based on the selected map, the impatience quantitative value, and the productivity.

In the work assistance system 300B according to the second aspect, the assistance content determination unit of the controller 50 may determine content of work assistance in consideration of not only the impatience quantitative value, the productivity, and the difficulty level of work but also a work skill of the operator MP. That is, the controller 50 may determine content of work assistance based on the impatience quantitative value, the productivity, the difficulty level of work, and the work skill. However, in this modification example, the controller 50 may determine content of work assistance based on the impatience quantitative value, the productivity, and the work skill without using a difficulty level of work.

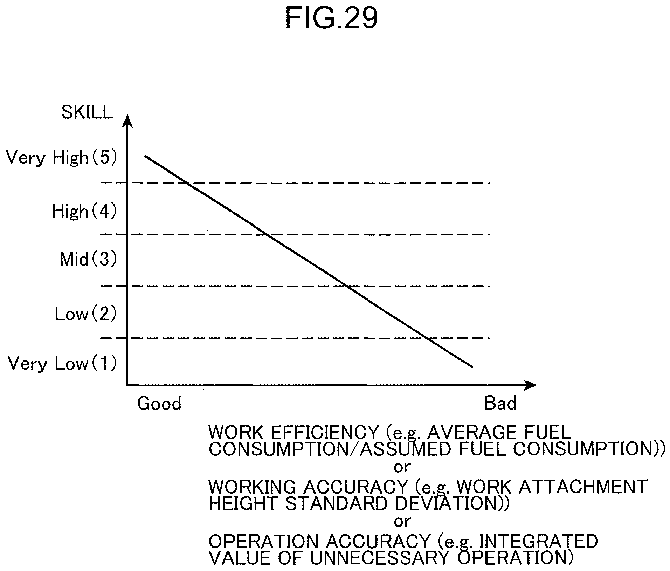

FIG. 29 is a diagram illustrating an example of a map used to set a work skill of the operator MP. In the map illustrated in FIG. 29, the horizontal axis of the graph indicates a level of a work skill parameter correlated with a work skill, and the vertical axis of the graph indicates a level of a work skill. The map illustrated in FIG. 29 illustrates a relationship in which a level of a work skill decreases as a level of a work skill parameter decreases. In this map, work skills are divided into five levels from Skill Level 1 (lowest level) to Skill Level 5 (highest level). The controller 50 can determine a work skill (skill level) of the operator MP by using a value of a work skill parameter of the operator MP and the map illustrated in FIG. 29.

The work skill parameter may be, for example, efficiency of work performed by the operator MP, accuracy of work performed by the operator MP, or accuracy of operation by the operator MP provided to the operator input device 72. The work efficiency may be, for example, a ratio of actual fuel consumption to assumed fuel consumption assumed in advance in a specific task (work efficiency = actual fuel consumption/assumed fuel consumption). The actual fuel consumption may be an average fuel consumption which is an average value of actual fuel consumption. The accuracy of work may be a standard deviation of a height of the tip attachment 6 in work. The controller 50 can determine a height of the tip attachment 6 based on, for example, information on a posture of the work device 3. The controller 50 can determine a posture of the work device 3 based on, for example, a detection result input from a posture detector (not illustrated) to the controller 50. The accuracy of operation may be an integrated value of time during which an unnecessary operation is performed in a specific task.

In a case where a plurality of maps (for example, five maps) corresponding to a plurality of skill levels (for example, five skill levels) are preset, the controller 50 may determine content of work assistance as follows. Note that each of a plurality of the maps is a map in which the impatience quantitative value, the productivity, and the content of work assistance are associated with each other. The controller 50 may select a map corresponding to the acquired work skill parameter (or work skill) from a plurality of the maps, and determine content of work assistance based on the selected map, the impatience quantitative value, and the productivity.

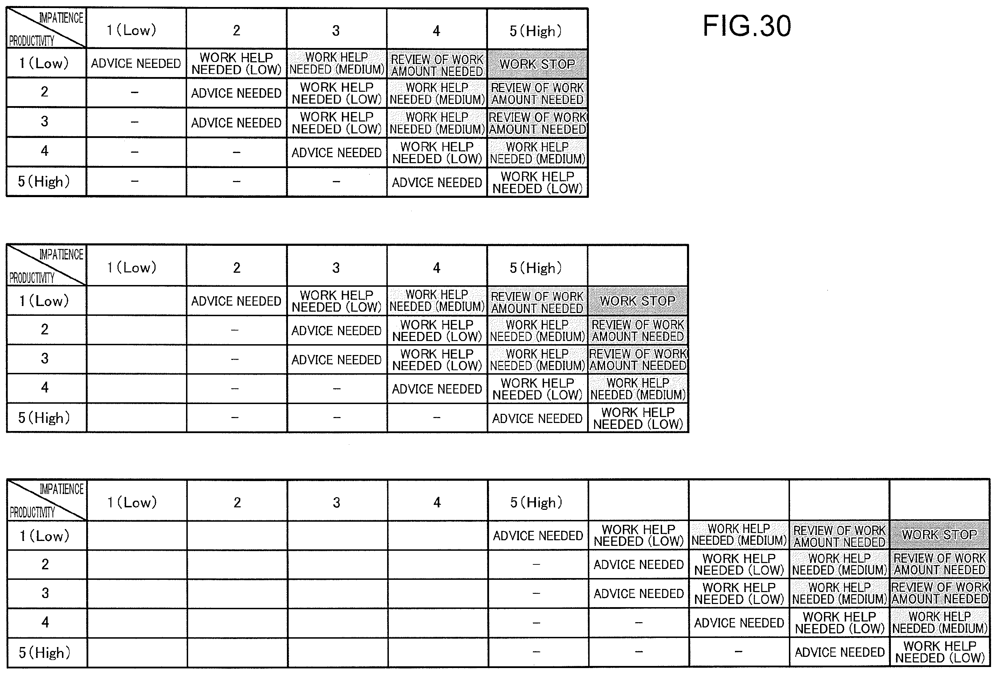

Further, in a case where a map as illustrated in FIG. 26 is preset, this map is set to, for example, a map corresponding to Skill Level 1 as illustrated in FIG. 30 (an uppermost map in FIG. 30), and in a case where a work skill of the operator MP is Skill Level 2, a new map (a center map in FIG. 30) generated by sliding all 25 squares of the map illustrated in FIG. 26 to the right by one grid may be used as, for example, a map corresponding to Skill Level 2. Similarly, in a case where a work skill of the operator MP is at Skill Level 3, a new map (not illustrated) generated by sliding all 25 squares in the map illustrated in FIG. 26 to the right by two grids may be used as a map corresponding to Skill Level 3, for example, and in a case where a work skill of the operator MP is at Skill Level 4, a new map (not illustrated) generated by sliding all 25 squares in the map illustrated in FIG. 26 to the right by three grids may be used as a map corresponding to Skill Level 4, for example. Similarly, in a case where a work skill of the operator MP is at Skill Level 5, a new map (a lowermost map in FIG. 30) generated by sliding all 25 squares in the map illustrated in FIG. 26 to the right by four grids may be used as a map corresponding to Skill Level 5, for example.

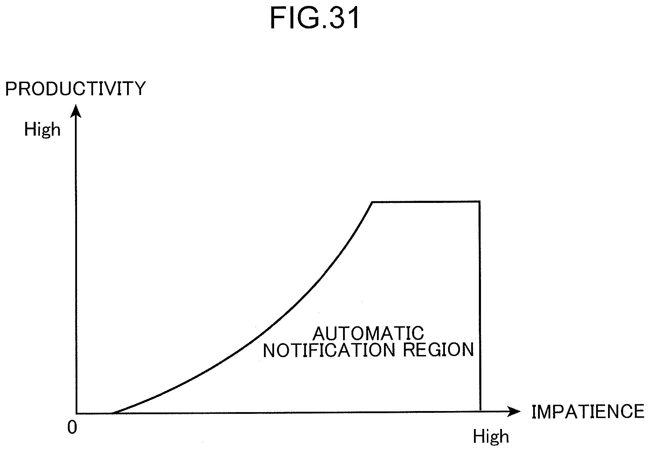

The controller 50 may be configured to automatically present content of the work assistance to a work manager in a case where an impatience quantitative value and productivity satisfy a preset condition. FIG. 31 is a diagram illustrating an example of a map that can be used by the controller 50 to determine whether or not to automatically notify a work-related person such as a work manager of content of work assistance by using degree of impatience and productivity of the operator MP at the time of operating the construction machine 100.

The map illustrated in FIG. 31 includes an automatic notification region divided by degree of impatience and productivity. The automatic notification region is preset so that a work-related person is automatically notified of content of work assistance in a case where degree of impatience is high and productivity is low. That is, the automatic notification region is preset so that a work-related person is automatically notified of content of work assistance in a case where an impatience quantitative value is large and productivity is low. In this case, in a case where a condition (preset condition) that an impatience quantitative value and productivity are included in the automatic notification region is satisfied, the controller 50 automatically presents content of the work assistance to a work manager. On the other hand, in a case where at least one of an impatience quantitative value and productivity is not included in the automatic notification region, that is, in a case where the condition is not satisfied, the controller 50 does not present content of the work assistance to a work manager.

Note that the controller 50 may change the automatic notification region according to a difficulty level of work, or may change the automatic notification region according to a work skill (skill level) of the operator MP. Further, the automatic notification region may be set by a work-related person such as a work manager.

### [Third aspect]

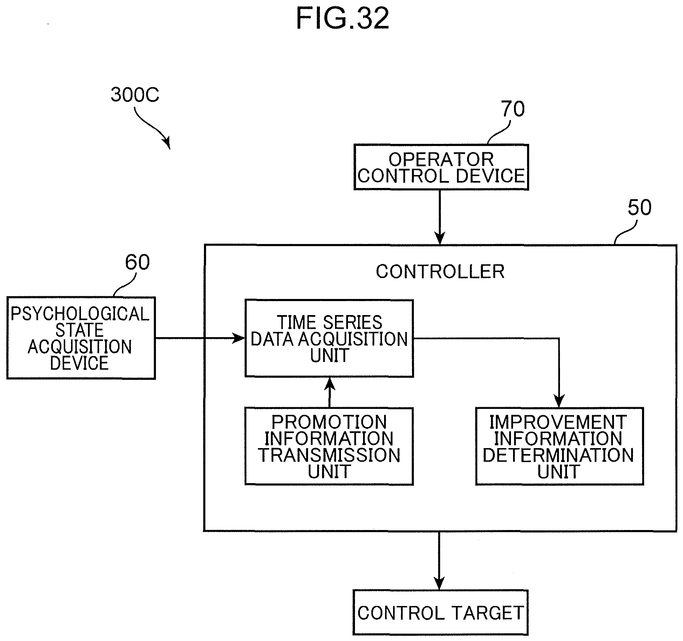

FIG. 32 is a block diagram illustrating the work assistance system 300C according to the third aspect.

The work assistance system 300C illustrated in FIG. 32 includes a controller 50. The controller 50 includes a time series data acquisition unit, a promotion information transmission unit, and an improvement information determination unit. Each of the time series data acquisition unit, the promotion information transmission unit, and the improvement information determination unit is implemented by the arithmetic processing device executing a control program stored in the memory in the controller 50. The time series data acquisition unit, the promotion information transmission unit, and the improvement information determination unit are examples of the command content determination unit in the work assistance system 300 illustrated in FIG. 1. The promotion information transmission unit is an example of the incidental situation management unit in the work assistance system 300CD illustrated in FIG. 6. The improvement information determination unit is an example of the control content determination unit in the work assistance system 300CD illustrated in FIG. 6.

The time series data acquisition unit acquires psychological state time series data that is data related to a time series change of the psychological state based on the psychological state information that is information correlated with a psychological state of the operator MP at at least one of the time of operating the construction machine 100 and the time of operating the simulator 200.

The promotion information transmission unit transmits change promotion information which is information for promoting a change in a psychological state to the operator MP at at least one of the time of operating the construction machine 100 and the time of operating the simulator 200.

The improvement information determination unit determines content of improvement information (teaching content as work assistance) which is information transmitted for improving a psychological state of the operator MP at the time of operating (at the time of operating the construction machine 100 or at the time of operating the simulator 200) by using data related to a change in the psychological state before and after transmission of the change promotion information.

In the work assistance system 300C according to the third aspect, the psychological state information may be information correlated with a psychological state of the operator MP at the time of operating the construction machine 100, or may be information correlated with a psychological state of the operator MP at the time of operating the simulator 200.

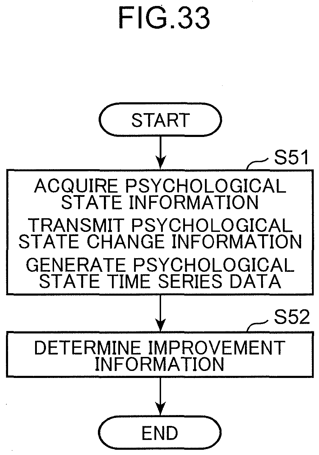

FIG. 33 is a flowchart illustrating an example of arithmetic processing performed by the controller 50 of the work assistance system 300C according to the third aspect.

The controller 50 sequentially acquires the psychological state information related to a psychological state of the operator MP input from the psychological state acquisition device 60 in time series at the time of operating the simulator 200. Further, in parallel with acquisition of the psychological state information in time series, the controller 50 transmits change promotion information for promoting a change in a psychological state to the operator MP. The controller 50 can acquire the psychological state time series data, which is data related to a time series change of the psychological state, by storing psychological state information acquired in time series and a transmission timing of change promotion information in association with each other (Step S51).

The controller 50 determines content (teaching content) of improvement information by using data related to a change in the psychological state before and after transmission of the change promotion information (Step S52).

The controller 50 repeats the processing of Steps S51 to S52 during activation of the system.

The controller 50 may present content of the determined improvement information (teaching content) to a work manager.

The controller 50 inputs a psychological state improvement command to the control target so that the improvement information is transmitted at an appropriate timing in work in which the operator MP actually operates the construction machine 100 (actual machine). The control target performs an operation according to the psychological state improvement command input from the controller 50. By this, a psychological state of the operator MP in work using the construction machine 100 is improved.

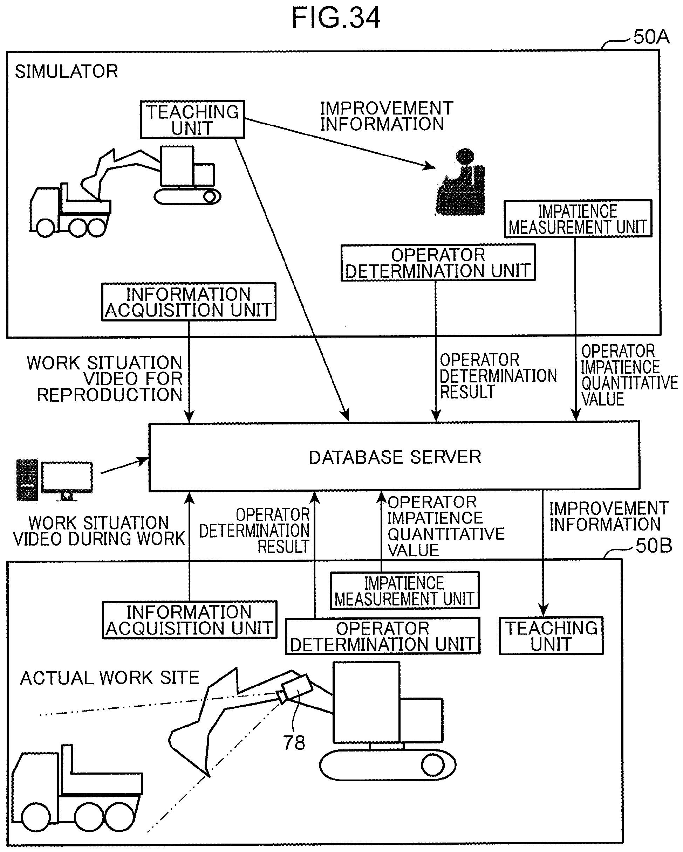

Next, a modification example of the third aspect will be described. FIG. 34 is a diagram illustrating the work assistance system 300C according to a modification example of the third aspect. In the work assistance system 300C according to the modification example illustrated in FIG. 34, the controller 50 includes a simulator side controller unit 50A and a machine side controller unit 50B. The simulator side controller unit 50A may be mounted on the simulator 200 (see FIG. 2) or may be arranged in a place different from the simulator 200. The machine side controller unit 50B may be mounted on the construction machine 100. In a case where the construction machine 100 is remotely controlled, the machine side controller unit 50B may be arranged at a remote place away from the construction machine 100.

The simulator side controller unit 50A includes a first time series data acquisition unit (impatience measurement unit), a first promotion information transmission unit (teaching unit), a first improvement information determination unit (not illustrated), a first operator determination unit, and a first information acquisition unit (work content acquisition unit). The machine side controller unit 50B may include a second time series data acquisition unit (impatience measurement unit), a second promotion information transmission unit (teaching unit), a second improvement information determination unit (not illustrated), a second operator determination unit, and a second information acquisition unit (work content acquisition unit).

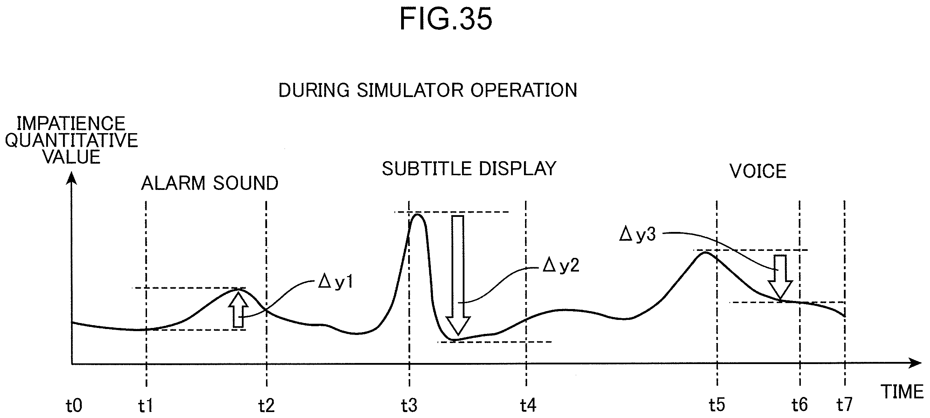

The first time series data acquisition unit acquires psychological state time series data that is data related to a time series change of the psychological state based on the psychological state information that is information correlated with a psychological state of the operator MP at the time of operating the simulator 200. FIG. 35 is a diagram illustrating an example of psychological state time series data. FIG. 35 will be described later. Further, in parallel with acquisition of psychological state time series data by the first time series data acquisition unit, a first incidental situation acquisition unit (not illustrated) may acquire incidental situation time series data that is data related to a time series change in an incidental situation at the time of operation of the simulator 200. However, in the third aspect, at least psychological state time series data only needs to be acquired by the first time series data acquisition unit, and incidental situation time series data does not need to be acquired by the incidental situation acquisition unit. In the third aspect, in the simulator side controller unit 50A, the first incidental situation acquisition unit is not an essential configuration and can be omitted.

The second time series data acquisition unit acquires psychological state time series data that is data related to a time series change of the psychological state based on the psychological state information that is information correlated with a psychological state of the operator MP at the time of operating the construction machine 100. Further, in parallel with acquisition of the psychological state time series data by the second time series data acquisition unit, a second incidental situation acquisition unit (not illustrated) may acquire incidental situation time series data that is data related to a time series change in an incidental situation at the time of operation of the construction machine 100. This incidental situation time series data may include, for example, a detection result input from an incidental situation detector 78 to the controller 50. The incidental situation detector 78 may be an image detection device such as a camera that acquires an image of an actual work site where the construction machine 100 is arranged. However, in the third aspect, at least psychological state time series data only needs to be acquired by the second time series data acquisition unit, and incidental situation time series data does not need to be acquired by the second incidental situation acquisition unit. In the third aspect, in the machine side controller unit 50B, the second incidental situation acquisition unit is not an essential configuration and can be omitted.

The first promotion information transmission unit controls an operation of a transmitter so that change promotion information, which is information for promoting a change in a psychological state, is transmitted to the operator MP at the time of operating the simulator 200. The psychological state time series data illustrated in FIG. 35 includes data related to a change in a psychological state before and after transmission of change promotion information.

The second promotion information transmission unit may control an operation of a transmitter such that change promotion information, which is information for promoting a change in a psychological state, is transmitted to the operator MP at the time of operating the construction machine 100.

The transmitter may be a part of the simulator 200 or a part of the construction machine 100. The transmitter may be the notification device or another device capable of transmitting change promotion information.

The first improvement information determination unit may determine content (teaching content) of improvement information by using data related to a change in the psychological state before and after transmission of the change promotion information at the time of operation of the simulator 200. The improvement information is information transmitted to improve a psychological state of the operator MP at the time of operating the construction machine 100.

In a case where the first improvement information determination unit determines content (teaching content) of improvement information, the controller 50 controls the control target such that the improvement information determined by the first improvement information determination unit at the time of operation of the simulator 200, that is, optimal teaching content for the operator MP is transmitted to the operator MP when the operator MP is actually operating the construction machine 100. In this case, the control target may be, for example, the notification device. The notification device may include the first display device 73 and the acoustic device 74. The notification device may be arranged in the cab 7.

The second improvement information determination unit may determine content (teaching content) of improvement information by using data related to a change in the psychological state before and after transmission of the change promotion information at the time of operation of the construction machine 100. The improvement information is information transmitted to improve a psychological state of the operator MP at the time of operating the construction machine 100.

In a case where the second improvement information determination unit determines content (teaching content) of improvement information, the controller 50 may control the control target such that the improvement information determined by the second improvement information determination unit at the time of operation of the construction machine 100, that is, optimal teaching content for the operator MP is transmitted to the operator MP when the operator MP is actually operating the construction machine 100.

Note that a timing at which the change promotion information is transmitted is not particularly limited. The controller 50 may control an operation of the transmitter so that the change promotion information is transmitted according to a change in an impatience quantitative value. Specifically, for example, the controller 50 may control an operation of the transmitter so that the change promotion information is transmitted when an impatience quantitative value is equal to or more than a predetermined threshold. Further, the controller 50 may control an operation of the transmitter such that the change promotion information is transmitted by using, as a trigger, that an impatience quantitative value increases and reaches a peak. Further, the controller 50 may control an operation of the transmitter so that the change promotion information is transmitted when an increase amount per unit time of an impatience quantitative value is equal to or more than a predetermined threshold. Further, the controller 50 may control an operation of the transmitter so that the change promotion information is randomly transmitted.

Further, the controller 50 may perform control for presenting information related to work assistance including determined improvement information to a work-related person such as a work manager.

The first operator determination unit determines and identifies the operator MP who operates the simulator 200. The second operator determination unit determines and identifies the operator MP who operates the construction machine 100. Each of the first operator determination unit and the second operator determination unit may determine and identify the operator MP, for example, based on identification information of the operator MP input to a predetermined input device. Each of the first operator determination unit and the second operator determination unit may determine and identify the operator MP, for example, based on image information for authenticating the operator MP.

Each of the first information acquisition unit and the second information acquisition unit may acquire information related to work content. Specifically, the above is performed as follows.

The first information acquisition unit acquires information (work content information) related to work content by the simulator 200. The work content information may include, for example, information related to an operation (operation input) received by the operator input device 72 of the operator control device 70. In this case, the first information acquisition unit may determine work content based on information related to an operation (operation input) received by the operator input device 72 of the operator control device 70. Further, the work content information may include, for example, operation data of the simulator 200. In this case, the first information acquisition unit may determine work content based on, for example, operation data of the construction machine model 100a in a virtual space of the simulator 200. The operation data may include operation information of the construction machine model 100a accompanying that the operator input device 72 receives an operation performed by the operator MP. The first information acquisition unit may determine work content by analyzing an image (for example, an image of the work site model 400a, the construction machine model 100a, or the like) displayed on the first display device 73 and/or the second display device 76. Further, in a case where a work-related person such as the operator MP or a work manager performs input for identifying work content to a predetermined input device, the work content information may include information input to the input device. In this case, the first information acquisition unit may determine work content based on information input to the input device.

The second information acquisition unit acquires information (work content information) related to work content by the construction machine 100. The work content information may include, for example, information related to an operation (operation input) received by the operator input device 72 of the operator control device 70. In this case, the second information acquisition unit may determine work content based on information related to an operation (operation input) received by the operator input device 72 of the operator control device 70. Further, the work content information may include, for example, operation data of the construction machine 100. In this case, the second information acquisition unit may determine work content based on operation data of the construction machine 100. The operation data may include information on an operation of the construction machine 100 accompanying that the operator input device 72 receives an operation performed by the operator MP. For example, the operation data may include information on a slewing operation of the upper slewing body 2 with respect to the lower travelling body 1, or may include information on an operation of the work device 3. Specifically, the operation data may include information on an operation of at least one of the boom 4, the arm 5, and the tip attachment 6, and may include information on extension and retraction operations of at least one of a plurality of cylinders that drives the boom 4, the arm 5, and the tip attachment 6. The operation data may include an image of a work site captured by a camera that is mounted on the construction machine 100 and captures an image of a work site and/or a camera that is installed at a work site and captures an image of the work site including the construction machine 100. The image of a work site may be an image displayed on the first display device 73 and/or the second display device 76. The second information acquisition unit may analyze an image of a work site to determine work content. Further, in a case where a work-related person such as the operator MP or a work manager performs input for identifying work content to a predetermined input device, the work content information may include information input to the input device. In this case, the second information acquisition unit may determine work content based on information input to the input device.

Next, a flow of work assistance using the work assistance system 300C according to the third aspect will be described by using some Specific Examples 1 to 4. Hereinafter, a case where content (teaching content) of improvement information is determined at the time of operation of the simulator 200 by the operator MP will be described as an example.

### [Specific Example 1]

### (Determination of content of improvement information)

At the time of operation of the simulator 200 by the operator MP, the controller 50 transmits the change promotion information to the operator MP in parallel with acquisition of the psychological state information in time series. The controller 50 acquires the psychological state time series data by storing psychological state information acquired in time series and a transmission timing of change promotion information in association with each other. The controller 50 determines optimal teaching content (content of improvement information) for the operator MP by using data related to a change in the psychological state before and after transmission of the change promotion information.

### (Transmission of improvement information)

Then, when the operator MP is operating the construction machine 100 at an actual work site, the controller 50 inputs a psychological state improvement command to the control target so that improvement information of the determined teaching content is transmitted to the operator MP.

### [Specific Example 2]

Specific Example 2 is different from Specific Example 1 in that the operator MP is identified and information on the identified operator MP is used.

### (Identification of operator of simulator)

At the time of operation of the simulator 200 by the operator MP, the controller 50 determines and identifies the operator MP operating the simulator 200. The controller 50 stores information related to the identified operator MP. The identified operator MP is hereinafter referred to as operator MP1.

### (Determination of content of improvement information)

At the time of operation of the simulator 200 by the operator MP1, the controller 50 determines optimal teaching content (content of improvement information) for the operator MP1 in the same manner as in Specific Example 1.

### (Identification of operator of construction machine)

The operator MP who operates the construction machine 100 at an actual work site is determined and identified. The controller 50 stores information related to the identified operator MP.

### (Transmission of improvement information)

In a case where the identified operator MP (operator MP operating the construction machine 100) is the operator MP1 identified at the time of operation of the simulator 200, the controller 50 inputs a psychological state improvement command to the control target so that improvement information of the determined teaching content is transmitted to the operator MP1 when the operator MP1 is actually operating the construction machine 100. On the other hand, in a case where the identified operator MP is not the operator MP1 identified at the time of operation of the simulator 200, the controller 50 does not perform control for transmitting improvement information when the operator MP is operating the actual construction machine 100. However, in a case where general-purpose improvement information that is highly versatile improvement information is preset for various operators in the controller 50, the controller 50 may input a psychological state improvement command to the control target such that general-purpose improvement information is transmitted to the operator MP when the operator MP is operating the actual construction machine 100 even in a case where the identified operator MP is not the operator MP1 identified at the time of operation of the simulator 200.

### [Specific Example 3]

Specific Example 3 is different from Specific Example 1 in that information related to work content is used.

### (Identification of work content in simulator)

At the time of operation of the simulator 200 by the operator MP, the controller 50 identifies work content (training content) performed by the operator MP. The controller 50 stores the identified work content.

### (Determination of content of improvement information)

At the time of operation of the simulator 200 by the operator MP, the controller 50 determines optimal teaching content (content of improvement information) for the operator MP in the same manner as in Specific Example 1. The controller 50 may store the identified work content and the optimal teaching content (content of improvement information) for the operator MP in association with each other.

### (Identification of actual work content by construction machine)

At the time of operation of the construction machine 100 by the operator MP, the controller 50 identifies work content performed by the operator MP.

### (Transmission of improvement information)

In a case where work content (actual work content) identified at the time of operation of the construction machine 100 is the same as the work content (training content) identified at the time of operation of the simulator 200, the controller 50 inputs a psychological state improvement command to the control target so that improvement information of the teaching content associated with the work content is transmitted to the operator MP when the operator MP is actually operating the construction machine 100. On the other hand, in a case where the actual work content is different from the training content, the controller 50 does not perform control for transmitting improvement information when the operator MP is operating the actual construction machine 100.

### [Specific Example 4]

Specific Example 4 is different from Specific Examples 2 and 3 in that both information related to the operator MP and information related to work content are used.

### (Identification of operator of simulator)

At the time of operation of the simulator 200 by the operator MP, the controller 50 identifies the operator MP1 in the same manner as in Specific Example 2, and stores information related to the operator MP1.

### (Identification of work content in simulator)

At the time of operation of the simulator 200 by the operator MP1, the controller 50 identifies work content (training content) performed by the operator MP1. The controller 50 stores the identified work content and information related to the operator MP1 in association with each other.

### (Determination of content of improvement information)

At the time of operation of the simulator 200 by the operator MP1, the controller 50 determines optimal teaching content (content of improvement information) for the operator MP1 in the same manner as in Specific Example 1. The controller 50 may store the identified work content, information related to the operator MP1, and/or the optimum teaching content (content of improvement information) for the operator MP1 in association with each other.

### (Identification of operator of construction machine)

The operator MP who operates the construction machine 100 at an actual work site is determined and identified. The controller 50 stores information related to the identified operator MP.

### (Identification of actual work content by construction machine)

At the time of operation of the construction machine 100 by the operator MP, the controller 50 identifies work content performed by the operator MP. The controller 50 stores the identified work content and information related to the operator MP in association with each other.

### (Transmission of improvement information)

In a case where the identified operator MP is the operator MP1 identified at the time of operation of the simulator 200, and work content (actual work content) identified at the time of operation of the construction machine 100 is the same as the work content (training content) identified at the time of operation of the simulator 200, the controller 50 inputs a psychological state improvement command to the control target so that improvement information of determined teaching content is transmitted to the operator MP1 when the operator MP1 is actually operating the construction machine 100. On the other hand, in a case where the identified operator MP is not the operator MP1, the controller 50 does not perform control for transmitting improvement information when the operator MP is operating the actual construction machine 100. Further, in a case where the actual work content is different from the training content, the controller 50 does not perform control for transmitting improvement information when the operator MP is operating the actual construction machine 100. However, in a case where the general-purpose improvement information is preset in the controller 50, the controller 50 may input a psychological state improvement command to the control target such that general-purpose improvement information is transmitted to the operator MP when the operator MP is operating the actual construction machine 100 in a case where the actual work content is the same as the training content even in a case where the identified operator MP is not the operator MP1 identified at the time of operation of the simulator 200.

In Specific Examples 1 to 4 described above, the case where content (teaching content) of improvement information is determined at the time of operation of the simulator 200 by the operator MP is described; however, determination of content (teaching content) of improvement information may be performed at the time of operation of the construction machine 100 by the operator MP.

### [Specific example of acquisition of psychological state time series data]

Next, a specific example of acquisition of psychological state time series data will be described. In this modification example, the controller 50 may acquire psychological state time series data as follows, for example.

In a modification example of the third aspect described below, the controller 50 may perform control such that a plurality of pieces of change promotion information are transmitted at different timings, compare psychological state improvement effects by transmission of a plurality of pieces of the change promotion information, and determine one having a high improvement effect as improvement information. Since the controller 50 performs control such that a plurality of pieces of change promotion information are transmitted to the operator MP at different timings, it is possible to acquire an improvement effect of each of a plurality of pieces of the change promotion information. By this, the controller 50 can compare these improvement effects and determine change promotion information having a high improvement effect as improvement information.

FIG. 35 illustrates a time series change in an impatience quantitative value when the operator MP operates the simulator 200, that is, a time series change in an impatience quantitative value during training for operating a construction machine. In FIG. 35, training by the simulator 200 starts at time t0 and ends at time t7. The controller 50 sequentially acquires the psychological state information from the psychological state acquisition device 60 in a time zone (a time zone from the time t0 to the time t7) of the training by the simulator 200.

The controller 50 controls the transmitter so that a plurality of pieces of the change promotion information are transmitted at different timings in a time zone of the training. Then, the controller 50 compares an improvement effect of degree of impatience by transmission of a plurality of pieces of the change promotion information, and determines change promotion information having the highest improvement effect as improvement information.

In the specific example of FIG. 35, the controller 50 controls an operation of the transmitter so that the change promotion information is transmitted in each of a first time zone from the time t1 to the time t2, a second time zone from the time t3 to the time t4, and a third time zone from the time t5 to the time t6.

In the first time zone, an alarm sound (first change promotion information) is transmitted from the acoustic device 74. In the second time zone, a subtitle (second change promotion information) is displayed on the first display device 73. In the third time zone, voice (third change promotion information) is transmitted from the acoustic device 74. Text displayed in the second time zone is a subtitle (for example, a sentence such as "please operate calmly") created in advance for lowering degree of impatience of the operator MP. Voice transmitted in the third time zone is voice (for example, voice such as "please operate calmly") created in advance to lower degree of impatience of the operator MP.

Psychological state time series data illustrated in FIG. 35 acquired by the controller 50 includes data related to a change in degree of impatience (change in the psychological state) before and after transmission of each piece of change promotion information. By using psychological state time series data, the controller 50 calculates a first impatience change amount (Δy1) which is an amount of change in degree of impatience caused by the first change promotion information (alarm sound) transmitted in the first time zone, a second impatience change amount (Δy2) which is an amount of change in degree of impatience caused by the second change promotion information (subtitle) transmitted in the second time zone, and a third impatience change amount (Δy3) which is an amount of change in degree of impatience caused by the third change promotion information (voice) transmitted in the third time zone.

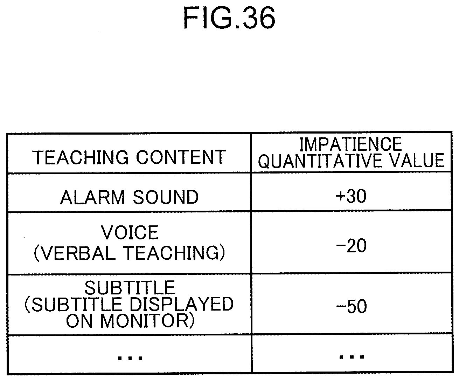

FIG. 36 is a diagram in which the first to third impatience change amounts are organized as a table. As shown in FIG. 36, the first impatience change amount (Δy1) is such a value that degree of impatience increases (positive value), the second impatience change amount (Δy2) is such a value that degree of impatience decreases (negative value), and the third impatience change amount (Δy3) is such a value that degree of impatience decreases (negative value). An absolute value of the second impatience change amount (Δy2) is larger than an absolute value of the third impatience change amount (Δy3) (|Δy2| > |Δy3|).

The controller 50 may determine, as the improvement information, change promotion information in which a decrease amount of degree of impatience is the largest among a plurality of acquired impatience change amounts.

Further, the controller 50 may determine, as the improvement information, change promotion information corresponding to an impatience change amount whose absolute value is closest to an absolute value of a difference between an impatience target value and an actual degree of impatience and which has a sign opposite to a sign of the difference among a plurality of acquired impatience change amounts. Specifically, this will be described as follows.

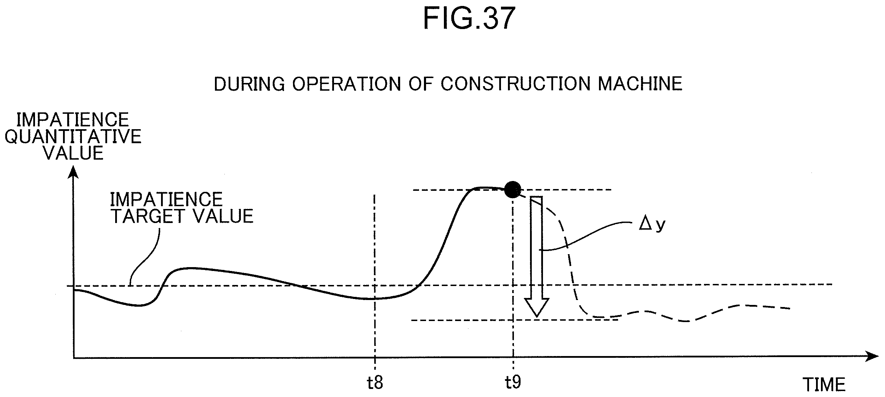

FIG. 37 illustrates an example of time series data of a change in degree of impatience (psychological state) when the operator MP is actually operating the construction machine 100 (actual machine). A target of degree of impatience (impatience target value) of the operator MP is set, and the impatience target value is indicated by a broken line in FIG. 37.

In the time series data shown in FIG. 37, degree of impatience of the operator MP starts to increase from a time point of time t8, and a difference between an impatience target value and an actual impatience quantitative value at a time point of time t9 (impatience quantitative value - impatience target value) is, for example, "40". Therefore, the controller 50 determines, as the improvement information, the second change promotion information corresponding to an impatience change amount ("-50") whose absolute value is closest to an absolute value of the difference and which has a sign opposite to a sign of the difference among the first to third impatience change amounts.

Next, controller 50 controls the notification device such that the determined improvement information (second change promotion information: subtitle) is transmitted. By this, a notification device as a control target can be appropriately controlled such that an actual impatience quantitative value approaches an impatience target value by changing degree of impatience of the operator MP (decreasing the degree by Δy in FIG. 37).

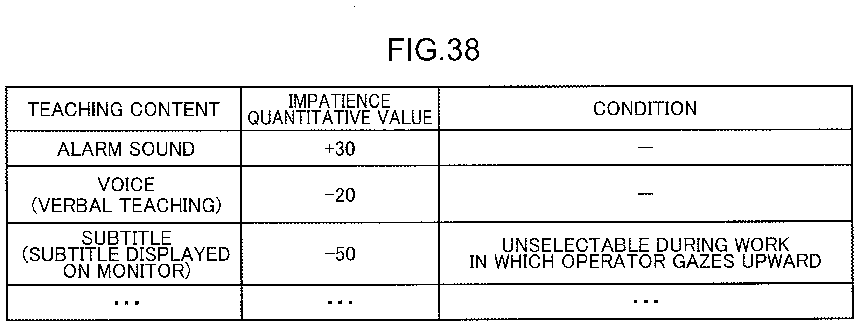

In the third aspect, an additional condition for determining content (teaching content) of the improvement information may be further set. In FIG. 38, the additional condition is, for example, a condition that the second change promotion information cannot be selected as the improvement information during work in which the operator MP is gazing upward. In this case, the controller 50 determines, as the improvement information, the third change promotion information that is next in suitability to the second change promotion information.

Note that, in the third aspect, the time series data acquisition unit may acquire psychological state time series data, which is data related to a time series change in the psychological state, based on the psychological state information, which is information correlated with a psychological state of the operator MP at the time of operating the construction machine 100, instead of at the time of operating the simulator 200. In this case, the second time series data acquisition unit (impatience measurement unit), the second promotion information transmission unit (teaching unit), the second improvement information determination unit, and the second operator determination unit in the machine side controller unit 50B perform the same control as the above-described control performed by the first time series data acquisition unit, the first promotion information transmission unit, the first improvement information determination unit, and the first operator determination unit in the simulator side controller unit 50A.

### [Fourth aspect]

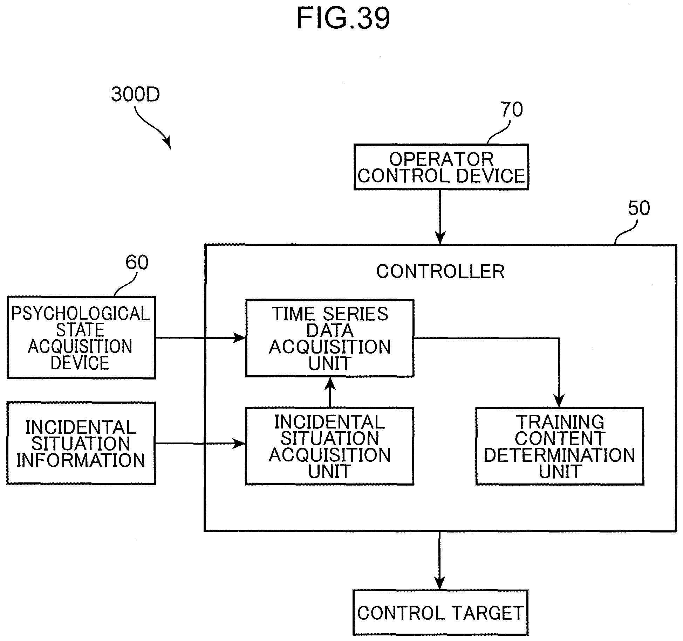

FIG. 39 is a block diagram illustrating the work assistance system 300D according to the fourth aspect.

The work assistance system 300D illustrated in FIG. 39 includes a controller 50. The controller 50 includes a time series data acquisition unit, an incidental situation acquisition unit, and a training content determination unit. Each of the time series data acquisition unit, the incidental situation acquisition unit, and the training content determination unit is implemented by the arithmetic processing device executing a control program stored in the memory in the controller 50. The time series data acquisition unit, the incidental situation acquisition unit, and the training content determination unit are an example of the command content determination unit in the work assistance system 300 illustrated in FIG. 1. The incidental situation acquisition unit is an example of the incidental situation management unit in the work assistance system 300CD illustrated in FIG. 6. The training content determination unit is an example of the control content determination unit in the work assistance system 300CD illustrated in FIG. 6.

The time series data acquisition unit acquires psychological state time series data that is data related to a time series change of the psychological state based on the psychological state information that is information correlated with a psychological state of the operator MP at at least one of the time of operating the construction machine 100 and the time of operating the simulator 200.

The incidental situation acquisition unit acquires incidental situation information (data related to an incidental situation) related to a change in the incidental situation. Specifically, for example, the incidental situation acquisition unit acquires incidental situation time series data that is data related to a time series change in the incidental situation. The incidental situation time series data is data related to a time series change in an incidental situation at at least one of the time of operation of the construction machine 100 and the time of operation of the simulator.

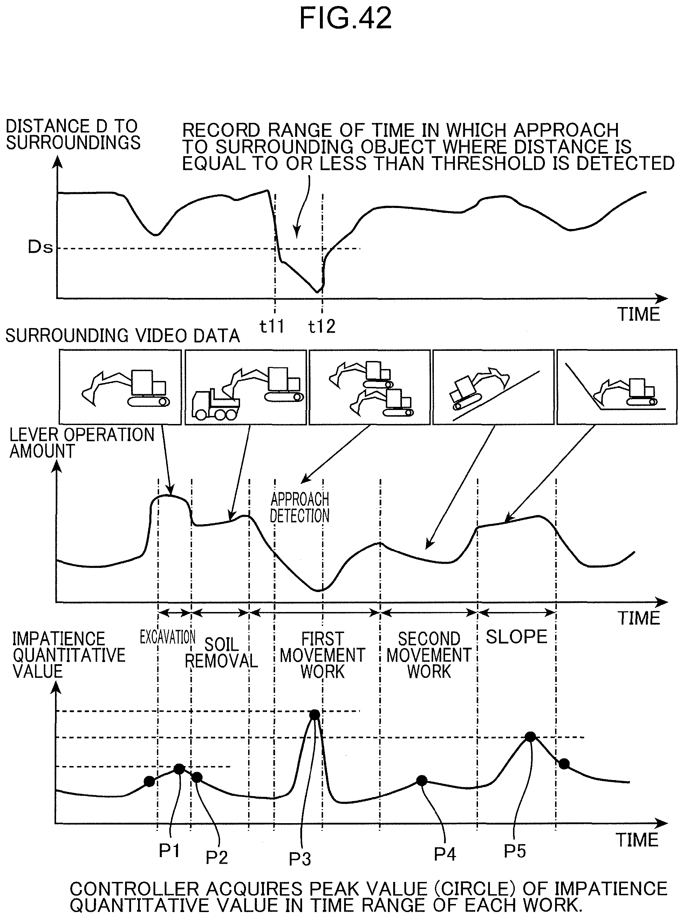

Information related to a change in the incidental situation (incidental situation information) may be information related to a change in a surrounding situation. The information related to a change in a surrounding situation may be, for example, information related to a change in a surrounding situation of the construction machine 100, information related to a change in a surrounding situation of the construction machine model 100a in a virtual space constructed by the simulator 200, or information related to a change in a surrounding situation of the operator MP. The incidental situation information may be information related to a change in work content by the construction machine 100. As a specific example of the incidental situation information, for example, information related to a distance D between the construction machine model 100a to be described later and a surrounding object model can be exemplified. In this case, data of a time series change in the distance D illustrated in FIG. 42 to be described later is an example of incidental situation time series data (an example of a change in an incidental situation). Further, the incidental situation information may be information related to a distance between the construction machine 100 and a surrounding object at an actual work site. In this case, the controller 50 (incidental situation acquisition unit) may acquire information related to the distance based on a detection result by a sensor capable of measuring a distance between the construction machine 100 and a surrounding object. The controller 50 (incidental situation acquisition unit) may acquire information related to the distance by analyzing an image of a work site acquired by a camera.

The training content determination unit determines training content for training the operator MP by using the psychological state time series data and the incidental situation time series data.

In the work assistance system 300D according to the fourth aspect, the psychological state information may be information correlated with a psychological state of the operator MP at the time of operating the construction machine 100, or may be information correlated with a psychological state of the operator MP at the time of operating the simulator 200.

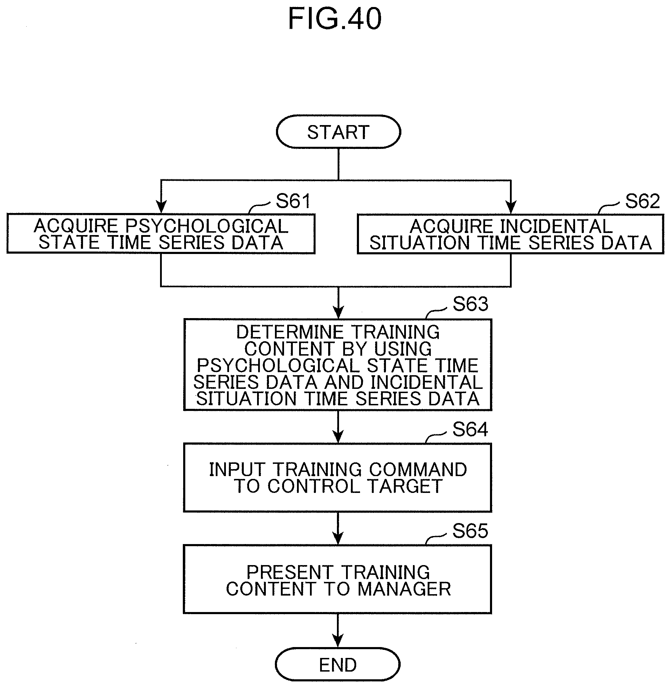

FIG. 40 is a flowchart illustrating an example of arithmetic processing performed by the controller 50 of the work assistance system 300D according to the fourth aspect.

The controller 50 sequentially stores the psychological state information related to a psychological state of the operator MP input from the psychological state acquisition device 60 to acquire the psychological state time series data that is data related to a time series change of the psychological state (Step S61).

In parallel with acquisition of the psychological state time series data, the controller 50 acquires incidental situation time series data that is data related to a time series change of the incidental situation (Step S62).

The controller 50 determines training content for training the operator MP by using the psychological state time series data and the incidental situation time series data (Step S63).

The controller 50 inputs a training command, which is a command corresponding to the determined training content, to the control target (Step S64).

The control target performs an operation according to the training command input from the controller 50. By this, a psychological state of the operator MP in work using the construction machine 100 may be improved.

The controller 50 presents the determined training content to a work manager (Step S65).

The controller 50 repeats the processing of Steps S61 to S65 during activation of the system.

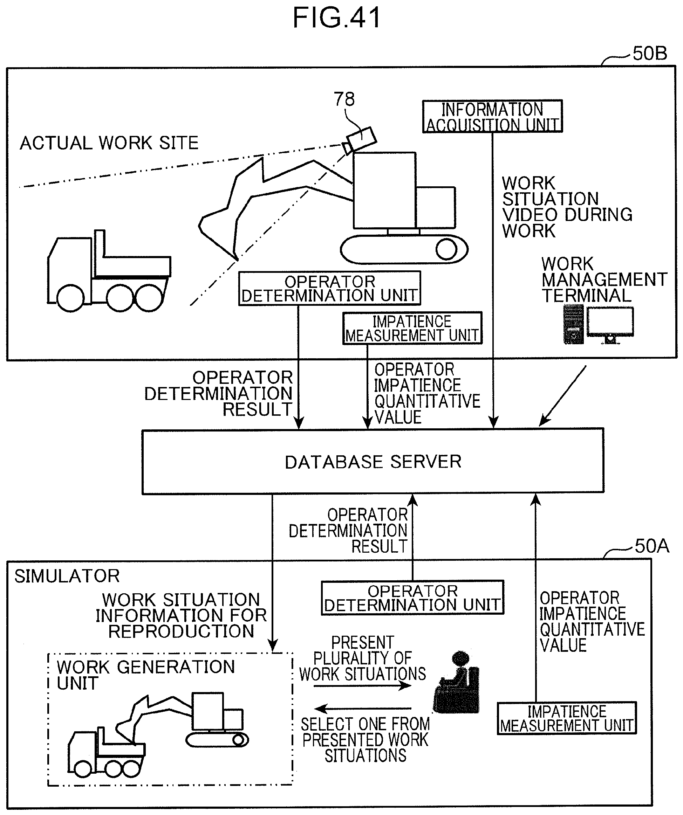

Next, a modification example of the fourth aspect will be described. FIG. 41 is a diagram illustrating the work assistance system 300D according to a modification example of the fourth aspect. In the work assistance system 300D according to the modification example illustrated in FIG. 41, the controller 50 includes the simulator side controller unit 50A and the machine side controller unit 50B. The simulator side controller unit 50A may be mounted on the simulator 200 (see FIG. 2) or may be arranged in a place different from the simulator 200. The machine side controller unit 50B may be mounted on the construction machine 100. In a case where the construction machine 100 is remotely controlled, the machine side controller unit 50B may be arranged at a remote place away from the construction machine 100.

The simulator side controller unit 50A may include a first time series data acquisition unit (impatience measurement unit), a training contents determination unit (work generation unit), a first incidental situation acquisition unit, and a first operator determination unit. The machine side controller unit 50B may include a second time series data acquisition unit (impatience measurement unit), a second incidental situation acquisition unit, and a second operator determination unit. The simulator side controller unit 50A may further include a first information acquisition unit (work content acquisition unit). The machine side controller unit 50B may further include a second information acquisition unit (work content acquisition unit).

The first time series data acquisition unit may acquire psychological state time series data that is data related to a time series change of the psychological state based on the psychological state information that is information correlated with a psychological state of the operator MP at the time of operating the simulator 200. Further, in parallel with acquisition of psychological state time series data by the first time series data acquisition unit, the first incidental situation acquisition unit may acquire incidental situation time series data that is data related to a time series change in an incidental situation at the time of operation of the simulator 200.

The second time series data acquisition unit may acquire psychological state time series data that is data related to a time series change of the psychological state based on the psychological state information that is information correlated with a psychological state of the operator MP at the time of operating the construction machine 100. Further, in parallel with acquisition of the psychological state time series data by the second time series data acquisition unit, the second incidental situation acquisition unit may acquire incidental situation time series data that is data related to a time series change in an incidental situation at the time of operation of the construction machine 100. This incidental situation time series data may include, for example, a detection result input from an incidental situation detector 78 to the controller 50. The incidental situation detector 78 may be an image detection device such as a camera that acquires an image of an actual work site where the construction machine 100 is arranged.

The training content determination unit (work generation unit) determines training content for training the operator MP by using the psychological state time series data and the incidental situation time series data.

The first operator determination unit determines and identifies the operator MP who operates the simulator 200. The second operator determination unit determines and identifies the operator MP who operates the construction machine 100. Each of the first operator determination unit and the second operator determination unit may determine and identify the operator MP, for example, based on identification information of the operator MP input to a predetermined input device. Each of the first operator determination unit and the second operator determination unit may determine and identify the operator MP, for example, based on image information for authenticating the operator MP.

Each of the first information acquisition unit and the second information acquisition unit may acquire information related to work content. The first information acquisition unit and the second information acquisition unit in the fourth aspect are similar to the first information acquisition unit and the second information acquisition unit described in the third aspect, and thus detailed description of these is omitted.

In the fourth aspect, at the time of operation of the construction machine 100 by the operator MP, work that the operator MP is not good at may be identified and stored in a database. Specifically, for example, the second information acquisition unit sequentially determines work content of the construction machine 100, and the second time series data acquisition unit acquires psychological state time series data of the operator MP. Then, in a case where a difference between an impatience target value and an actual impatience quantitative value is larger than a predetermined reference value in psychological state time series data of the operator MP, work content performed by the construction machine 100 operated by the operator MP may be identified as work that the operator MP is not good at. Here, information related to a work environment when work that the operator MP is not good at is identified may be stored in a database in association with the work that the operator MP is not good at. The work environment may include, for example, information related to a position of the construction machine 100 and/or a posture of the construction machine 100, and may include information related to size and/or arrangement of an object existing around the construction machine 100 at a work site. The work environment may be acquired by a camera mounted on the construction machine 100 and/or a camera installed at a work site.

Further, in the fourth aspect, at the time of operation of the virtual construction machine model 100a by the operator MP operating the simulator 200, work that the operator MP is not good at may be identified and stored in a database. Specifically, for example, the first information acquisition unit sequentially determines work content of the construction machine model 100a, and the first time series data acquisition unit acquires psychological state time series data of the operator MP. Then, in a case where a difference between an impatience target value and an actual impatience quantitative value is larger than a predetermined reference value in psychological state time series data of the operator MP, work content performed by the construction machine model 100a operated by the operator MP may be identified as work that the operator MP is not good at. Here, information related to a situation of the work site model 400a including an object model arranged around the construction machine model 100a when work that the operator MP is not good at is identified may be stored in a database in association with the work that the operator MP is not good at.

When the simulator 200 is activated, the simulator 200 trains the operator MP, for example, by causing the operator MP to perform one or more work contents by using the virtual work site model 400a and the virtual construction machine model 100a. The one or more work contents may be preset in the simulator 200. Further, the one or more work contents may be selected from a plurality of preset options based on input by a work-related person such as the operator MP. Further, in a case where general or statistical data (general data) such as data for identifying work content that a general operator is not good at and data for identifying work content by which a general operator is likely to be impatient is stored in a database, the one or more work contents may be selected by the controller 50 based on the general data. Further, in a case where past work history data of the specific operator MP, such as data for identifying work content that the specific operator MP is not good at and data for identifying work content by which the specific operator MP is likely to be impatient is stored in a database, the one or more work contents may be selected by the controller 50 based on the past work history data. The database may be a memory of the simulator 200, a memory of the management device 500, or a memory of another device. The past work history data of the operator MP may be work history data at the time of operation of the simulator 200 by the operator MP, or may be work history data at the time of operation of the construction machine 100 by the operator MP. The past work history data may be psychological state time series data.

In the simulator 200, the virtual work site model 400a and the virtual construction machine model 100a stored in a database as training contents according to work content are reproduced in the simulator 200. For example, information such as a posture and/or state of the construction machine model 100a and size and/or arrangement of an object model arranged around the construction machine model 100a in the work site model 400a is changed according to content stored in a database and reproduced in the simulator 200. For example, the work site model 400a may be reproduced according to a work site stored in a database at the time of operation of the construction machine 100, and in this case, a posture of the construction machine model 100a may be adjusted and arranged in the work site model 400a based on a position and/or posture of the construction machine 100 stored in the database, and an object model may be arranged in the work site model 400a based on size and/or arrangement of an object existing around the construction machine 100 stored in the database. Further, arrangement of the work site model 400a, the construction machine model 100a, and an object model may be reproduced in the simulator 200 based on the work site model 400a including the construction machine model 100a and an object model stored in a database at the time of operation of the simulator 200. During training by the simulator 200, the distance D between the construction machine model 100a and a surrounding object model changes in various ways according to an operation by the operator MP received by the operator input device 72 of the operator control device 70. The controller 50 (the first incidental situation acquisition unit and/or the second incidental situation acquisition unit) sequentially acquires information related to the distance D at the time of operation of a simulator, that is, during training by the simulator 200.

The uppermost graph of FIG. 42 is a diagram illustrating an example of data of a time series change in the distance D between the construction machine model 100a and a surrounding object model at the time of operation of a simulator, that is, during training by the simulator 200. The controller 50 records an approach time zone that is a time zone (time range) in which the distance D is equal to or less than a preset reference value Ds during training by the simulator 200. In the specific example of FIG. 42, the approach time zone is a time zone from time t11 to time t12.

A graph at the center of FIG. 42 is a diagram illustrating time series data of an operation (for example, lever operation) performed by the operator MP on the operator input device 72 of the operator control device 70 during training by the simulator 200. The graph at the center of FIG. 42 indicates that a plurality of tasks of work are performed in order of excavation work, soil removal work, first movement work (flat land travel work), second movement work (slope travel work), and slope leveling work.

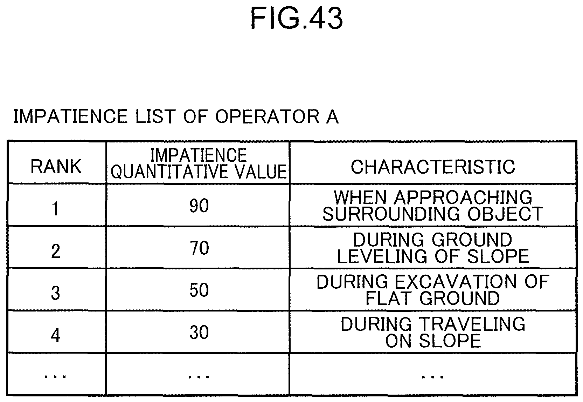

The lowermost graph in FIG. 42 illustrates a time series change in degree of impatience (psychological state) of the operator MP during training by the simulator 200. By using the psychological state time series data, the controller 50 identifies and stores a maximum value of an impatience quantitative value in a time zone in which each of a plurality of the tasks of work is performed. In the lowermost graph of FIG. 42, a maximum value P1 of an impatience quantitative value in a time zone of the excavation work, a maximum value P2 of an impatience quantitative value in a time zone of the soil removal work, a maximum value P3 of an impatience quantitative value in a time zone of the first movement work, a maximum value P4 of an impatience quantitative value in a time zone of the second movement work, and a maximum value P5 of an impatience quantitative value in a time zone of the slope leveling work are illustrated. FIG. 43 is a diagram in which some of top values among a plurality of identified maximum values are organized as a table.

FIG. 42 illustrates that an impatience quantitative value becomes the highest in a time zone of the first movement work (flat land travel work) performed in a time zone corresponding to the approach time zone (from the time t11 to the time t12) in which the distance D is less than or equal to the reference value Ds. That is, the operator MP tends to have high degree of impatience in the flat land travel work.

The controller 50 determines training content for training the operator MP as the flat land travel work based on the data illustrated in FIG. 42 including the psychological state time series data and the incidental situation time series data.

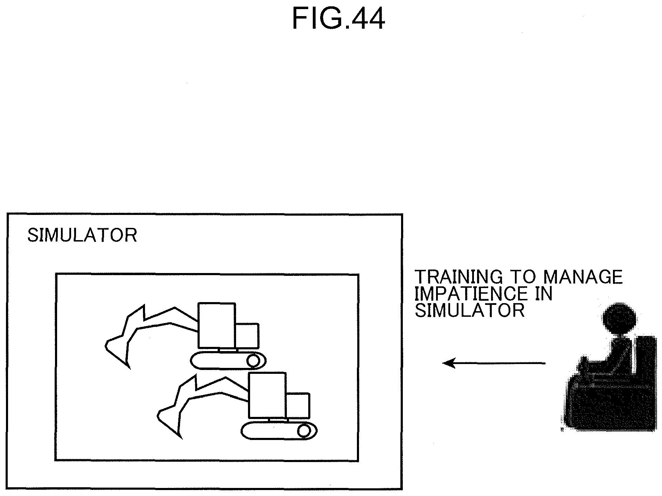

Then, as illustrated in FIG. 44, the controller 50 reproduces training content suitable for the operator MP, that is, the flat land travel work in the simulator 200. By this, the operator MP can become accustomed to work (the flat land travel work) in which degree of impatience is likely to increase, and increase in degree of impatience in the work is suppressed.

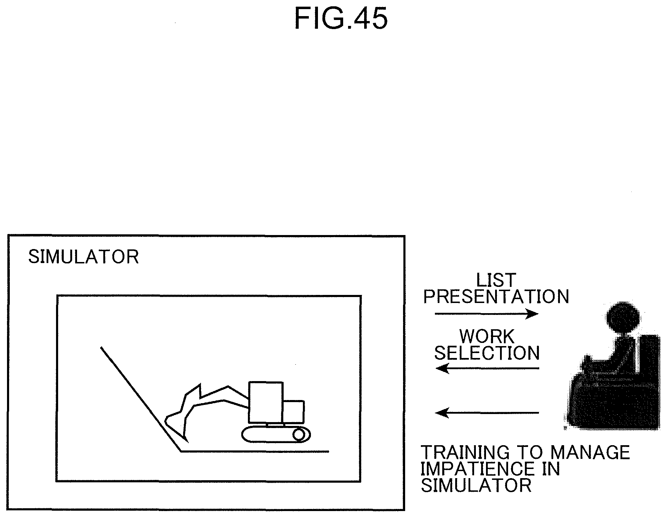

Further, training content reproduced in the simulator 200 may be selectable by a work-related person such as the operator MP. FIG. 45 exemplifies a case where the operator MP selects the slope leveling work as training content.

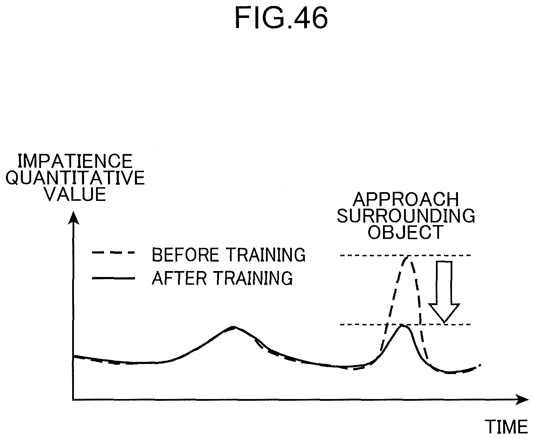

FIG. 46 is a diagram illustrating how close an actual impatience quantitative value of the operator MP becomes closer to an impatience target value as a result of training in the simulator 200. In FIG. 46, a broken line indicates data before training, and a solid line indicates data after training. The data after training may be stored in the database. In a case where the data after training is included in a preset allowable range, the controller 50 may perform control to permit work on an actual machine of the operator MP.

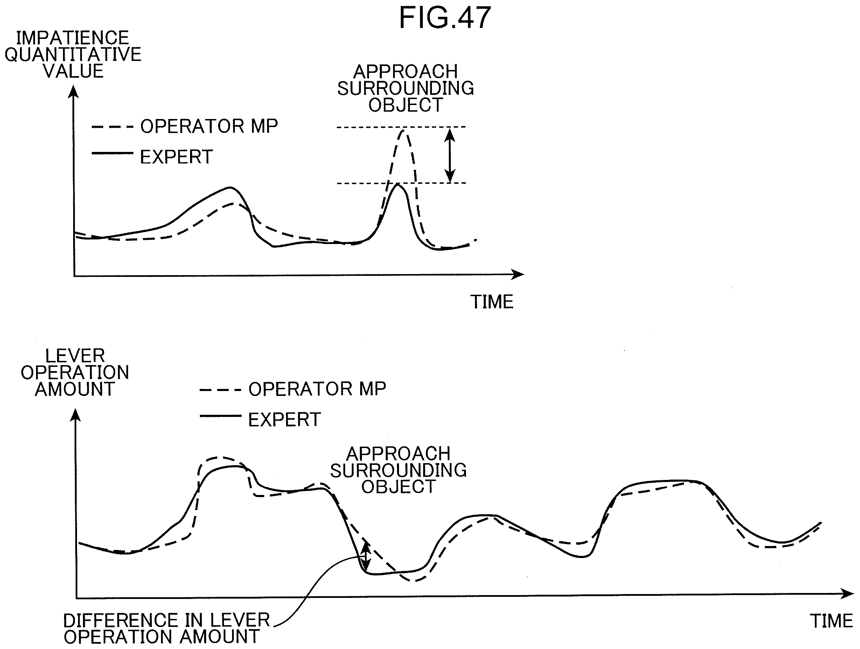

FIG. 47 is a graph comparing time series data of an impatience quantitative value of the operator MP with time series data of an impatience quantitative value of an operator MP' (expert) other than the operator MP, and comparing a lever operation of the operator MP with a lever operation of the operator MP'. In the work assistance system 300D according to the modification example of the fourth aspect, the comparison data as illustrated in FIG. 47 may be configured to be viewable by the operator MP. By this, the operator MP can learn relevance between a change in a mental state of an expert and a difference in a lever operation on the operator input device 72.

Note that in the work assistance system 300D according to the fourth aspect, in a case where time series data related to the operator MP is not sufficiently prepared in the database, the controller 50 may statistically process time series data of the other operators MP', and use the processed time series data for the operator MP. This makes it possible to effectively train the operator MP by using a characteristic of the other operators MP' (for example, a characteristic that performance is likely to be lowered in a specific task, a characteristic that degree of impatience increases in another specific task, or the like). Therefore, even in a case where the operator MP is a beginner with little work experience, for example, and there is little past time series data, it is possible to perform training (learning) related to impatience through simulation.

In the fourth aspect, the controller 50 may be configured to identify work content performed during training by the simulator 200 by using, for example, time series data of an operation by the operator MP as illustrated in the graph at the center of FIG. 42.

Next, more preferable work assistance using the work assistance system 300D according to the fourth aspect will be described with a specific example.

In the fourth aspect, the controller 50 preferably presents a situation for which the operator MP should be trained in a manner that the operator MP can easily recognize the situation.

In this case, at the time of operation of the simulator 200 by the operator MP, the controller 50 determines and identifies the operator MP operating the simulator 200. The controller 50 stores information related to the identified operator MP. Then, the controller 50 causes a display device (for example, the first display device 73) of the simulator 200 to display the identified situation for which the operator MP should be trained.

Specifically, for example, the controller 50 preferably presents, to the operator MP in the simulator 200, at least one of a low proficiency situation that is a situation that the operator MP is not good at and an overconfidence situation that is a situation that the operator MP is likely to be overconfident. In this case, the controller 50 more preferably presents, to the operator MP, a list of low proficiency situations and overconfidence situations. The low proficiency situation may be, for example, a situation in which an actual impatience quantitative value is larger than a reference value and a difference between these (impatience quantitative value - reference value) is equal to or more than a first allowable value at the time of operation of the simulator 200 by the operator MP. The overconfidence situation may be, for example, a situation in which an actual impatience quantitative value is smaller than a reference value and a difference between these (impatience quantitative value - reference value) is equal to or less than a second allowable value at the time of operation of the simulator 200 by the operator MP. In the fourth aspect, each of the low proficiency information and the overconfidence situation is an example of work content.

For example, the controller 50 may list at least one of the low proficiency situation and the overconfidence situation by using the work history data of the operator MP (for example, past psychological state time series data of the operator MP) accumulated in the database. Then, the controller 50 may cause a display device of the simulator 200 to display, for example, a list of one or more of the listed low proficiency situations and one or more of the listed overconfidence situations. The past work history data of the operator MP may be work history data at the time of operation of the simulator 200 by the operator MP, or may be work history data at the time of operation of the construction machine 100 by the operator MP.

Then, the controller 50 performs control to cause the operator MP to make a selection from among a plurality of situations (a plurality of work contents) including at least one of a low proficiency situation and an overconfidence situation displayed on the display device. Specifically, the controller 50 displays a plurality of situations as a plurality of options on the display device, and performs display prompting the operator MP to make a selection. Then, when the operator MP selects one of a plurality of options, the controller 50 controls an operation of the simulator 200 so that the selected situation (work content) is reproduced. By this, the operator MP can perform training for work related to his/her low proficiency situation or overconfidence situation. Then, when the training is completed, the controller 50 may display a training result on the display device. By this, the operator MP can grasp a result of the training, and can utilize the result in actual work using the construction machine 100.

Note that in a case where no past work history data of the operator MP exists, at least one of the low proficiency situation and the overconfidence situation may be listed by using past work history data of another operator.

### [Modification example]

Although the first to fourth aspects of the present disclosure are described above, the present disclosure is not limited to the first to fourth aspects, and includes, for example, a modification example described below.

### (A) Regarding controller

The controller may include a plurality of controller units. In this case, a plurality of the controller units include a first controller unit and a second controller unit. The first controller unit may be arranged at the same place as the second controller unit, or may be arranged at a place different from the second controller unit.

### (B) Regarding psychological state

In the above description of the work assistance systems 300A, 300B, 300C, and 300D according to the first to fourth aspects, the case where the psychological state is impatience (degree of impatience) of the operator MP at the time of operating the construction machine 100 or at the time of operating the simulator 200 is mainly exemplified; however, the psychological state may be a fatigue feeling (degree of fatigue feeling) of the operator MP at the time of operating the construction machine 100 or at the time of operating the simulator 200, or may be concentration (degree of concentration) of the operator MP at the time of operating the construction machine 100 or at the time of operating the simulator 200.

### (C) Regarding construction machine

In the above description of the embodiment of the first aspect, the case where the construction machine 100 (operation target) is a crawler excavator is exemplified, but the construction machine according to another embodiment of the first aspect may be a construction machine other than a crawler excavator. For example, in a case where the construction machine is a crane, content of work assistance is determined by using a psychological state quantitative value of an operator who performs crane work of operating the crane to lift and move a slung load on a hook of the crane and a target psychological state set for the crane work. For example, in a case where the construction machine is a bulldozer, content of work assistance is determined by using a psychological state quantitative value of an operator who performs ground leveling work by operating the bulldozer and using a blade (soil removal blade) of the bulldozer and a target psychological state set for the ground leveling work. For example, in a case where the construction machine is a road roller, content of work assistance is determined by using a psychological state quantitative value of an operator who performs compaction work of operating the road roller and compacting soil by using a roller of the road roller and a target psychological state set for the compaction work. For example, in a case where the construction machine is a forklift, content of work assistance is determined by using a psychological state quantitative value of an operator who performs cargo handling work of operating the forklift and transporting a load placed on a fork for cargo handling of the forklift and a target psychological state set for the cargo handling work.

In the above description of the embodiment of the second aspect, the case where the construction machine 100 (operation target) is a crawler excavator is exemplified, but the construction machine according to another embodiment of the second aspect may be a construction machine other than a crawler excavator. For example, in a case where the construction machine is a crane, content of work assistance is determined by using a psychological state quantitative value of an operator who performs crane work of operating the crane to lift and move a slung load on a hook of the crane and productivity of the crane work. For example, in a case where the construction machine is a bulldozer, content of work assistance is determined by using a psychological state quantitative value of an operator who performs ground leveling work of operating the bulldozer and using a blade (soil removal blade) of the bulldozer and productivity of the ground leveling work. For example, in a case where the construction machine is a road roller, content of work assistance is determined by using a psychological state quantitative value of an operator who performs compaction work of operating the road roller and compacting soil by using a roller of the road roller and productivity of the compaction work. For example, in a case where the construction machine is a forklift, content of work assistance is determined by using a psychological state quantitative value of an operator who performs cargo handling work of operating the forklift to transport a load placed on a fork for cargo handling of the forklift and productivity of the cargo handling work.

In the above description of the embodiment of the third aspect, the case where the construction machine 100 (operation target) is a crawler excavator is exemplified, but the construction machine according to another embodiment of the third aspect may be a construction machine other than a crawler excavator. For example, in a case where the construction machine is a crane, transmission of change promotion information and acquisition of a psychological state are performed for an operator who performs a crane work of operating at least one of a crane and a simulator of the crane to lift and move a slung load on a hook of the crane or a crane in the simulator, and content of improvement information is determined by using data related to a change in a psychological state before and after transmission of the change promotion information. For example, in a case where the construction machine is a bulldozer, transmission of change promotion information and acquisition of a psychological state are performed for an operator who performs ground leveling work by operating at least one of a bulldozer and a simulator of the bulldozer and using a blade (soil removal blade) of the bulldozer or a bulldozer in the simulator, and content of improvement information is determined by using data related to a change in a psychological state before and after transmission of the change promotion information. For example, in a case where the construction machine is a road roller, transmission of change promotion information and acquisition of a psychological state are performed for an operator who performs compaction work of operating at least one of a road roller and a simulator of the road roller and compacting soil by using a roller of the road roller or a road roller in the simulator, and content of improvement information is determined by using data related to a change in a psychological state before and after transmission of the change promotion information. For example, in a case where the construction machine is a forklift, transmission of change promotion information and acquisition of a psychological state are performed for an operator who performs cargo handling work of operating at least one of a forklift and a simulator of the forklift and transporting a load placed on a fork for cargo handling of the forklift or a forklift in the simulator, and content of improvement information is determined by using data related to a change in a psychological state before and after transmission of the change promotion information.

In the above description of the embodiment of the fourth aspect, the case where the construction machine 100 (operation target) is a crawler excavator is exemplified, but the construction machine according to another embodiment of the fourth aspect may be a construction machine other than a crawler excavator. For example, in a case where the construction machine is a crane, content of work assistance for improving a proficiency level related to operation of an operator is determined by using data related to a change in a psychological state of the operator who performs crane work of operating at least one of a crane and a simulator of the crane to lift and move a slung load on a hook of the crane or a crane in the simulator, and data related to an incidental situation. For example, in a case where the construction machine is a bulldozer, content of work assistance for improving a proficiency level related to an operation of an operator is determined by using data related to a change in a psychological state of an operator who performs ground leveling work by operating at least one of a bulldozer and a simulator of the bulldozer and using a blade (soil removal blade) of the bulldozer or a bulldozer in the simulator, and data related to an incidental situation. For example, in a case where the construction machine is a road roller, content of work assistance for improving a proficiency level related to an operation of an operator is determined by using data related to a change in a psychological state of the operator who performs compaction work of operating at least one of a road roller and a simulator of the road roller and compacting soil by using a roller of the road roller or a road roller in the simulator, and data related to an incidental situation. For example, in a case where the construction machine is a forklift, content of work assistance for improving a proficiency level related to an operation of an operator is determined by using data related to a change in a psychological state of the operator who performs cargo handling work of operating at least one of a forklift and a simulator of the forklift and transporting a load placed on a fork for cargo handling of the forklift or a forklift in the simulator, and data related to an incidental situation.

### (D) Regarding operation target

In the above description of the embodiment of the first aspect, the case where an operation target is the construction machine 100 is exemplified, but the operation target according to another embodiment of the first aspect may be an operation target other than a construction machine. For example, in a case where an operation target is an unmanned aircraft, content of work assistance is determined such that a psychological state quantitative value of an operator who performs work such as capturing an image or surveying of a farmland, a disaster site, or the like with an imaging device mounted on an unmanned aircraft moving in the air by operating the unmanned aircraft approaches a target psychological state. For example, in a case where an operation target is a vehicle such as an automobile or a truck, content of work assistance is determined such that a psychological state quantitative value of an operator who performs transportation work such as passenger transportation and cargo transportation by operating a vehicle approaches a target psychological state. For example, in a case where an operation target is an industrial robot, content of work assistance is determined such that a psychological state quantitative value of an operator who performs line work related to manufacturing and assembly by operating an industrial robot approaches a target psychological state. For example, in a case where an operation target is a traffic guidance robot arranged at a road construction site, content of work assistance is determined such that a psychological state quantitative value of an operator who performs traffic guidance work of monitoring a road construction site and guiding a traveling vehicle and a pedestrian by operating a traffic guidance robot approaches a target psychological state. For example, in a case where an operation target is a household robot, content of work assistance is determined such that a psychological state quantitative value of an operator who performs household work of housework and nursing care by operating a household robot approaches a target psychological state. For example, in a case where an operation target is a customer service robot, content of work assistance is determined such that a psychological state quantitative value of an operator who performs customer service work such as serving of a dish in a store and guiding a customer by operating a customer service robot approaches a target psychological state.

In the above description of the embodiment of the second aspect, the case where an operation target is the construction machine 100 is exemplified, but the operation target according to another embodiment of the second aspect may be an operation target other than a construction machine. For example, in a case where an operation target is an unmanned aircraft, content of work assistance is determined by using a psychological state quantitative value of an operator who performs work such as capturing an image or surveying of a farmland, a disaster site, or the like with an imaging device mounted on an unmanned aircraft moving in the air by operating the unmanned aircraft and productivity of the work. For example, in a case where an operation target is a vehicle such as an automobile or a truck, content of work assistance is determined by using a psychological state quantitative value of an operator who performs transportation work such as passenger transportation and cargo transportation by operating a vehicle and productivity of the transportation work. For example, in a case where an operation target is an industrial robot, content of work assistance is determined by using a psychological state quantitative value of an operator who performs line work related to manufacturing and assembly by operating an industrial robot and productivity of the line work. For example, in a case where an operation target is a traffic guidance robot arranged at a road construction site, content of work assistance is determined by using a psychological state quantitative value of an operator who performs traffic guidance work of monitoring a road construction site and guiding a traveling vehicle and a pedestrian by operating a traffic guidance robot and productivity of the traffic guidance work. For example, in a case where an operation target is a household robot, content of work assistance is determined by using a psychological state quantitative value of an operator who performs household work of housework and nursing care by operating a household robot and productivity of the household work. For example, in a case where an operation target is a customer service robot, content of work assistance is determined by using a psychological state quantitative value of an operator who performs customer service work such as serving of a dish in a store and guiding a customer by operating a customer service robot and productivity of the customer service work.

In the above description of the embodiment of the third aspect, the case where an operation target is at least one of the construction machine 100 and a simulator of the construction machine 100 is exemplified; however, an operation target according to another embodiment of the third aspect may be an operation target other than a construction machine and a simulator of the construction machine. For example, in a case where an operation target is at least one of an unmanned aircraft and a simulator of the unmanned aircraft, transmission of change promotion information and acquisition of a psychological state are performed for an operator who performs work such as capturing an image or surveying of a farmland, a disaster site, or the like with an imaging device mounted on the unmanned aircraft or an unmanned aircraft in the simulator moving in the air by operating at least one of the unmanned aircraft and the simulator, and content of improvement information is determined by using data related to a change in a psychological state before and after transmission of the change promotion information. For example, in a case where an operation target is at least one of a vehicle and a simulator of the vehicle, transmission of change promotion information and acquisition of a psychological state are performed for an operator who performs transportation work such as passenger transportation and cargo transportation by operating at least one of the vehicle and the vehicle, and content of improvement information is determined by using data related to a change in a psychological state before and after transmission of the change promotion information. For example, in a case where the operation target is at least one of an industrial robot and a simulator of the industrial robot, transmission of change promotion information and acquisition of a psychological state are performed for an operator who performs line work related to manufacturing and assembly by operating at least one of the industrial robot and the simulator, and content of improvement information is determined by using data related to a change in a psychological state before and after transmission of the change promotion information. For example, in a case where an operation target is at least one of a traffic guidance robot arranged at a road construction site and a simulator of the traffic guidance robot, transmission of change promotion information and acquisition of a psychological state are performed for an operator who performs traffic guidance work of monitoring a road construction site and guiding a traveling vehicle and a pedestrian by operating at least one of the traffic guidance robot and the simulator, and content of improvement information is determined by using data related to a change in a psychological state before and after transmission of the change promotion information. For example, in a case where the operation target is at least one of a household robot and a simulator of the household robot, transmission of change promotion information and acquisition of a psychological state are performed for an operator who performs household work of housework and nursing care by operating at least one of the household robot and the simulator, and content of improvement information is determined by using data related to a change in a psychological state before and after transmission of the change promotion information. For example, in a case where an operation target is at least one of a customer service robot and a simulator of the customer service robot, transmission of change promotion information and acquisition of a psychological state are performed for an operator who performs customer service work such as serving of a dish in a store and guiding a customer by operating at least one of the customer service robot and the simulator, and content of improvement information is determined by using data related to a change in a psychological state before and after transmission of the change promotion information.

In the above description of the embodiment of the fourth aspect, the case where an operation target is the construction machine 100 is exemplified, but the operation target according to another embodiment of the fourth aspect may be an operation target other than a construction machine. For example, in a case where an operation target is at least one of an unmanned aircraft and a simulator of the unmanned aircraft, content of work assistance for improving a proficiency level related to an operation of an operator is determined by using data related to a change in a psychological state of the operator who performs work such as capturing an image or surveying of a farmland, a disaster site, or the like with an imaging device mounted on the unmanned aircraft or an unmanned aircraft in the simulator moving in the air by operating at least one of the unmanned aircraft and the simulator, and data related to an incidental situation. For example, in a case where an operation target is at least one of a vehicle and a simulator of the vehicle, content of work assistance for improving a proficiency level related to an operation of an operator is determined by using data related to a change in a psychological state of an operator who performs transportation work such as passenger transportation and cargo transportation by operating at least one of the vehicle and the simulator, and data related to an incidental situation. For example, in a case where an operation target is at least one of an industrial robot and a simulator of the industrial robot, content of work assistance for improving a proficiency level related to an operation of an operator is determined by using data related to a change in a psychological state of an operator who performs line work related to manufacturing and assembly by operating at least one of the industrial robot and the simulator, and data related to an incidental situation. For example, in a case where an operation target is at least one of a traffic guidance robot arranged at a road construction site and a simulator of the traffic guidance robot, content of work assistance for improving a proficiency level related to an operation of an operator is determined by using data related to a change in a psychological state of an operator who performs traffic guidance work of monitoring a road construction site and guiding a traveling vehicle and a pedestrian by operating at least one of the traffic guidance robot and the simulator, and data related to an incidental situation. For example, in a case where an operation target is at least one of a household robot and a simulator of the household robot, content of work assistance for improving a proficiency level related to an operation of an operator is determined by using data related to a change in a psychological state of an operator who performs household work of housework and nursing care by operating at least one of the household robot and the simulator, and data related to an incidental situation. For example, in a case where an operation target is at least one of a customer service robot and a simulator of the customer service robot, content of work assistance for improving a proficiency level related to an operation of an operator is determined by using data related to a change in a psychological state of an operator who performs customer service work such as serving of a dish in a store and guiding a customer by operating at least one of the customer service robot and the simulator, and data related to an incidental situation.

As described above, the present disclosure includes the following work assistance system and work assistance method.

### [Configuration common to first to fourth aspects]

The work assistance system 300 including a configuration common to the first to fourth aspects includes a controller 50, and the controller 50 uses psychological state information that is information correlated with a psychological state of the operator MP at at least one of the time of operating the construction machine 100 (operation target) and the time of operating the simulator 200 of the construction machine 100 (operation target) to determine content of a psychological state improvement command that is a command for improving the psychological state of the operator MP at the time of operation (at the time of operating the construction machine 100 or at the time of operating the simulator 200), that is, content of work assistance.

The work assistance system 300 can improve a psychological state of the operator MP in work using the construction machine 100. Specifically, for example, the controller 50 inputs the psychological state improvement command to a control target, and the control target performs an operation according to the psychological state improvement command input from the controller 50. By this, a psychological state of the operator MP in work using the construction machine 100 may be improved.

The work assistance method including a configuration common to the first to fourth aspects includes determining, by the controller 50, by using psychological state information that is information correlated with a psychological state of the operator MP at at least one of the time of operating the construction machine 100 (operation target) and the time of operating the simulator 200 of the construction machine 100 (operation target), content of a command for improving the psychological state of the operator MP at the time of operation (at the time of operating the construction machine 100 or at the time of operating the simulator 200), that is, content of work assistance.

The work assistance method including a configuration common to the first to fourth aspects can improve a psychological state of the operator MP in work using the construction machine 100. Specifically, for example, the controller 50 inputs the psychological state improvement command to a control target, and the control target performs an operation according to the psychological state improvement command input from the controller 50. By this, a psychological state of the operator MP in work using the construction machine 100 may be improved.

### [Configuration common to first and second aspects]

The work assistance system 300AB including a configuration common to the first aspect and the second aspect includes a controller 50, and the controller 50 calculates a psychological state quantitative value obtained by quantifying a psychological state of the operator MP at the time of operating the construction machine 100 (operation target) based on information correlated with the psychological state, and determines content of work assistance for improving the psychological state of the operator MP at the time of operating the construction machine 100 by using the psychological state quantitative value.

In the work assistance system 300AB, the controller 50 can quantitatively determine content of work assistance suitable for improving a psychological state of the operator MP in work using the construction machine 100 by using the psychological state quantitative value, so that a psychological state of the operator MP can be effectively improved.

The work assistance method including a configuration common to the first and second aspects includes calculating, by the controller 50, a psychological state quantitative value obtained by quantifying a psychological state of the operator MP at the time of operating the construction machine 100 (operation target) based on information correlated with the psychological state, and determining, by the controller 50 and by using the psychological state quantitative value, content of work assistance for improving the psychological state of the operator MP at the time of operating the construction machine 100.

In the work assistance method including a configuration common to the first aspect and the second aspect, the controller 50 can quantitatively determine content of work assistance suitable for improving a psychological state of the operator MP in work using the construction machine 100 by using the psychological state quantitative value, so that a psychological state of the operator MP can be effectively improved.

### [Configuration common to third and fourth aspects]

The work assistance system 300CD including a configuration common to the third aspect and the fourth aspect includes a controller 50, and the controller 50 acquires psychological state time series data, which is data related to a time series change of a psychological state of the operator MP at at least one of the time of operating the construction machine 100 (operation target) and the time of operating the simulator 200 of the construction machine 100 (operation target) based on information correlated with the psychological state, and determines content of improvement control, which is control as work assistance for improving the psychological state of the operator MP at the time of operation (at the time of operating the construction machine 100 or at the time of operating the simulator 200), by using the psychological state time series data and a change in an incidental situation at at least one of the time of operation of the construction machine 100 and the time of operation of the simulator 200.

In the work assistance system 300CD, since the controller 50 can determine what influence a change in an incidental situation at the time of operation has on a psychological state, it is possible to determine content of improvement control suitable for improving the psychological state, and thus, it is possible to effectively improve a psychological state of the operator MP.

The work assistance method including a configuration common to the third aspect and the fourth aspect includes acquiring, by the controller 50, psychological state time series data, which is data related to a time series change of a psychological state of the operator MP at at least one of the time of operating the construction machine 100 (operation target) and the time of operating the simulator 200 of the construction machine 100 (operation target) based on information correlated with the psychological state, and determining, by the controller 50, content of improvement control, which is control as work assistance for improving the psychological state of the operator MP at the time of operation (at the time of operating the construction machine 100 or at the time of operating the simulator 200), by using the psychological state time series data and a change in an incidental situation at at least one of the time of operation of the construction machine 100 and the time of operation of the simulator 200.

In the work assistance method including a configuration common to the third aspect and the fourth aspect, since the controller 50 can determine what influence a change in an incidental situation at the time of operation has on a psychological state, it is possible to determine content of improvement control suitable for improving the psychological state, and thus, it is possible to effectively improve a psychological state of the operator MP.

### [First aspect]

The work assistance system 300A according to the first aspect includes a controller 50, and the controller 50 calculates a psychological state quantitative value obtained by quantifying a psychological state of the operator MP at the time of operating the construction machine 100 (operation target) based on information correlated with the psychological state, sets a target psychological state which is a target of the psychological state at the time of operation of the construction machine 100, and determines content of work assistance by using the psychological state quantitative value and the target psychological state.

In the work assistance system 300A, the controller 50 can quantitatively determine content of work assistance suitable for improving a psychological state of the operator MP in work using the construction machine 100 by using a target psychological state and a psychological state quantitative value and quantitatively comparing these, so that a psychological state of the operator MP can be effectively improved.

In the first aspect, the controller 50 preferably presents information related to the work assistance to a work-related person. In this configuration, a work-related person such as a work manager can recognize content of work assistance required to improve a psychological state of the operator MP. Therefore, a work-related person such as a work manager can take appropriate measures to improve a psychological state of the operator MP.

In the first aspect, the controller 50 preferably determines content of the work assistance by using a difference between the target psychological state and the psychological state quantitative value. In this configuration, for example, the controller 50 can input an appropriate command to a control target so that the difference approaches zero, and by this, a psychological state of the operator MP can be more effectively improved.

In the first aspect, the controller 50 preferably determines content of the work assistance by using the psychological state quantitative value, the target psychological state, and productivity. In this configuration, it is possible to determine content of work assistance in consideration of both a psychological state and productivity.

In the first aspect, the controller 50 preferably determines content of the work assistance by using the psychological state quantitative value, the target psychological state, and a work skill of the operator MP. In this configuration, it is possible to determine content of work assistance in consideration of not only a psychological state but also a work skill of the operator MP.

In the first aspect, content of the work assistance is preferably to change a work condition of the operator MP in order to change a level of a work burden of the operator MP. In this configuration, a level of a work burden of an operator can be changed by work assistance for the operator MP. Specifically, in a case where there is a margin in a psychological state of the operator MP with respect to target impatience (for example, an impatience target value), that is, in a case where the operator MP is not being impatient, content of the work assistance is preferably to change a work condition of the operator MP so as to increase a work burden of the operator MP. On the other hand, in a case where there is no margin in a psychological state of the operator MP with respect to target impatience (for example, an impatience target value), that is, in a case where the operator MP is being impatient, content of the work assistance is preferably to change a work condition of the operator MP so as to decrease a work burden of the operator MP.

The work assistance method according to the first aspect includes calculating, by the controller 50, a psychological state quantitative value obtained by quantifying a psychological state of the operator MP at the time of operating the construction machine 100 based on information correlated with the psychological state, setting, by the controller 50, a target psychological state that is a target of the psychological state at the time of operation of the construction machine 100, and determining, by the controller 50, content of work assistance by using the psychological state quantitative value and the target psychological state.

In the work assistance method according to the first aspect, the controller 50 can quantitatively determine content of work assistance suitable for improving a psychological state of the operator MP in work using the construction machine 100 (operation target) by using a target psychological state and a psychological state quantitative value and quantitatively comparing these, so that a psychological state of the operator MP can be effectively improved.

The construction machine 100 according to the first aspect may include the controller 50, and in this case, the controller 50 calculates a psychological state quantitative value obtained by quantifying a psychological state of the operator MP at the time of operating the construction machine 100 based on information correlated with the psychological state, sets a target psychological state which is a target of the psychological state at the time of operation of the construction machine 100, and determines content of work assistance by using the psychological state quantitative value and the target psychological state.

The management device 500 according to the first aspect may include the controller 50, and in this case, the controller 50 calculates a psychological state quantitative value obtained by quantifying a psychological state of the operator MP at the time of operating the construction machine 100 (operation target) based on information correlated with the psychological state, sets a target psychological state which is a target of the psychological state at the time of operation of the construction machine 100, and determines content of work assistance by using the psychological state quantitative value and the target psychological state.

### [Second aspect]

The work assistance system 300B according to the second aspect includes a controller 50, and the controller 50 calculates a psychological state quantitative value obtained by quantifying a psychological state of the operator MP at the time of operating the construction machine 100 (operation target) based on information correlated with the psychological state, calculates productivity of work at the time of operation of the construction machine 100, and determines content of work assistance by using the psychological state quantitative value and the productivity.

In the work assistance system 300B, the controller 50 can quantitatively determine content of work assistance suitable for improving a psychological state of the operator MP in work using the construction machine 100 by using productivity and a psychological state quantitative value and quantitatively considering these, so that a psychological state of the operator MP can be more effectively improved.

In the second aspect, the controller 50 preferably presents information related to the work assistance to a work-related person. In this configuration, a work-related person such as a work manager can recognize content of work assistance required to improve a psychological state of the operator MP. Therefore, a work-related person such as a work manager can take appropriate measures to improve a psychological state of the operator MP.

In the second aspect, the controller 50 preferably determines content of work assistance by using the psychological state quantitative value, the productivity, and a difficulty level of work. In this configuration, the controller 50 can more appropriately determine content of work assistance in consideration of a difficulty level of work.

In the second aspect, the controller 50 preferably determines content of work assistance by using the psychological state quantitative value, the productivity, and a work skill of the operator. In this configuration, the controller 50 can more appropriately determine content of work assistance also in consideration of a skill of an operator.

In the second aspect, the controller 50 may present content of the work assistance to a work-related person in a case where the psychological state quantitative value and the productivity satisfy a preset condition. In this configuration, the controller 50 can appropriately determine whether or not to present content of work assistance to a work-related person such as a work manager based on a preset condition.

In the second aspect, the information to be presented to the work-related person is preferably work assistance to be executed by the work-related person. Specifically, for example, a work-related person to whom the information is presented may be a work manager, and in this case, the work manager can provide appropriate work assistance to the operator MP based on the presented information.

The work assistance method according to the second aspect includes calculating, by the controller 50, a psychological state quantitative value obtained by quantifying a psychological state of the operator MP at the time of operating the construction machine 100 (operation target) based on information correlated with the psychological state, calculating, by the controller 50, productivity of work at the time of operation of the construction machine 100, and determining, by the controller 50, content of work assistance by using the psychological state quantitative value and the productivity.

In the work assistance method according to the second aspect, the controller 50 can quantitatively determine content of work assistance suitable for improving a psychological state of the operator MP in work using the construction machine 100 by using productivity and a psychological state quantitative value and quantitatively considering these, so that a psychological state of the operator MP can be more effectively improved.

The construction machine 100 according to the second aspect may include the controller 50, and in this case, the controller 50 calculates a psychological state quantitative value obtained by quantifying a psychological state of the operator MP at the time of operating the construction machine 100 based on information correlated with the psychological state, calculates productivity of work at the time of operation of the construction machine 100, and determines content of work assistance by using the psychological state quantitative value and the productivity.

The management device 500 according to the second aspect may include the controller 50, and in this case, the controller 50 calculates a psychological state quantitative value obtained by quantifying a psychological state of the operator MP at the time of operating the construction machine 100 (operation target) based on information correlated with the psychological state, calculates productivity of work at the time of operation of the construction machine 100, and determines content of work assistance by using the psychological state quantitative value and the productivity.

### [Third aspect]

The work assistance system 300C according to the third aspect includes a controller 50, and the controller 50 acquires psychological state information which is information correlated with a psychological state of the operator MP at at least one of the time of operating the construction machine 100 (operation target) and the time of operating the simulator 200 of the construction machine 100 (operation target), performs control such that change promotion information, which is information for promoting a change in the psychological state, is transmitted to the operator MP at at least one of the time of operating the construction machine 100 and the time of operating the simulator 200, and determines content (teaching content) of improvement information, which is information as work assistance for improving a psychological state at the time of operation, by using data related to a change in the psychological state before and after transmission of the change promotion information. In this case, an operator as a target for improving a psychological state may be the same as or different from the operator MP as a target for acquiring the psychological state information.

In the work assistance system 300C, the controller 50 performs control such that change promotion information for promoting a change in a psychological state is transmitted to an operator, so that it is possible to acquire data related to a change in a psychological state before and after transmission of change promotion information, and by using this data, it is possible to determine content (teaching content) of improvement information suitable for improving a psychological state of an operator. This makes it possible to more effectively improve a psychological state of an operator.

In the third aspect, the controller 50 may identify an operator at at least one of the time of operating the construction machine 100 and the time of operating the simulator 200, and present the improvement information to the operator when the identified operator operates the construction machine 100 or a construction machine 100 different from the above construction machine 100. Improvement information (teaching content) in this case tends to be suitable or optimal for the operator.

Further, in the third aspect, the controller 50 may present the improvement information to another operator different from the operator when the other operator operates the construction machine 100 or a construction machine 100 different from the above construction machine 100. In this case, the improvement information presented to the other operator is preferably improvement information (teaching content) that is likely to be generally or statistically suitable for various operators.

In the third aspect, the controller 50 may store work content at the time of acquiring the psychological state information in association with the improvement information, and present the improvement information to the operator or the other operator different from the operator in a case where work of the work content associated with the improvement information is performed when the operator or the other operator operates the construction machine 100 or a construction machine 100 different from the above construction machine 100. In this case, since work content when the psychological state information is acquired is the same as work content when the improvement information is presented to the operator, improvement information suitable for the work content can be presented to an operator.

In the third aspect, the change promotion information is first change promotion information, and the controller preferably performs control such that second change promotion information is transmitted at a timing different from a timing at which the first change promotion information is transmitted, compares an improvement effect of the psychological state by transmission of the first change promotion information with an improvement effect of the psychological state by transmission of the second change promotion information, and determines, as the improvement information, the information having a higher improvement effect. In this configuration, since the controller 50 performs control such that a plurality of pieces of change promotion information are transmitted to an operator at different timings, it is possible to acquire an improvement effect of each of a plurality of pieces of the change promotion information. By this, the controller 50 can compare these improvement effects and determine change promotion information having a high improvement effect as improvement information.

The work assistance method according to the third aspect includes acquiring, by the controller 50, psychological state information which is information correlated with a psychological state of the operator MP at at least one of the time of operating the construction machine 100 (operation target) and the time of operating the simulator 200 of the construction machine 100 (operation target), performing, by the controller 50, control such that change promotion information, which is information for promoting a change in the psychological state, is transmitted to the operator MP at at least one of the time of operating the construction machine 100 and the time of operating the simulator 200, and determining, by the controller 50, content (teaching content) of improvement information, which is information as work assistance for improving a psychological state at the time of operation, by using data related to a change in the psychological state before and after transmission of the change promotion information.

In the work assistance method according to the third aspect, the controller 50 performs control such that change promotion information for promoting a change in a psychological state is transmitted to an operator, so that it is possible to acquire data related to a change in a psychological state before and after transmission of change promotion information, and by using this data, it is possible to determine content (teaching content) of improvement information suitable for improving a psychological state of an operator. This makes it possible to more effectively improve a psychological state of an operator.

The construction machine 100 according to the third aspect may include the controller 50, and the controller 50 acquires psychological state information which is information correlated with a psychological state of the operator MP at at least one of the time of operating the construction machine 100 and the time of operating the simulator 200 of the construction machine 100, performs control such that change promotion information, which is information for promoting a change in the psychological state, is transmitted to the operator MP at at least one of the time of operating the construction machine 100 and the time of operating the simulator 200, and determines content (teaching content) of improvement information, which is information for improving a psychological state at the time of operation, by using data related to a change in the psychological state before and after transmission of the change promotion information.

The management device 500 according to the third aspect may include the controller 50, and the controller 50 acquires psychological state information which is information correlated with a psychological state of the operator MP at at least one of the time of operating the construction machine 100 (operation target) and the time of operating the simulator 200 of the construction machine 100 (operation target), performs control such that change promotion information, which is information for promoting a change in the psychological state, is transmitted to the operator MP at at least one of the time of operating the construction machine 100 and the time of operating the simulator 200, and determines content (teaching content) of improvement information, which is information for improving a psychological state at the time of operation, by using data related to a change in the psychological state before and after transmission of the change promotion information.

### [Fourth aspect]

The work assistance system 300D according to the fourth aspect includes a controller 50, and the controller 50 acquires data related to a psychological state of the operator MP at at least one of the time of operating the construction machine 100 (operation target) and the time of operating the simulator 200 of the construction machine 100 (operation target) based on information correlated with the psychological state, acquires data related to an incidental situation at at least one of the time of operating the construction machine 100 and the time of operating the simulator 200, and determines content of work assistance for improving a proficiency level related to an operation of the operator by using data related to the psychological state and data related to the incidental situation.

In the work assistance system 300D, the controller 50 can appropriately determine what kind of influence a change in an incidental situation at the time of operation has on a psychological state by using data related to a psychological state and data related to an incidental situation, so that it is possible to appropriately determine content of work assistance such as training content suitable for improving a psychological state of an operator. This makes it possible to effectively improve a psychological state of the operator MP.

In the fourth aspect, the data related to the psychological state may be psychological state time series data related to a time series change in the psychological state, the data related to the incidental situation may be incidental situation time series data related to a time series change in the incidental situation, and the controller may use the psychological state time series data and the incidental situation time series data to determine, as content of the work assistance, training content for training the operator.

In the fourth aspect, the controller may determine the training content by using work history data stored in a database.

In the fourth aspect, the training content preferably includes work content that the operator is not good at. In this case, since an operator can train for work content that the operator is not good at (a situation that the operator is not good at) with a simulator, it is possible to efficiently improve a proficiency level related to an operation of the work content that the operator is not good at (situation that the operator is not good at). Note that the training content may include at least one of work content that an operator does not have difficulty with and work content that an operator is good at. In this case, an operator can further improve a proficiency level related to operation with respect to work content that the operator does not have difficulty with (a situation that the operator does not have difficulty with) and work content that the operator is good at (a situation that the operator is good at).

In the fourth aspect, the controller may control an operation of the simulator so as to cause the operator to perform, as the training content, work content selected by the operator or a work-related person from among a plurality of work contents. In this configuration, an operator can perform training not only of training content selected by a controller but also of content desired by the operator himself/herself.

The fourth aspect may have a configuration in which the operator can view training data by another operator different from the operator. In this configuration, an operator can obtain a wider learning effect by viewing training data of another operator.

In the fourth aspect, the controller may control an operation of the simulator so as to cause the operator to sequentially perform a plurality of work contents, compare changes in the psychological state of the operator in a plurality of the work contents, and determine the training contents based on a comparison result. In this configuration, the controller 50 can compare changes in a psychological state in a plurality of work contents performed by an operator in a simulator, and determine, based on the comparison result, training content suitable for improving a psychological state of the operator. This makes it possible to more effectively improve a psychological state of the operator MP.

The work assistance method according to the fourth aspect includes acquiring, by the controller 50, data related to a psychological state of the operator MP at at least one of the time of operating the construction machine 100 (operation target) and the time of operating the simulator 200 of the construction machine 100 (operation target) based on information correlated with the psychological state, acquiring, by the controller 50, data related to an incidental situation at at least one of the time of operating the construction machine 100 and the time of operating the simulator 200, and determining, by the controller 50, content of work assistance for improving a proficiency level related to an operation of the operator by using data related to the psychological state and data related to the incidental situation.

In the work assistance method according to the fourth aspect, the controller 50 can appropriately determine what kind of influence a change in an incidental situation at the time of operation has on a psychological state by using data related to a psychological state and data related to an incidental situation, so that it is possible to appropriately determine content of work assistance such as training content suitable for improving a psychological state of an operator. This makes it possible to more effectively improve a psychological state of the operator MP.

The construction machine 100 according to the fourth aspect may include the controller 50, and in this case, the controller 50 acquires data related to a psychological state of the operator MP at at least one of the time of operating the construction machine 100 and the time of operating the simulator 200 of the construction machine 100 based on information correlated with the psychological state, acquires data related to an incidental situation at at least one of the time of operating the construction machine 100 and the time of operating the simulator 200, and determines content of work assistance for improving a proficiency level related to an operation of the operator by using data related to the psychological state and data related to the incidental situation.

The management device 500 according to the fourth aspect may include the controller 50, and in this case, the controller 50 acquires data related to a psychological state of the operator MP at at least one of the time of operating the construction machine 100 (operation target) and the time of operating the simulator 200 of the construction machine 100 (operation target) based on information correlated with the psychological state, acquires data related to an incidental situation at at least one of the time of operating the construction machine 100 and the time of operating the simulator 200, and determines content of work assistance for improving a proficiency level related to an operation of the operator by using data related to the psychological state and data related to the incidental situation.

## Claims

1. A work assistance system comprising a controller, wherein the controller uses psychological state information that is information correlated with a psychological state of an operator at at least one of a time of operating an operation target and a time of operating a simulator of the operation target to determine content of work assistance for improving the psychological state of the operator at a time of operation.

2. The work assistance system according to claim 1, wherein
the psychological state information is information correlated with a psychological state of an operator at a time of operating the operation target, and
the controller calculates a psychological state quantitative value obtained by quantifying the psychological state based on the psychological state information, and determines content of the work assistance by using the psychological state quantitative value.

3. The work assistance system according to claim 1, wherein the controller acquires data related to the psychological state based on the psychological state information, and determines content of improvement control, which is control as the work assistance, by using the data related to the psychological state and a change in an incidental situation at at least one of a time of operation of the operation target and a time of operation of the simulator.

4. The work assistance system according to claim 1, wherein
the psychological state information is information correlated with a psychological state of an operator at a time of operating the operation target, and
the controller calculates a psychological state quantitative value obtained by quantifying the psychological state based on the psychological state information, sets a target psychological state that is a target of the psychological state at a time of operation of the operation target, and determines content of the work assistance by using the psychological state quantitative value and the target psychological state.

5. The work assistance system according to claim 4, wherein the controller determines content of the work assistance by using a difference between the target psychological state and the psychological state quantitative value.

6. The work assistance system according to claim 4 or 5, wherein the controller presents information related to the work assistance to a work-related person.

7. The work assistance system according to any one of claims 4 to 6, wherein the controller determines content of the work assistance by using the psychological state quantitative value, the target psychological state, and productivity.

8. The work assistance system according to any one of claims 4 to 7, wherein the controller determines content of the work assistance by using the psychological state quantitative value, the target psychological state, and a work skill of the operator.

9. The work assistance system according to any one of claims 4 to 8, wherein content of the work assistance changes a work condition of the operator in order to change a level of a work burden of the operator.

10. The work assistance system according to claim 1, wherein
the psychological state information is information correlated with a psychological state of an operator at a time of operating the operation target, and
the controller calculates a psychological state quantitative value obtained by quantifying the psychological state based on the psychological state information, calculates productivity of work at a time of operation of the operation target, and determines content of the work assistance by using the psychological state quantitative value and the productivity.

11. The work assistance system according to claim 10, wherein the controller presents information related to the work assistance to a work-related person.

12. The work assistance system according to claim 10 or 11, wherein the controller determines content of the work assistance by using the psychological state quantitative value, the productivity, and a difficulty level of work.

13. The work assistance system according to any one of claims 10 to 12, wherein the controller determines content of the work assistance by using the psychological state quantitative value, the productivity, and a work skill of the operator.

14. The work assistance system according to any one of claims 10 to 13, wherein the controller presents content of the work assistance to a work-related person in a case where the psychological state quantitative value and the productivity satisfy a preset condition.

15. The work assistance system according to claim 11, wherein the information presented to the work-related person is work assistance to be executed by the work-related person.

16. The work assistance system according to claim 1, wherein the controller acquires the psychological state information, performs control such that change promotion information, which is information for promoting a change in the psychological state, is transmitted to the operator at at least one of a time of operating the operation target and a time of operating the simulator, and determines content of improvement information, which is information as the work assistance for improving a psychological state at a time of operation, by using data related to a change in the psychological state before and after transmission of the change promotion information.

17. The work assistance system according to claim 16, wherein the controller identifies the operator at at least one of a time of operating the operation target and a time of operating the simulator, and presents the improvement information to the operator when the identified operator operates the operation target or an operation target different from the operation target.

18. The work assistance system according to claim 16 or 17, wherein the controller presents the improvement information to another operator different from the operator when the other operator operates the operation target or an operation target different from the operation target.

19. The work assistance system according to any one of claims 16 to 18, wherein the controller stores, in association with the improvement information, work content when acquiring the psychological state information, and presents the improvement information to the operator or another operator different from the operator in a case where work of the work content associated with the improvement information is performed when the operator or the other operator operates the operation target or an operation target different from the operation target.

20. The work assistance system according to any one of claims 16 to 19, wherein
the change promotion information is first change promotion information, and
the controller performs control such that second change promotion information is transmitted at a timing different from a timing at which the first change promotion information is transmitted, compares an improvement effect of the psychological state by transmission of the first change promotion information with an improvement effect of the psychological state by transmission of the second change promotion information, and determines, as the improvement information, the information having a higher improvement effect.

21. The work assistance system according to claim 1, wherein the controller acquires data related to the psychological state based on the psychological state information, acquires data related to an incidental situation at at least one of a time of operation of the operation target and a time of operation of the simulator, and determines content of the work assistance for improving a proficiency level related to an operation of the operator by using the data related to the psychological state and the data related to the incidental situation.

22. The work assistance system according to claim 21, wherein
the data related to the psychological state is psychological state time series data related to a time series change in the psychological state,
the data related to the incidental situation is incidental situation time series data related to a time series change in the incidental situation, and
the controller uses the psychological state time series data and the incidental situation time series data to determine, as content of the work assistance, training content for training the operator.

23. The work assistance system according to claim 22, wherein the controller determines the training content by using work history data stored in a database.

24. The work assistance system according to claim 23, wherein the training content includes work content that the operator is not good at.

25. The work assistance system according to claim 23 or 24, wherein the controller controls an operation of the simulator so as to cause the operator to perform, as the training content, work contents selected from among a plurality of work contents by the operator or a work-related person.

26. The work assistance system according to any one of claims 21 to 25 configured to allow the operator to view training data by another operator different from the operator.

27. A work assistance method comprising determining, by a controller, content of work assistance for improving a psychological state of an operator at a time of operation by using psychological state information that is information correlated with the psychological state of the operator at at least one of a time of operating an operation target and a time of operating a simulator of the operation target.
